Europäisches Patentamt

(19) European Patent Office

Office européen des brevets

(11) Publication number : **0 460 974 A2**

# (12) EUROPEAN PATENT APPLICATION

(21) Application number : 91305181.9

(22) Date of filing : 10.06.91

(51) Int. Cl.⁵ : **B23K 11/24**

(30) Priority : 08.06.90 JP 150585/90
08.06.90 JP 150586/90
08.06.90 JP 150587/90
08.06.90 JP 150589/90
19.09.90 JP 253179/90
19.09.90 JP 253180/90

(43) Date of publication of application :
11.12.91 Bulletin 91/50

(84) Designated Contracting States :
DE FR GB IT NL

(71) Applicant : Sato, Ryoda
8-25, Ohamacho 1-chome
Amagasaki-shi, Hyogo-ken (JP)

(72) Inventor : Sato, Ryoda
8-25, Ohamacho 1-chome
Amagasaki-shi, Hyogo-ken (JP)

(74) Representative : Carpmael, John William
Maurice et al
CARPMAELS & RANSFORD 43 Bloomsbury
Square
London, WC1A 2RA (GB)

(54) **Power supply unit and welding equipment.**

(57) A power supply unit comprises three input terminals connected to a three-phase A.C. power supply, a phase control circuit controlling the firing of the three-phase A.C. for each phase, and a transformer comprising a single-phase iron core which is winded by first to third primary coils at the primary side and by a single-phase secondary coil at a secondary side and in which the first to third primary coils are connected to the three-phase A.C. power supply, and it outputs a single-phase A.C. having the frequency three times as that of the input current. Therefore the problem of unbalance between three phases is solved and a small-sized and lightweight power supply unit can be obtained. In addition, use of the power supply unit in a welding equipment allows to miniaturize the high efficiency welding equipment.

EP 0 460 974 A2

## FIELD OF THE INVENTION

The present invention relates to a power supply unit converting a three-phase alternate current (hereinafter referred to as A.C.) to a single-phase A.C. and, more particularly, to a single-phase A.C. power supply unit capable of obtaining high efficiency as a power supply of an A.C. arc welding equipment, a spot welding equipment, an arc welding or submerged welding equipment installed in a robot, a lighting equipment, a vibrator, an electric heater, or the like and to a welding equipment using the same.

## BACKGROUND OF THE INVENTION

A single-phase A.C. is usually used as a power supply of such as a spot welding equipment, a lighting equipment, an electric motor, or an electric heater. To obtain the single-phase A.C., a device for converting a three-phase A.C. to a single-phase A.C. such as a Scott wiring, a three-phase low frequency system, and an inverter system is used, but in case of using the device, the unbalance between three phases occurs as the current increases and the efficiency of the electric power is low. The above-described power supply unit such as Scott wiring has a complicated circuit construction and a large size and it cannot take out a stable current because a twice excessive current flows in one of three phases. As well, in case of using the three-phase low frequency system as a power supply unit of the spot welding equipment, the equipment is of large-sized, expensive, and likely to occur frequent troubles.

Since the arc welding equipment generally requires a large amount of current, two kinds of power supply systems, that is, a magnetic leakage system and a reactor system are employed therefor. The former utilizes a magnetic leakage transformer as a transformer and the latter is one constituted by inserting a saturable reactor in series in a discharging circuit comprising a secondary side of a transformer and an arc electrode. These systems can provide an output having a drooping-characteristic that the value of the output voltage abruptly rises up to a high voltage and thereafter drops swiftly as in arc welding, but the magnetic leakage and the reactance of the reactor cause a large loss in the output.

One of recently adopted systems is an inverter system that rectifies an A.C. and raises the frequency of the A.C. to about several hundreds cycles to about 1200 cycles, and then inputs the A.C. to a transformer and again rectifies the output of the transformer so as to obtain a D.C. as an output of a secondary side. The use of the inverter system enables to make the transformer of small-sized and lightweight but the system is extremely expensive as well as of bad efficiency and likely to occur troubles frequently. Since a single-phase A.C. power supply unit of 200 volt is used as a power supply in any system, the secondary side output is apt to be affected by pulsation of A.C., and especially it fluctuates in the neighborhood of zero point in the sinusoidal wave of the A.C. Therefore, the arc welding equipment requires keeping a proper distance between a welding rod and a weldment to keep arcs and the welding operation such as travel speed control requires a great deal of skill. Therefore, such welding equipment requires a small-sized and lightweight, and high efficiency power supply unit.

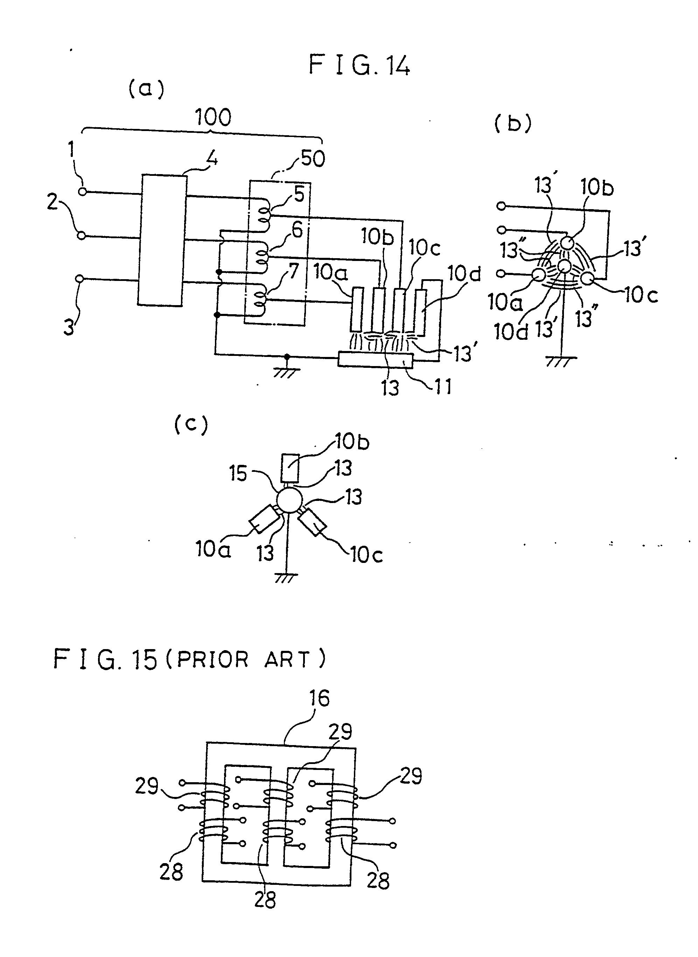

In addition, as shown in figure 15, the conventional multi-arc welding equipment includes a three-phase transformer 16 having a primary and a secondary coil 28 and 29 and applies three-phase output generated at the secondary coil 29 to the three welding electrodes to generate multiple-arcs between the welding electrodes and the weldment and between welding electrodes for carrying out the multiple-arc (hereinafter referred to as multi-arc) welding.

## SUMMARY OF THE INVENTION

It is an object of the present invention to provide a new type of small-sized, lightweight, and high efficiency power supply unit converting a three-phase A.C. to a single-phase A.C.

It is another object of the present invention to provide a power supply unit capable of obtaining an output waveform in accordance with a load by controlling the firing of each phase of a three-phase A.C. or a single-phase A.C. and dividing into various kinds of pulse waveform having a predetermined form.

It is still another object of the present invention to provide an arc welding equipment or a spot welding equipment comprising the above-described power supply unit that enlarges the enabling range of arc welding or spot welding and carrying out the welding with stability.

Other objects and advantages of the present invention will become apparent from the detailed description given hereinafter; it should be understood, however, that the detailed description and specific embodiment are given by way of illustration only, since various changes and modifications within the spirit and the scope of the invention will become apparent to those skilled in the art from this detailed description.

According to a first aspect of the present invention, a power supply unit comprises three terminals connected to a three-phase A.C. power supply, a phase control circuit controlling the supply of a three-phase A.C. to be carried out only in a phase range of, for example, from about 120° to 180° for respective phases, and a transformer having an iron core which is winded by first to third primary coils at the primary side and a secondary coil at the secondary side and in which the three primary coils are connected to the terminals of the three-phase A.C. power supply via the phase control circuit. The power supply unit having such construction outputs a single-phase A.C. Therefore, the electricity is applied to the first, second, and third coils only in a range from about 120° to 180° of the A.C. sinusoidal waveform of respective phases by the firing control carried out by the phase control circuit, so that a magnetic flux of sawtooth waveform having the frequency three times as that of the input three-phase A.C. is generated at the iron core, whereby a single-phase A.C. having such a drooping characteristic that the voltage value rises up abruptly and thereafter drops down swiftly is induced in the secondary coil. This makes it possible to obtain a small-sized and lightweight, and high efficiency power supply unit.

According to a second aspect of the present invention, a power supply unit comprises a three-phase A.C. power supply, a phase control circuit controlling the supply of a three-phase A.C. to be carried out only in a phase range from about 100° to 180° of respective positive or negative half waves of respective phases, and a transformer having an iron core which is winded by first to third primary coils at the primary side, which coils are connected to the three-phase A.C. power supply via the phase control circuit, and outputting the secondary side outputs taken out from the intermediate-points of the primary coils, and the power supply unit outputs a single-phase A.C. Therefore, a power supply unit converting three phase A.C. to single phase A.C. can be constructed without a secondary coil, thereby resulting in a small-sized and lightweight power supply unit. Furthermore, this power supply unit can be realized by using not a three-phase iron core but a single-phase iron core. This makes it possible to reduce the production cost.

According to a third aspect of the present invention, a multi-arc welding equipment comprises a power supply unit which comprises a three-phase A.C. power supply, a phase control circuit controlling the supply of a three-phase A.C. to be carried out in a phase range from about 100° to 180° of respective positive or negative half wave of respective phases, and a transformer having an iron core which is winded by first to third primary coils at the primary side, which coils are connected to the three-phase A.C. power supply via the phase control circuit, and outputting the secondary side outputs taken out from the intermediate-points of the primary coils, and the power supply unit outputs a single-phase A.C. Further, three welding rods are connected to respective three-phase outputs, and a common grounding terminal of the three primary coils are connected to the weldment. The multi-arc welding equipment generates arcs both between each welding rod and the weldment and between the welding rods, to result in multi-arc welding. Herein, the arcs between the welding rods are not usually generated at firing angles of more than 120°. Since a multi-arc welding is carried out by using a power supply unit having no secondary coil, a small-sized and lightweight, and quite a low cost welding equipment is realized. Furthermore, since this equipment is realized by using a single-phase iron core and controlling the phase firing angle of the input three-phase power supply to obtain a sawtooth wave having the frequency three times as that of input at the secondary side, whereby the strength and the stability of the arc welding can be increased compared with the conventional single-phase arc welding.

According to a fourth aspect of the present invention, a power supply unit comprises a six phases/three phases conversion circuit which, connected to a three-phase power supply, generates a six-phase A.C., and outputs a first and a second three-phase A.C. having desired three phases of the six, a first and a second phase control circuit controlling the supply of the first and the second three-phase A.C. output to be carried out only in a phase range from about 120° to 180° for respective phases, and a first and a second transformer comprising an iron core which is winded by first to third primary coils at the primary side and a single-phase secondary coil at the secondary side and in which the three primary coils are connected to the first and second three-phase output via the first and the second phase control circuit and the secondary coils are commonly connected in parallel or in series. This power supply unit thus constituted outputs a single-phase A.C. from the common output of the secondary coils. In addition, in the above-described power supply unit, the phases of the three-phase output supplied to the second phase control circuit are made opposite to those of the three-phase output supplied to the first one. Therefore, the electricity is applied to the first to third primary coils of respective transformers only in a phase range from about 120° to 180° of the A.C. sinusoidal waveform of respective phases by the firing control of the phase control circuit, so that a magnetic field of sawtooth waveform having the frequency three times as that of the three-phase A.C. is generated at the iron core, whereby a single-phase A.C. of threefold frequency as that of the input having such a drooping characteristic that a voltage level rises up abruptly and drops down swiftly, is induced in the secondary coils. Furthermore, an output current or an output voltage is doubled owing to that the secondary coils are connected in series or in parallel, thereby enabling to obtain a high power output power supply unit of small-sized and lightweight, and that occurs no unbalance between three phases. Furthermore, the problem of flicker can be prevented because the currents of two phases which are opposite to each other are supplied to the primary sides of respective transfers.

According to a fifth aspect of the present invention, a power supply unit comprises a three phase power supply, a six phases/three phases conversion circuit which, connected to the three-phase power supply, generates a six-phase A.C. and outputs desired three phase A.C. selected from the six-phase A.C., a phase control circuit controlling the supply of the three-phase A.C. from the six phases/three phases conversion circuit to be carried out only in a phase range from 120° to 180° for respective phases, and a transformer part comprising three single-phase transformers in which secondary side outputs are connected in common and primary sides are connected to the three-phase output of the six phases/three phases conversion circuit via the phase control circuit, and the unit outputs a single-phase A.C. to the common output of the single-phase transformers. Therefore, the electricity is applied to the primary sides of respective single-phase transformers only in a range from 120° to 180° of the A.C. sinusoidal waveform of each phase by the firing control carried out by the phase control circuit, and a sawtooth waveform current having the frequency three times as that of the input A.C., that is, a single phase A.C. of threefold frequency of the input A.C. having such a drooping characteristics that the voltage level rises up abruptly and drops swiftly is induced to the common output at the secondary side.

According to a sixth aspect of the present invention, an arc welding equipment includes a single-phase A.C. power supply unit which comprises a three-phase A.C. power supply, a phase control circuit controlling the supply of the three-phase A.C. to be carried out only in a range from about 120° to 180° of respective phases, and a transformer comprising an iron core which is winded by first to third primary coils at the primary side and a secondary coil at the secondary side in which the three primary coils are connected to the three-phase A.C. power supply via the phase control circuit, and outputs a single phase A.C. The single-phase A.C. output from the power supply unit is applied to between the welding electrodes and the weldment or to between the weldments. Therefore, the use of the arc welding equipment makes it possible to weld using a current of threefold frequency as that single-phase 60 cycles of the conventional equipment. In addition, the waveform of the output of the power supply unit is similar to the figure of the drooping characteristic of the conventional arc welding, so that no reactor or only a small is required, thereby preventing the lowering of power factor.

According to a seventh aspect of the present invention, a spot welding equipment includes a single-phase A.C. power supply unit which comprises a three-phase A.C. power supply, a phase control circuit controlling the supply of the three-phase A.C. to be carried out only in a phase range from about 120° to 180° for respective phases, and a transformer having a single-phase iron core which is winded by first to third primary coils at the primary side and a secondary coil at the secondary side in which the three primary coils are connected to the three-phase A.C. power supply via the phase control circuit, and outputs a single-phase A.C. The single-phase A.C. output from the power supply unit is applied to a pair of the welding electrodes to carry out a spot welding. Therefore, a synthesized waveform similar to a single-phase output of a sawtooth waveform having a threefold frequency as that of the input can be obtained by controlling respective phases of the three-phase output, thereby enabling to generate a single-phase output having the synthesized waveform at the secondary side of the transformer. In addition, a desired waveform for spot welding can be obtained by controlling the phase.

According to the eighth aspect of the present invention, a power supply unit comprises three input terminals connected to a three-phase A.C. power supply, a first power converting part converting the three phase A.C. input into a first single-phase A.C. comprising 0° to 60° portion of each positive and negative half-wave of the three phases, a second power converting part converting the three phase A.C. into a second single-phase A.C. comprising 60° to 120° portion of each positive and negative half-wave of the three phases, and a third power converting part converting the three-phase A.C. into a third single-phase A.C. comprising 120° to 180° portion of each positive and negative half-wave of the three phases. Therefore, the three kinds of single-phase A.C. can be used in accordance with the characteristic of the load such as a motor, resulting in enhancing the power efficiency of the load. In addition, if the single-phase outputs from the first to third power converting part are used at the same time, the load employed the power supply of the present invention can work three times as much as the conventional one employed a single-phase power supply.

According to the ninth aspect of the present invention, a power supply unit comprises a phase control circuit which can supply a three-phase A.C. input in a phase range from 0° to 60°, from 60° to 120°, or from 120° to 180° for each positive and negative half-wave of respective phases and a transformer having a first to third primary coils connected to the phase-controlled outputs of and a single-phase secondary coil magnetically connected thereto via the single-phase iron core, and the supply ranges of respective phases by the phase control circuit are set so as not to overlap one another. Therefore, the respective phases of the sinusoidal waveform three-phase A.C. input can be divided into front portion, middle portion, and back portion pulse waveforms of each positive and negative half-wave, and further these pulse waveforms can be arranged in desired order and output as a single-phase A.C. This makes it possible to control the waveform finely.

According to the tenth aspect of the present invention, a power supply unit comprises a phase control circuit which supplies a single-phase A.C. input in a predetermined phase range of 50% of phase angle for each positive and negative half-wave and outputs a phase controlled output thereof via an auto-transformer. Therefore, predetermined portions of each positive and negative half-wave of the sinusoidal waveform single-phase A.C. input can be output as a dispersed pulse waveform, resulting in desirable for some applications.

According to the eleventh aspect of the present invention, a power supply unit comprises three input terminals connected to a three-phase A.C. power supply, a first power converting part which outputs respective phases of the three-phase A.C. input separately in a phase range from 0° to 60° for each positive and negative half-wave, a second power converting part which outputs respective phases of the three-phase A.C. input separately in a phase range from 60° to 120° for each positive and negative half-wave, and a third power converting part which outputs respective phases of the three-phase A.C. input separately in a phase range from 120 ° to 180° for each positive and negative half-wave. Therefore, the first, second, and third phase sinusoidal waveform of the three-phase A.C. input can be divided into a front portion, middle portion, and rear portion pulse waveforms of each positive and negative half-wave, respectively, resulting in obtaining nine kinds of single-phase output which differ in waveforms and voltage generation timings. Furthermore, this nine single-phase outputs are supplied separately to multiple of input terminals of the load, thereby obtaining more effect.

According to the twelfth aspect of the present invention, the transformers of the above-described first and second power converting portions are provided with added transformers which generate high voltage due to the sudden dropping of the secondary side output level of the transformers. Therefore, the application of the high voltage to the load enables to use a three-phase A.C. effectively and to supply a power lowering at the vicinity of zero cross points of the nine single-phase outputs.

According to the thirteenth aspect of the present invention, a power supply unit comprises a three phases/six phases conversion circuit converting three-phase A.C. into six-phase A.C. to convert three positive phases of the first, third, and fifth phase and three negative phases of the second, fourth, and sixth phase into the first, second, and third single-phase A.C. and the first, second, and third single-negative phase A.C. which comprise 0° to 60°, 60° to 120°, or 120° to 180° portions of each positive and negative half-wave of the three phases, respectively. Therefore, the first to third single-phase A.C. having frequency three times as that of the input as well as the first to third single-negative phase A.C. having opposite phases to respective first to third phases can be obtained from a single-phase A.C. input.

According to the fourteenth aspect of the present invention, a power supply unit comprises a three phases/six phases conversion circuit converting a three-phase A.C. into a six-phase A.C., a phase control circuit supplying respective phases of the six-phase A.C. in a phase range from 0 ° to 60°, from 60° to 120°, or from 120° to 180°for each positive and negative half-wave, a supply range setting means setting the supply range of respective phases, and outputs respective phase voltages via a transformer having first to sixth primary coils and single-phase secondary coil. Therefore, respective phases of the sinusoidal waveform six-phase A.C. can be divided into the front portion, middle portion, and back portion pulse waveforms of each positive and negative half-waves, the three kinds of pulse waveforms can be arranged in desired order, resulting in a single-phase A.C. having frequency three times as that of the input or a single-negative phase A.C. having a opposite phase to the single-phase A.C.

## BRIEF DESCRIPTION OF THE DRAWINGS

Figures 1(a) and 1(b) are diagrams illustrating a power supply unit used in an arc welding equipment in accordance with a first embodiment of the present invention;

Figures 2(a) to 2(c) are diagrams illustrating an output waveform of the power supply unit of figure 1;

Figures 3(a) and 3(b) are diagrams for explaining an operation of the arc welding equipment of figure 1;

Figure 4 is a diagram illustrating an prior art arc welding equipment using a saturable reactor;

Figures 5(a) and 5(b) are diagrams illustrating a transformer of a power supply unit and output waveforms thereof in accordance with a second embodiment of the present invention;

Figures 6(a) to 6(e) are diagrams illustrating materials being welded to each other by the arc welding equipment in accordance with a first embodiment of the present invention;

Figures 7(a) and 7(b) are diagrams illustrating a transformer of a power supply unit and output waveforms thereof in accordance with a third embodiment of the present invention;

Figures 8(a) and 8(b) are diagrams illustrating a transformer of a power supply unit and output waveforms thereof in accordance with a fourth embodiment of the present invention;

Figure 9 is a diagram illustrating a construction of a spot welding equipment including a power supply unit of the present invention;

Figure 10 is a diagram illustrating a construction of a spot welding equipment in accordance with a fifth embodiment of the present invention;

Figures 11(a) and 11(b) are diagrams for explaining an operation of the spot welding equipment of figure 10;

Figures 12(a) and 12(b) are diagrams illustrating a power supply unit in accordance with a sixth embodiment of the present invention and a multi-arc welding equipment including the power supply unit;

Figures 13(a) and 13(b) are diagrams for explaining an operation principle of a conventional autotransformer;

Figures 14(a) to 14(c) are diagrams illustrating a multi-arc welding equipment in accordance with a seventh embodiment of the present invention;

Figure 15 is a diagram illustrating a prior art three-phase transformer;

Figure 16 is a diagram illustrating an equipment carrying out a mig welding and either flame spraying or firing multi-arc ((a) portion) at the same time against a material which is subjected to resistance heating in accordance with an eighth embodiment of the present invention;

Figures 17(a) and 17(b) are diagrams illustrating a transformer of a power supply unit and an output waveform thereof in accordance with a ninth embodiment of the present invention;

Figures 18(a) to 18(d) are diagrams showing applications of the sixth to ninth embodiment of the present invention;

Figures 19(a) to 19(c) are diagrams illustrating a power supply unit employed in an arc welding equipment of in accordance with a tenth embodiment of the present invention;

Figures 20(a) to 20(d) are diagrams illustrating waveforms for explaining an operation of the power supply unit of figure 19;

Figures 21(a) and 21(b) are diagrams illustrating waveforms of an output voltage and an output current of the power supply unit of figure 19;

Figures 22(a) to 22(c) are diagrams illustrating a power supply unit and an output waveform thereof in accordance with an eleventh embodiment of the present invention;

Figures 23(a) and 23(b) are diagrams for explaining a power supply unit in accordance with a twelfth and eleventh embodiment of the present invention;

Figures 24(a) and 24(b) are diagrams illustrating a transformer of a power supply unit and an output waveform thereof in accordance with a thirteenth embodiment of the present invention;

Figures 25(a) to 25(c) are diagrams illustrating a transformer of a power supply unit and an output waveform thereof in accordance with a fourteenth embodiment of the present invention;

Figures 26(a) to 26(d) are diagrams illustrating a transformer of a power supply unit and an output waveform thereof in accordance with a fifteenth embodiment of the present invention;

Figures 27(a) to 27(c) are diagrams illustrating a transformer of a power supply unit and an output waveform thereof in accordance with a sixteenth embodiment of the present invention;

Figures 28(a) and 28(b) are diagrams illustrating a power supply unit included in an arc welding equipment in accordance with a seventeenth embodiment of the present invention;

Figures 29(a) and 29(b) are diagrams illustrating an output waveform of a power supply unit of figure 28(a);

Figures 30(a) and 30(b) are diagrams illustrating a power supply unit and an output waveform thereof in accordance with an eighteenth embodiment of the present invention;

Figures 31(a) to 31(c) are diagrams illustrating a power supply unit and an output waveform thereof in accordance with a nineteenth embodiment of the present invention;

Figures 32(a) to 32(d) are diagrams illustrating a power supply unit and an output waveform thereof in accordance with a twentieth embodiment of the present invention;

Figures 33(a) to 33(c) are diagrams illustrating a power supply unit and an output waveform thereof in accordance with a twenty first embodiment of the present invention;

Figure 34 is a schematic diagram illustrating a power supply unit in accordance with a twenty second embodiment of the present invention;

Figure 35 is a diagram illustrating a circuit construction of the power supply unit of figure 34;

Figure 36 is a diagram illustrating a construction of the phase control circuit employed in first to third power converting parts of the power supply unit of figure 34;

Figures 37(a) to 37(c) are waveform diagrams for explaining the operation of the phase control circuit of respective power converting parts of figure 36;

Figure 38 is a diagram showing waveforms of three phases (R-phase, S-phase, and T-phase) of a three-phase A.C. input to the power supply unit of figure 34 which are divided into front portion, middle portion, and rear portion of each positive and negative half-wave;

Figure 39 is a schematic diagram illustrating a power supply unit in accordance with a twenty third embodiment of the present invention;

Figure 40 is a diagram illustrating a circuit construction of the power supply unit of figure 39;

Figures 41(a) to 41(c) are diagrams illustrating an output waveform of the power supply unit of figure 39;

Figure 42 is a diagram illustrating a circuit construction of a power supply unit in accordance with a twenty fourth embodiment of the present invention;

Figures 43(a) to 43(c) are diagrams illustrating an output waveform of the power supply unit of figure 42;

Figure 44 is a diagram illustrating a first variation of the power supply unit of figure 42 in which the construction of transformer portion is changed;

Figure 45 is a diagram illustrating a second variation of the power supply unit of figure 42 in which the secondary sides of the three transformers of figure 44 are connected in parallel;

Figure 46 is a diagram illustrating a construction and an operation of a power supply unit in accordance with a twenty fifth of the present invention;

Figure 47 is a diagram illustrating a circuit construction of a power supply unit in accordance with a twenty sixth of the present invention;

Figure 48 is a diagram illustrating a circuit construction of a power supply unit in accordance with a twenty seventh of the present invention;

Figures 49(a) to 49(c) are diagrams illustrating output waveforms of a first power converting part of the power supply unit of figure 48;

Figures 50(a) to 50(c) are diagrams illustrating output waveforms of a second power converting part of the power supply unit of figure 48;

Figure 51 is a diagram illustrating a power supply unit in accordance with twenty eighth embodiment of the present invention;

Figure 52 is a diagram illustrating a circuit construction of the power supply unit of figure 51;

Figure 53 is a waveform diagram for explaining the operation of a three phases/six phases conversion circuit mounted on the power supply unit of figure 51;

Figures 54(a) to 54(f) are diagrams illustrating output waveforms of the power supply unit of figure 51;

Figure 55 is a diagram illustrating a circuit construction of a power supply unit in accordance with a twenty ninth embodiment of the present invention;

Figures 56(a) to 56(f) are diagrams illustrating output waveforms of the power supply unit of figure 55; and

Figures 57(a) and (b) are diagrams illustrating a variation of the power supply unit of figure 55 in which the transformer portion is changed.

## DETAILED DESCRIPTION OF THE PREFERRED EMBODIMENT

An embodiment of the present invention will be described in detail with reference to the drawings.

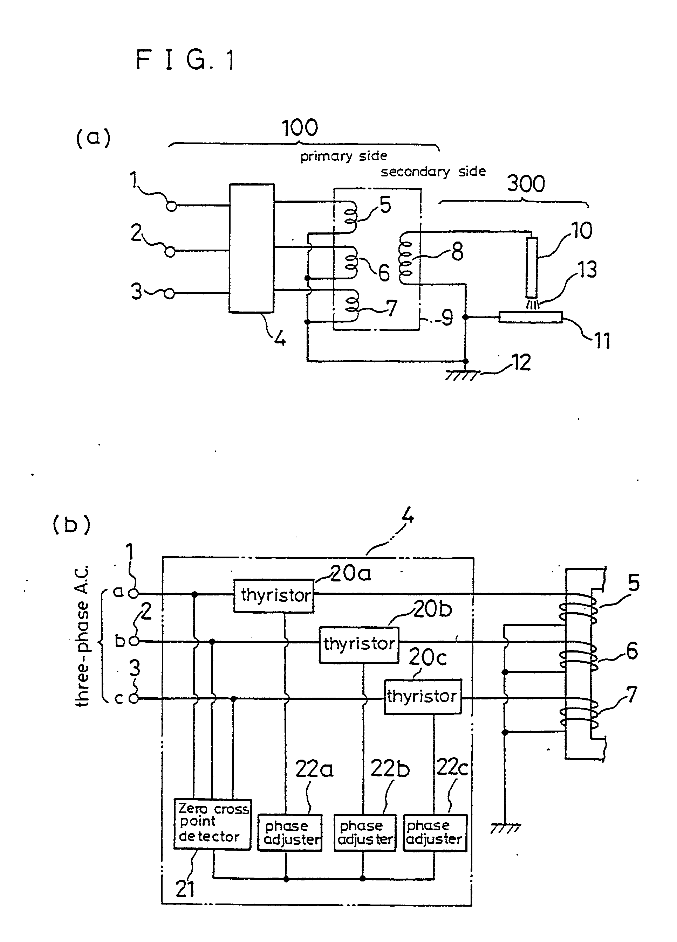

Figure 1(a) is a diagram illustrating an arc welding equipment provided with a power supply unit in accordance with a first embodiment of the present invention. In figure 1(a), reference numerals 1, 2, and 3 designate terminals connected to a three-phase A.C. power supply. A phase control circuit 4 controls the supply of the three-phase A.C. to be carried out only in a phase range from 120 to 180 for respective phases. A transformer 9 comprises an iron core comprising an laminated silicon steel plate winded by first to third primary coils 5, 6, and 7 at the primary side and a secondary coil 8 at the secondary side. One end of the secondary coil 8 is grounded to the ground 12. A power supply unit 100 is constituted by the phase control circuit 4 and the transformer 9. In a welding part 300, a welding electrode 10 is provided connected to the secondary coil 8 and a weldment 11 is connected to the ground 12 of the secondary coil 8 and an arc welding is carried by firing an arc 13 between the welding electrode 10 and the secondary coil 8.

Figure 1(b) is a diagram showing the detail of the phase control circuit 4 of figure 1(a). In figure 1(b), reference numerals 20a, 20b, and 20c designate thyristors. A zero cross point detector 21 detects a zero cross point of the sinusoidal wave of respective phases in the three-phase A.C. Phase adjusters 22a, 22b, and 22c receive outputs from the zero cross point detector 21 and control firing angles of the thyristors 20a, 20b, and 20c.

A description is given of the operation.

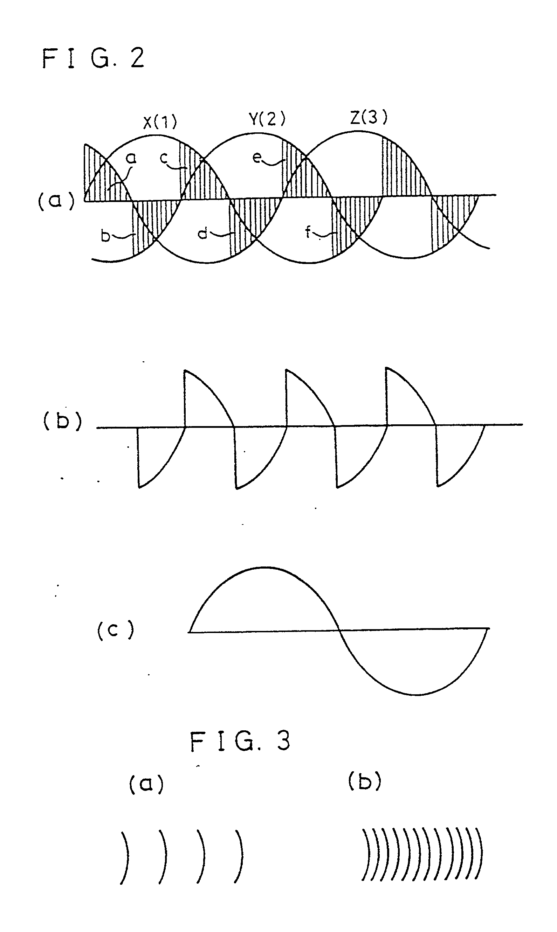

A phase control circuit 4 controls the supply of the electricity from the terminals of three-phase A.C. power supply 1, 2, and 3 to the first coil 5, the second coil 6, and the third coil 7 of the transformer 9 to be carried out only in a phase range from 120° to 180° of the A.C. sinusoidal waveforms X, Y, and Z shown in figure 2(a) (regions c and f of the phase X, regions b and e of the phase Y, and regions a and d of the phase Z) and makes the coils in open circuit state outside of the phase range. Repeated application of the electricity to respective coils 5, 6, and 7 as described above induce in the iron core a magnetic flux of figure 2(b) having the drooping characteristics of the frequency three times as that of the input current shown in figure 2(c), and further the sawtooth waveform current of the threefold frequency shown in figure 2(b) is also induced in the secondary coil 8.

Thereafter, the sawtooth waveform current of the threefold frequency is applied to the welding electrode 10 at the welding part 300 and arcs 13 are fired between the electrode 10 and the weldment 11 to result the arc welding. This equipment has the following effects (1) to (10).

(1) Since the three-phase A.C. is changed into the single phase A.C., the unbalance of the input electric power between the three phases does not occur. The single-phase output at the secondary side has the frequency three times as that of the three-phase A.C. at the primary side, that is, 180 cycles against single phase 60 cycles, thereby enabling to reduce welding time to a third of the welding time using the conventional three phase/single phase conversion power supply unit. If the welding is carried out at the same speed as in the conventional one, the arcs fired by this equipment shown in figure 3(a) will be three times as close as in the conventional one shown in figure 3(b), thereby enabling to enhance the quality of the welding.

(2) Contrary to the conventional three phase/single phase conversion power supply unit generates a single-phase sinusoidal waveform output, the power supply unit of this embodiment generates a single-phase sawtooth waveform output whose value rises up abruptly to a high level and then falls down swiftly to zero, thereby enabling to easily obtain a stable arc in welding. In other word, the power supply unit of this embodiment has a drooping characteristic which is favorable in arc welding.

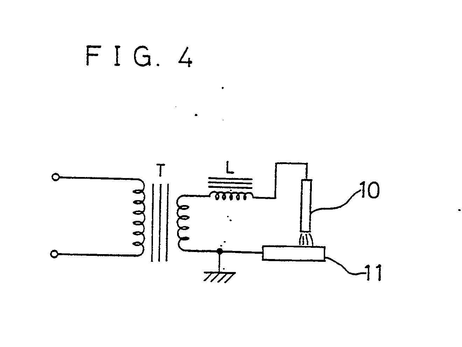

(3) Since the power supply unit of this embodiment has the drooping characteristics, an equipment such as a magnetic leakage system or a saturable reactor L of figure 4, which is conventionally utilized to obtain the drooping characteristics is not requested, thereby avoiding loss of power and lowering of the power utilization factor.

(4) In this embodiment, the frequency of the output is three times as that of the conventional output, so that the transformer can be miniaturized to be of a third in size, and this makes it possible to reduce the production cost.

(5) Since the power supply unit of this embodiment requires no-load voltage of only 35 V to 55 V while the conventional one requires that of 60 V to 100 V, it can be handled safely and easily without great deal of skill. In addition, the automatization of the welding equipment is easily possible.

(6) A proper control of the firing angle of sinusoidal waveform of one phase at approximately 120° allows to adjust the intensity of the arc. This fact is that the phase range can be controlled to be wider than the conventional and that the region which could not be conventionally welded can be welded by utilizing an automatic control by a computer with high stability.

(7) Since the power supply unit is of small-sized, lightweight, and fires stable arcs, when mounted in a robot, the arc welding of a large-sized thick plate is possible. This means that the welding equipment of this embodiment has the weight the same as and the welding ability three times as that of the conventional one.

(8) The power supply unit of this embodiment can be utilized in a large-scaled arc flame spraying. The use of a multiple of power supply units of this embodiment enables to carry out simultaneously the flame spraying of different kinds of metals, that is, the alloy flame spraying, owing to the characteristics of the sawtooth waveform current of the threefold frequency.

(9) The use of the power supply unit of this embodiment in the mig welding instead of the conventional arc welding enables to rise the welding speed to a three times speed or to employ a welding wire having a twice cross section.

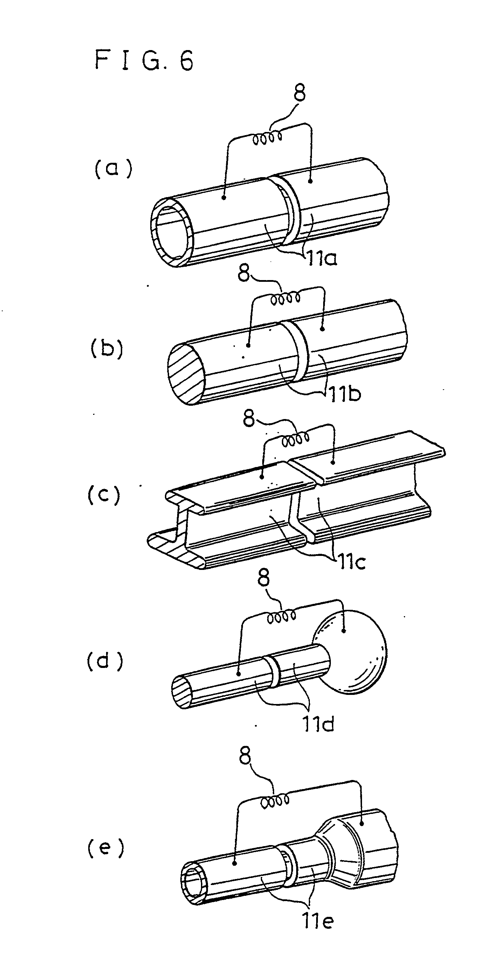

(10) By applying the sawtooth waveform voltage of the threefold frequency generated at the secondary coil to two weldments 11a to 11e as shown in figures 6(a) to 6(e), producing an inert atmosphere around the same, and making the firing easy by utilizing such as metal grain or conducting firing with remaining a gap at high frequency, the weldments having a large diameter can be welded at the same time. At this time, it is more preferable to apply the forge press or vibration press.

A description is given of a second embodiment of the present invention.

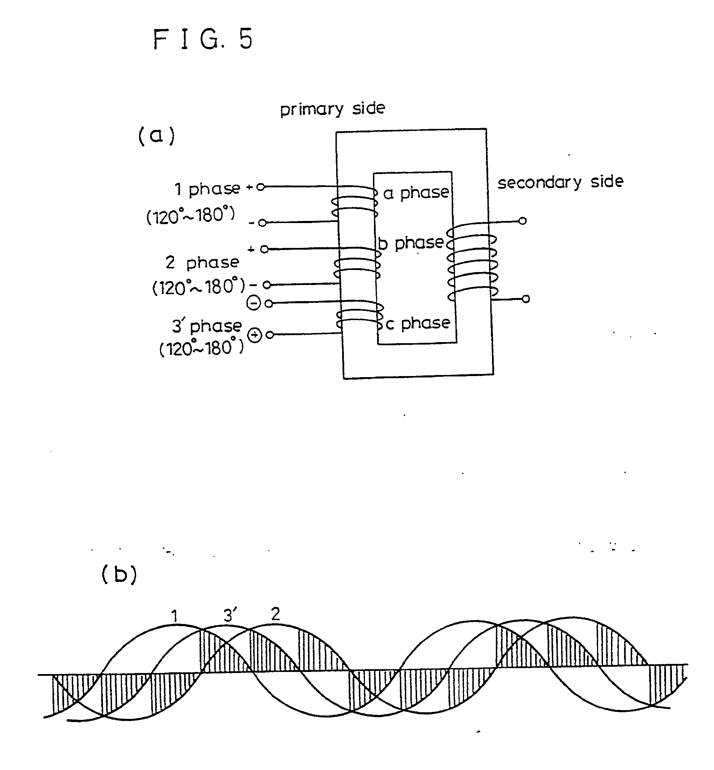

Figure 5(a) is a diagram illustrating a power supply unit in accordance with the second embodiment of the present invention. As shown in the figure, the third phase of the power supply is made opposite to that of the first embodiment. In the second embodiment, when the firing is carried out in a phase range approximately from 120° to 180° for respective three phases similarly as in the first embodiment, the waveform of figure 5(b) is obtained. That is, three sawtooth waves are obtained at each positive and negative side during a period. As a result, a single-phase output having 360 sawtooth waves a second can be produced from the three-phase A.C. of 60 cycles. Therefore, if the power supply unit is used as a power supply unit for a spot welding or a forge heating, it is advantageous because the reactance loss can be reduced and the heat energy can be increased as compared with sawtooth waves of 180 cycles. To be concrete, the welding can be realized at the position far from the transformer part.

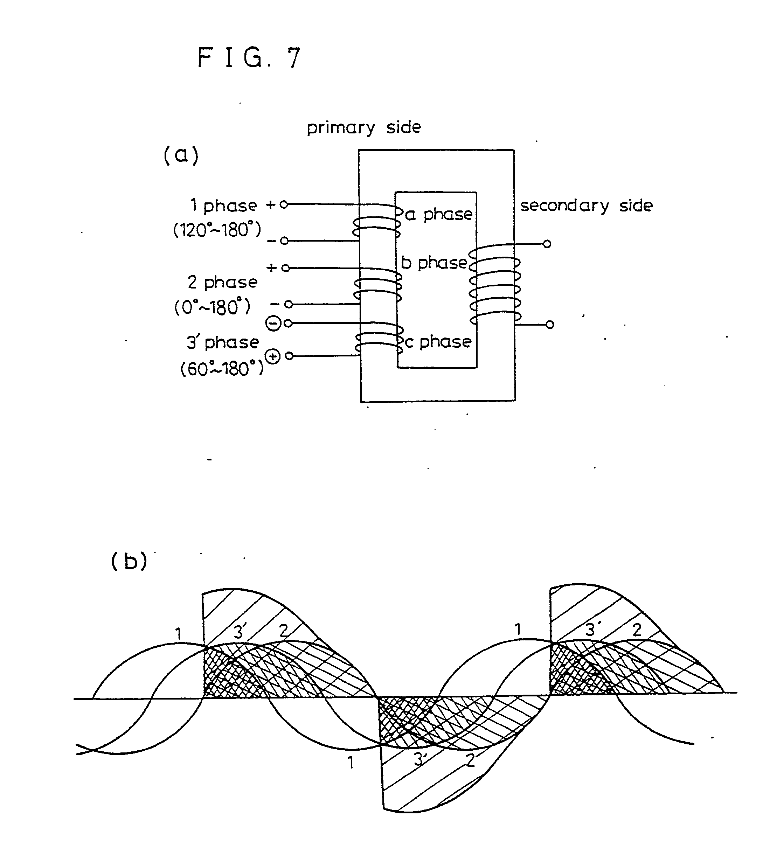

Figure 7(a) is a diagram illustrating a power supply unit in accordance with a third embodiment of the present invention. In this embodiment, the third phase of the power supply unit is made opposite to that of the first embodiment similarly as in the second embodiment and the firing is carried out only in a phase range approximately from 120° to 180° for the first phase, from 0 ° to 180° for the second phase, and from 60° to 180° for the third phase. In this embodiment, a sawtooth waveform current of 60 cycles having a large waveheight can be obtained as shown in figure 7(b), to be further superior in the spot welding.

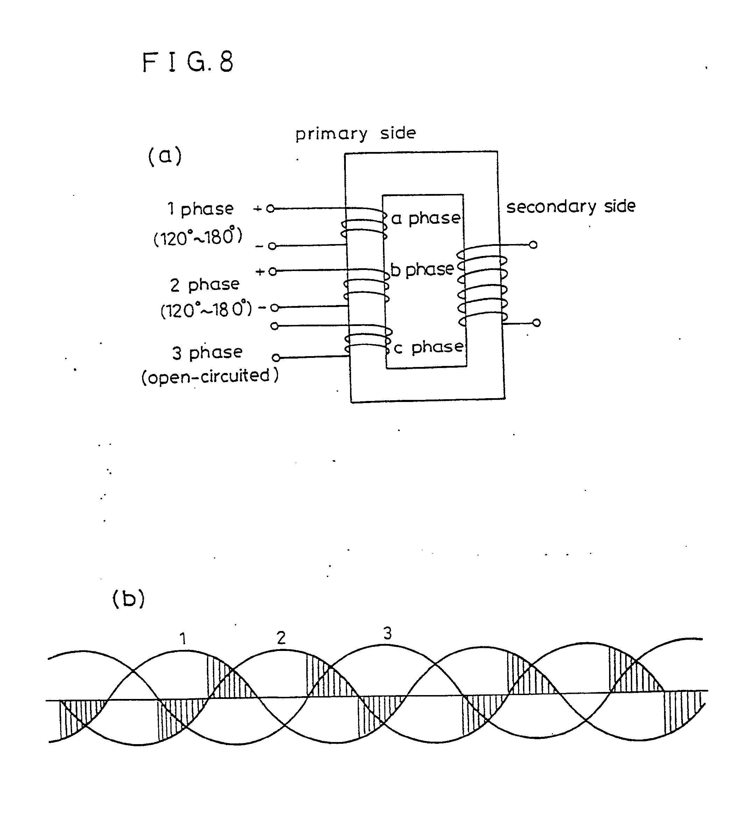

Figure 8(a) is a diagram illustrating a power supply unit in accordance with a fourth embodiment of the present invention. In this fourth embodiment, the phase control circuit 4 of figure 1 makes the third phase open-circuited and the first and second phases fired in a phase range from 120° to 180°. As shown in figure 8(b), the power supply unit generates a current having two sawtooth waves with a regular interval at each positive and negative side during a period, that is, a waveform comprising sawtooth waves with intermission periods at each positive and negative side is obtained. In other word, a single-phase output having 240 sawtooth waves a second can be obtained from a three-phase power input of 60 cycle. Therefore, the reactance loss can be reduced and the heating energy can be increased as compared with sawtooth waves of 180 cycles. To be concrete, the welding can be realized at a position far from the transformer part. In addition, since the waveform of welding current has an intermission at each positive and negative side, it is favorable for the welding of such as castings which needs to avoid rapid temperature rising.

In the fourth embodiment, the phase control circuit is provided to control the firing to be carried out for only the first and second phases of three coils, but instead, the transformer may be constituted by two coils having the first and second phases at the primary side.

The numbers of primary and secondary coils are not limited to the number described in respective embodiments but they may be multiplied.

In the above-described embodiments, the firing starts at 120 of each phase to obtain the welding current having a sawtooth waveform shown in figure 2(b), but when the firing starts at 100 of each phase, the sawtooth waveform current whose rising up timing is earlier and whose top portion of rising up wave is more rounded than the output of this embodiment can be obtained, resulting in desirable for some applications of welding.

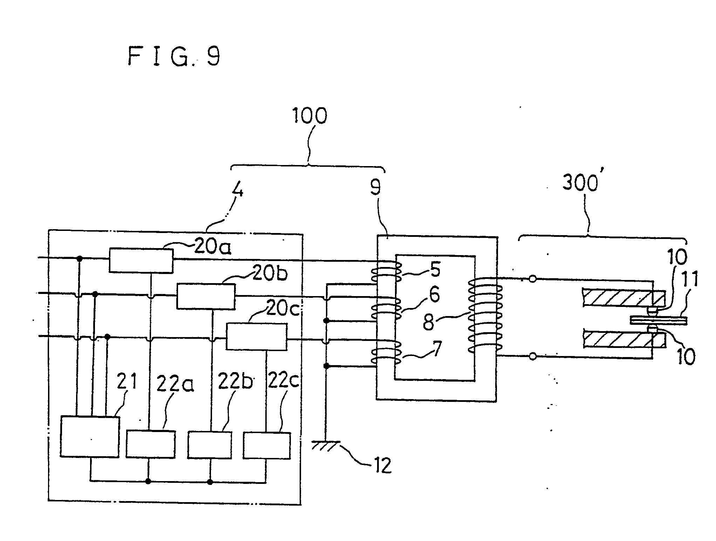

Figure 9 is a diagram illustrating a variation of the present invention. As shown in figure 9, a spot welding equipment includes the power supply unit of the fourth embodiment, and a welding part 300′ comprises welding electrodes 10 which are connected to the both ends of a secondary coil 8 and a weldment 11 which is put between the electrodes 10, and it carries out spot welding. Since other portions are the same as those of the first embodiment, a description is omitted.

A description is given of the operation and the effect of the spot welding equipment.

A sawtooth waveform current of the threefold frequency is applied to both welding electrodes 10 of the welding part 300′ to fuse a portion of the weldment 11 which is put between the electrodes 10, thereby carrying out the spot welding. The use of the spot welding equipment has the following effects adding to the above-described effects (4) and (6).

Usually the spot welding requires a current having a large capacitance and an unbalance between three phases is caused in case of using the conventional power supply unit, but in this embodiment, since the three-phase A.C. is converted into a single-phase A.C. to supply the spot welding equipment, the unbalance between three phases can be prevented. Furthermore, the single-phase output supplied to the welding equipment has a sawtooth waveform of the frequency three times as that of the input as shown in figure 2(b), thereby enabling to carry out the welding in good quality. Especially non-ferrous metal such as Al, Cu, or Bs can be welded favorably, and the existence of a bit of insulating film does not impede the spot welding.

In the spot welding as described above, when the power supply unit has the same construction as those of the second to the fourth embodiments, the same effects can be expected, respectively.

A spot welding equipment having an improved method of applying pressure to a welding electrode will be described as a fifth embodiment.

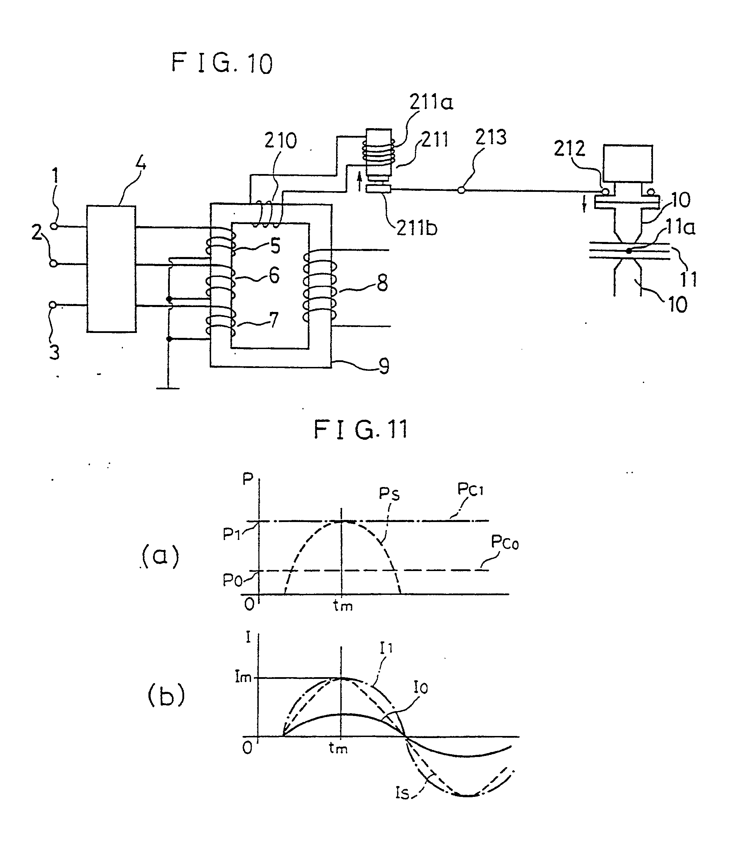

Figure 10 is a diagram illustrating a spot welding equipment in accordance with the fifth embodiment of the present invention. In figure 10, a second secondary coil 210 is winded to an iron core of a transformer 9. A solenoid 211 comprises a solenoid coil 211a which is connected to the second secondary coil 210 and a cylinder 211b. A ring 212 moves up and down with a point 23 as a supporting point as the cylinder moves down and up.

The description is given of the operation.

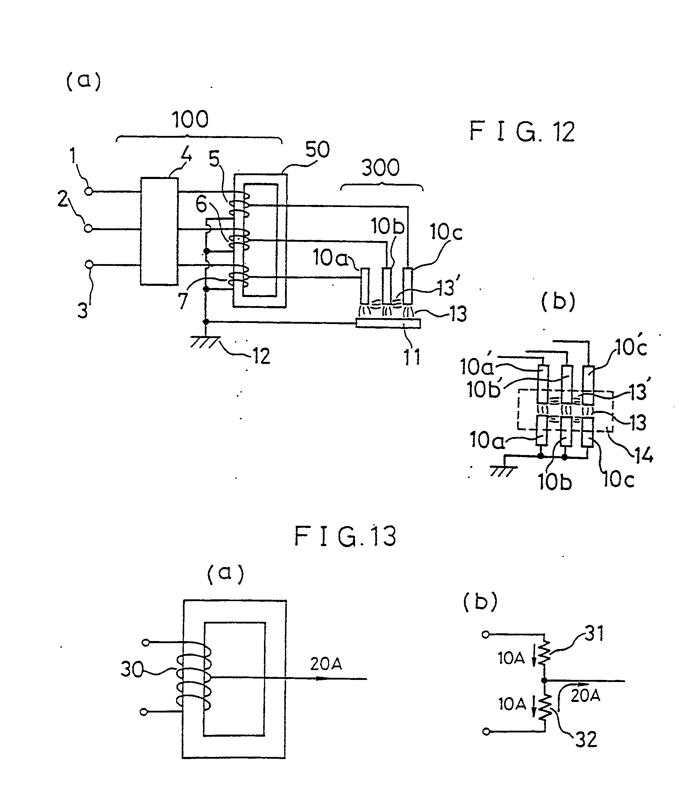

Generally, in the spot welding, an air pressure or a hydraulic pressure by cylinder is applied to the welding electrodes to obtain a spot welding current. For example, when the current I under no pressure has a waveform $I_0$ shown in figure 11(b), a constant pressure (pressure $P_1$) $P_{C1}$ shown in figure 11 (a) is applied to result a spot welding current $I_1$ of figure 11(b). In this case, however, a large constant pressure $P_{C1}$ is always applied including when the current value $I_0$ under no pressure is in the vicinity of zero, which is a waste of mechanical power. If pressure applied to the welding electrodes are made to have the maximum value when the current having a sinusoidal waveform like $I_0$ has the maximum value, an improved spot welding is resulted without arising a waste of the mechanical power. Therefore, the waveform of the pressure $P_S$ is ideally preferred to be a sinusoidal waveform synchronized with the current $I_0$ which is to flow under no pressure as shown by dotted line in figure 11(a). This application of a pressure synchronized with the sinusoidal waveform current $I_0$ results a spot welding current $I_S$ shown in figure 11(b) with no waste of a mechanical power.

Considering the above-described aspect in the spot welding equipment, in this fifth embodiment, a pressure $P_s$ having the same waveform as that of the current $I_0$ which is output from the first secondary coil 8 is applied by using the second secondary coil 210 to carry out an efficient welding without power loss. In the spot welding, a welding heat $I^2R$ is of small value when the large pressure is applied because the pressure suppresses the generation of heat. However, since the pressure is of small value except at time of

$t_m$ (welding time) in this embodiment, the heat can increase and, the good spot welding can be carried out. Therefore, the spot welding of such as Al, Cu, or titanium can be carried out by using the equipment of this embodiment. For example, when the spot welding of Al having 3mm of the thickness is conducted by conventional method, the electric power of 100 KVA is required, but using the spot welding equipment of the present invention, the requested electric power can be reduced to only 50 KVA. When the welding equipment of the present invention is employed in butt welding of cylindrical materials, the welding effect becomes sixfold as that of conventional equipment.

If the waveform of the current $I_0$ and that of the pressure $P_s$ are completely synchronized with each other, no problem occurs. However, if a difference in the synchronization arises therebetween, there is a possibility that the weldment or the electrode will be broken by the generation of spark because a resistance will become large when the current value is small and the pressure is zero. To prevent the breakages of the weldment or the electrode, a constant pressure $P_{C0}$ (pressure power $P_0$) is applied by air pressure or hydraulic pressure, and the pressure $P_S$ which is synchronized with the current $I_0$ is superimposed to the constant pressure $P_{C0}$, with the result that the pressure ($P_{C0} + P_S$) is applied to the current $I_0$ for obtaining the spot welding current.

In the fifth embodiment, the spot welding current is a current having a sinusoidal waveform but it may be a current having a sawtooth waveform which gives a same effect. The application of above-described system of applying pressure is not limited to the spot welding but the system can be applied to such as a forging equipment which forges and heats by current.

A sixth embodiment of the present invention will be described.

Figures 12(a) and 12(b) are diagrams illustrating a power supply unit and a multi-arc welding equipment including the same. In figure 12(a), reference numerals 1, 2, and 3 designate three-phase A.C. power supply terminals. A phase control circuit 4 controls phase firing angle of three-phase A.C. to be supplied. An auto-transformer 50 comprises a primary iron core which is winded by first to third primary coils 5, 6, and 7 at the primary side and takes out outputs from intermediate-points of the first to third primary coils as a secondary side output. The phase control circuit 4 and the auto-transformer 50 constitutes a power supply unit 100. The first to third welding electrodes 10a, 10b, and 10c are connected to respective secondary side outputs of the primary coils 5 to 7. A weldment 11 is connected to the neutral terminals of the primary coils 5, 6, and 7. An arc 13 is fired between the first to third welding electrodes 10a, 10b, and 10c and the weldment 11 and an arc 13' is fired between the first to third welding electrodes 10a, 10b, and 10c. Here, the arc 13' is not fired at more than 120 of firing angle for the phase of the input. The multi-arc welding is carried out at the welding portion 300. Reference numeral 12 designates a ground.

Since the construction of the phase control circuit 4 is the same as that of figure 1(b), the description is omitted.

Figure 12(b) shows a variation of the welding part 300 of the sixth embodiment. In figure 12(b), the weldments 10a, 10b, and 10c and the weldments 10a', 10b' and 10c' are to be welded mutually. Arcs 13 are fired between the weldments 10a, 10b, and 10c and the weldments 10a', 10b', and 10c' and arcs 13' are fired between the weldments at upper sides or between the weldments at lower sides. An inert gas or a flux 14 is provided surrounding a space where the arcs are fired in order to prevent oxidation.

The firing is controlled by the phase control circuit 4 similarly as the first embodiment shown in figure 2(a) and the secondary side output of the auto-transformer 50 is the same as that of figure 2(b).

Figures 13(a) and 13(b) are diagrams showing the operation principle of the conventional auto-transformer. In figures 13, a secondary side output is taken out from the intermediate-point of a primary coil 30. Reference numerals 31 and 32 designate resistors of an upper portion and a lower portion of the primary coil 30, respectively.

A description is given of the operation.

In the power supply unit 100 of the multi arc welding equipment of this sixth embodiment, a phase control circuit 4 controls the supply of electricity from the terminals of the three-phase A.C. power supplies 1, 2, and 3 to the first to third coils 5, 6, and 7 of the transformer 50 to be carried out only in a phase range from approximately 120° to 180° of the A.C. sinusoidal waveforms X, Y, and Z shown in figure 2(a) (regions c and f of the X phase, regions b and e of the Y phase, and regions a and d of the Z phase) and makes the coils in open circuit state outside of the phase range. Repeated application of the electricity to respective coils 5, 6, and 7 as described above induce in the iron core a magnetic flux of figure 2(b) having the drooping characteristics of the frequency three times as that of the input current of figure 2(c). Since the secondary outputs are taken out from the intermediate-points of the first to third primary coils 5, 6, and 7, the secondary outputs flowing in the welding electrodes 10a, 10b, and 10c is one of three phase current having a drooping characteristic of sawtooth waveforms of figure 2(b), in result an arc current of the frequency three times as that of the input current flows in the whole equipment. When the capacitance is large, a weldment 15 is grounded and the secondary outputs (the outputs applied to the electrodes 10a, 10b, and 10c of figure 14(a)) of the transformer 50 are applied to between the weldment 15 and the first to third welding electrodes 10a, 10b, and 10c, as shown in the seventh embodiment of figure 14(c),whereby the arc 13 are fired and the multi-arc welding is carried out. Herein, a space where the arc is fired is surrounded by an inert gas or a flux. The equipment of the sixth embodiment has the following effects adding to the above-described effects (3), (4), (6), and (7).

(8) In the auto-transformer used in this embodiment, as shown in figures 13(a) and (b), when a current of 10 A flows in the primary coil 30, a current of 20 A can be obtained as the secondary output which is taken out from the intermediate-point of the primary coil 30, and non-loaded voltage can be reduced to about a half of the conventional. In addition, a small-sized and lightweight equipment can be produced using the auto-transformer having no secondary coil.

(9) In the seventh embodiment shown in figures 14(a) and 14(b), a fourth welding electrode 10d is provided at the center of the welding rods 10a to 10c (in figure 14(a), it is provided outside the other three electrodes to simplify the diagram) and nine arcs are fired between the welding rods 10a to 10c and the weldment 11, between the welding rods 10a to 10c, and between the welding rods 10a to 10c and the welding electrode 10d. Therefore, the strong multi-arc welding can be carried out.

(10) Since the auto-transformer is employed instead of a conventional three-phase transformer 16 shown in figure 15, the weight of the multi-arc welding equipment is reduced to 30% of the conventional one and the price is reduced to 25%. Therefore, this equipment can be handled safely and easily without great deal of skill, and further the automatization of the welding equipment is possible.

(11) In a case where the arc welding equipment is mounted on a robot, a linear type welding rod can be employed without wiring and a welding or a padding can be realized using a welding rod of super-steel or rod of large diameter.

(12) The welding equipment of this embodiment enhances the welding ability so that a large welding rod or a large wire containing flux can be used at the current of the same KVA.

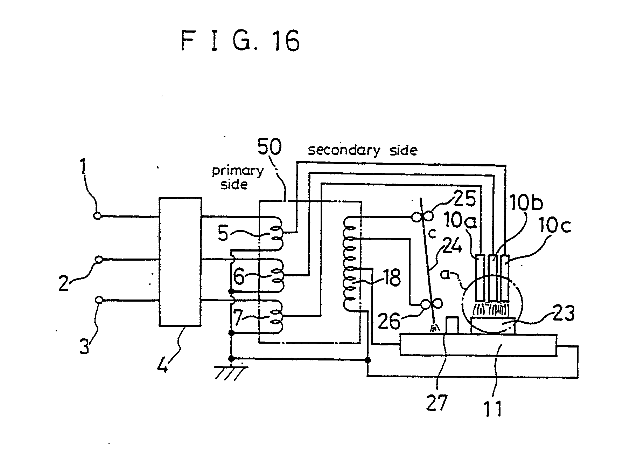

(13) In the eighth embodiment shown in figure 16, a voltage is applied to a welding wire 24 using an additional secondary coil 18 provided in an auto-transformer 50 to carry out resistance heating. In this case, since the secondary output of the transformer 50 has a sawtooth waveform of threefold frequency, a large heating effect can be obtained and unevenness of heating can be prevented, thereby enabling to carry out a stable mig welding with few sputter and to obtain padding 27 and 23 shown at a multi-arc welding portion a of figure 16 by welding or flame spraying.

(14) The power supply unit used in every welding method including submerge welding, electroslag welding, or flame spraying enables to carry out a welding or a flame spraying at high efficiency with few defective parts such as contamination and pinhole due to the function of sawtooth wave electromagnetic force of high frequency.

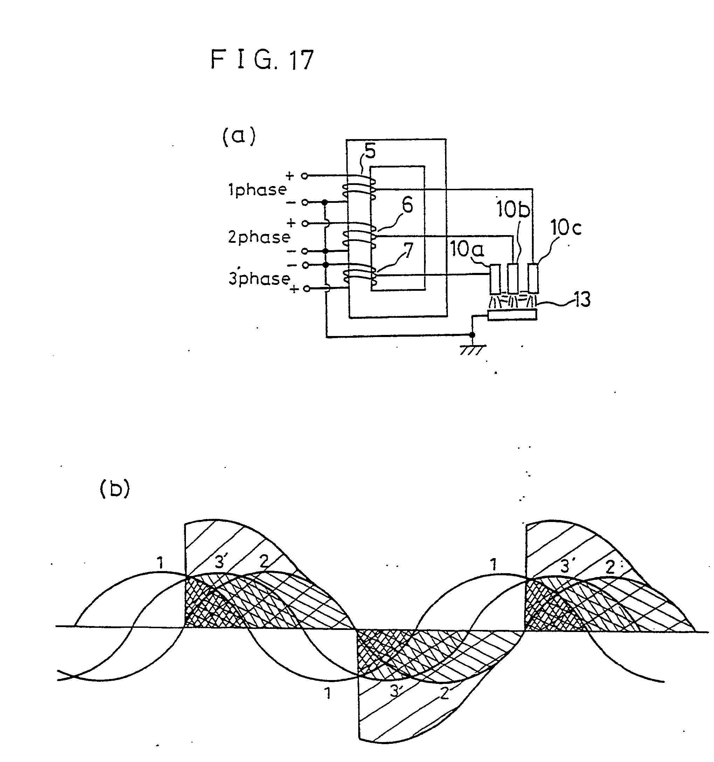

Figures 17(a) and 17(b) are diagrams illustrating a multi-arc welding equipment in accordance with a ninth embodiment of the present invention. In the multi-arc welding equipment of figure 17(a), one of the three phases of the power supply, herein the third phase, is made opposite to that of the sixth embodiment and the firing is carried out only in phase ranges approximately from 120° to 180°, from 0° to 180°, and from 60° to 180° for the first, second, and third phases in each positive and negative side. In this embodiment, a sawtooth waveform current of 60 cycles having a large waveheight can be obtained as shown in figure 17(b). This current is a little unbalanced between three phases but has a large energy for arc welding. When the power supply unit comprises the first to third transformers in which the first, second, or third phase is made opposite respectively, and, nine electrodes are connected to respective phases, a large scale welding can be carried out by keeping a three-phase balance.

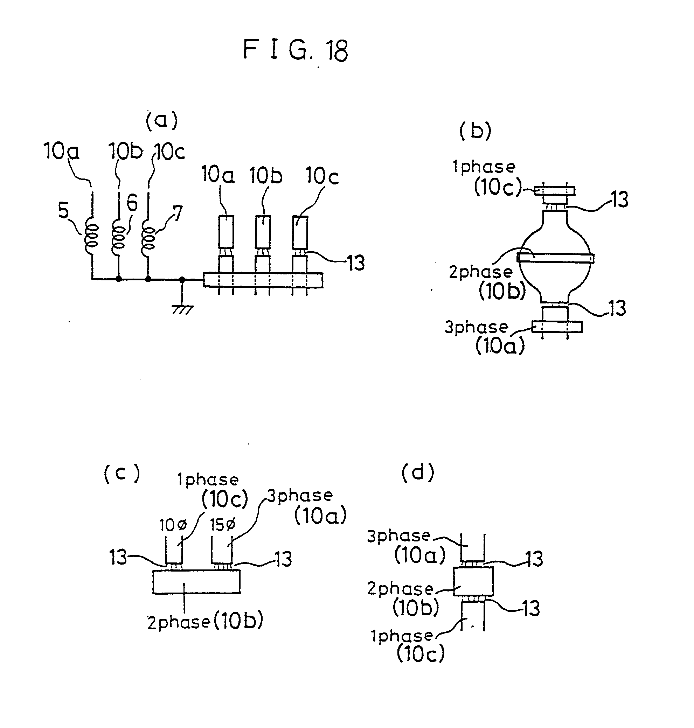

In the above-described embodiment, the welding rods fire arcs and carry out the weldment between base metals, but three rods which are grounded together may be welded at once by applying a current to other three rods which are set thereabove, as shown in figure 18(a). In addition, as shown in figures 18(b) to 18(d), materials having different shape can be welded using the characteristics of respective phases of figure 17(b).

A tenth embodiment of the present invention will be described.

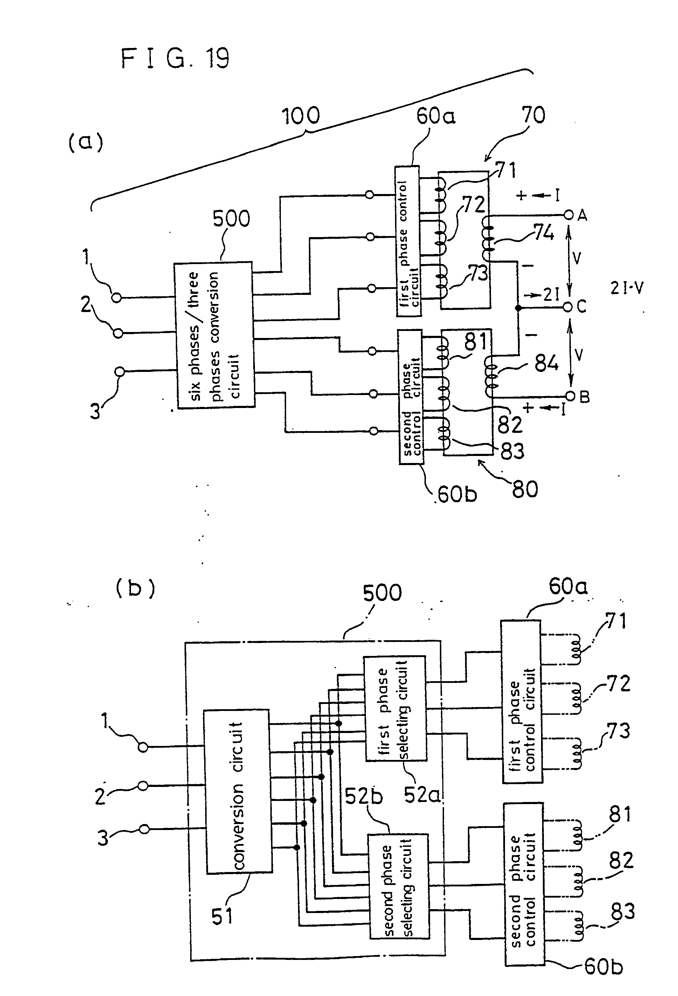

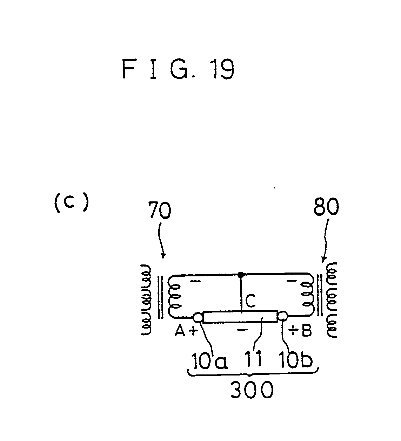

Figure 19(a) is a diagram illustrating the whole construction of a power supply unit and an arc welding equipment included the power supply unit in accordance with a tenth embodiment of the present invention and figure 19(b) is a diagram illustrating the construction of a six phases/three phases conversion circuit thereof. In figures 19, a six phases/three phases conversion circuit 500 is connected with three-phase A.C. power supply terminals 1, 2, and 3 and it generates a six-phase A.C. and outputs two groups of three phases selected among the six phases. The six phases/three phases conversion circuit 500 is constituted by a three-phase A.C. power supply as an input, a conversion circuit 51 which converts the three-phase A.C. into a six-phase A.C. having the first to third phases and the first to third negative phases, and first and second phase selecting circuits 52a and 52b which select desired three outputs from six phase outputs from the conversion circuit 51. Herein, the phase selecting circuits 52a and 52b are set to select the first to the third phases. Phase control circuits 60a and 60b which are connected to the three outputs of the phase selecting circuits 52a and 52b control the supply of three-phase A.C. output from the phase selecting circuits 52a and 52b to be carried out only in a phase range from 120° to 180° for each phase. Transformers 70 and 80 are connected to the outputs of the phase control circuits 60a and 60b, respectively, and they comprise an iron core comprising laminated silicon steel plates winded by the first to the third primary coils 71 to 73 or 81 to 83 at the primary sides and secondary coils 74 and 84 at the secondary sides. An end portion of the second coil 74 and that of the second coil 84 are connected in common to be a common output terminal C and the other end portions of both secondary coils are connected to output terminals A and B, respectively, which generate single-phase voltages having the same phase as that of the common output terminal C. The six phases/three phases conversion circuit 500, the first and second phase control circuits 60a and 60b, and the first and second transformers 70 and 80 constitute a power supply unit 100.

Figure 19(c) is a diagram showing the welding portion 300 which carries out the arc welding using the secondary side outputs of the above-described transformer 70 and 80. A welding part 300 comprises a weldment 11 which is connected to the common output terminal C and weldments 10a and 10b which are connected to the output terminals A and B, respectively.

Since the construction of the phase control circuit 4 is the same as that of the figure 1(b), the detailed description is omitted.

The description is given of the operation.

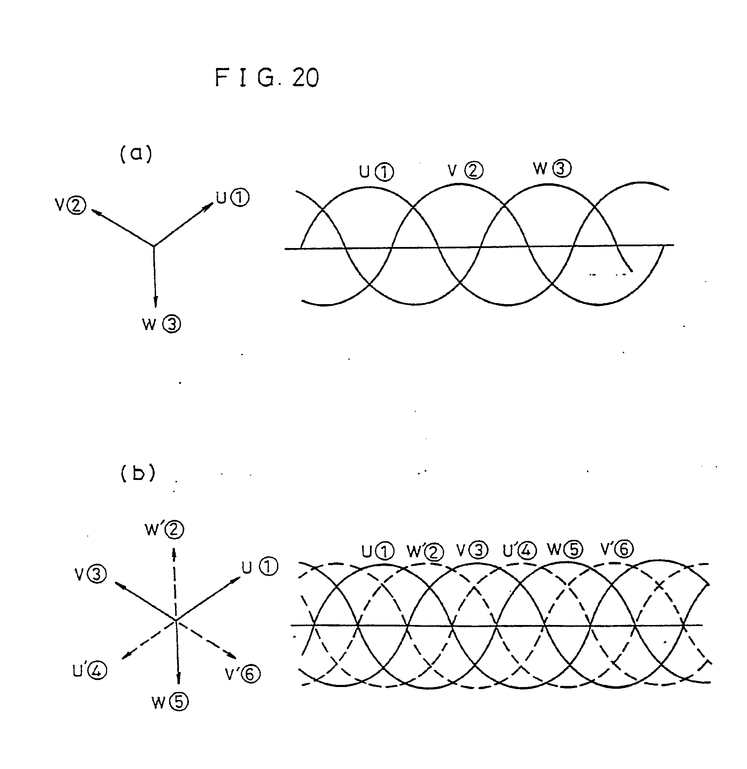

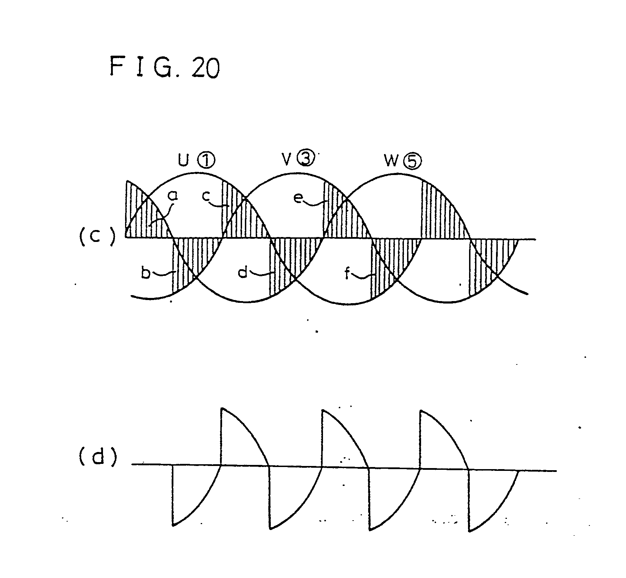

Each phase of a three-phase A.C. shown in figure 20(a) is input from the three-phase A.C. power supply terminals 1, 2, and 3 and converted into a six-phase A.C. having a first to a third phases (U, V, and W phases) and a first to third negative phases (U', V', and W' phases) shown in figure 20(b), and thereafter output to the first and the second phase selecting circuits 52a and 52b. The phase selecting circuits 52a and 52b selects the U-phase (1), the V-phase (3), and the W-phase (5) from six phase outputs (1) to (6) of the conversion circuit 51.

The phase control circuits 60a and 60b control the supply of the A.C. from the phase selection circuits 52a and 52b to the three-phase coils 71 to 73 and 81 to 83 of the transformers 70 and 80 to be carried out only in a phase range approximately from 120° to 180° for the phase angle of A.C. sinusoidal waveforms U, V, and W shown in figure 20(c)(regions c and f of the U, regions b and e of the V, and regions a and d of the W) and makes the coils in open circuit state outside of the phase range. Repeated application of the electricity to respective coils 71 to 73 and 81 to 83 as described above induce in the iron core a magnetic flux of figure 20(d) having the drooping characteristics of the frequency three times as that of the input current, and further the sawtooth waveform current I of the threefold frequency shown in figure 20(d) is also induced to between the output terminals A and C and between the output terminals B and C of the secondary coils 74 and 84 of respective transformers 70 and 80.

Thereafter, the sawtooth waveform current of the threefold frequency is applied to between the weldments 11 and 10a and between the weldments 11 and 10b at the welding part 300 and the arcs 13 are fired therebetween to result the arc welding. This equipment has the following effects adding to the above-described effects (1) to (7).

(15) In this embodiment, two transformers 70 and 80 are employed to obtain the output at between the common output terminal C to which one end portion of each secondary coil is connected in common and the output terminals A and B which are connected to the other end portions of the secondary coils. Therefore, two weldments 10a and 10b can be welded to a weldment 11 at the same time, thereby enhancing a work efficiency.

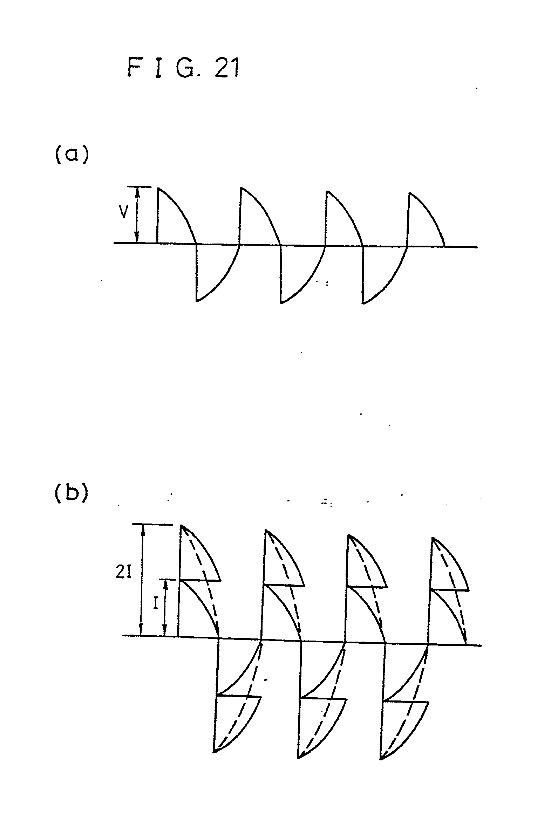

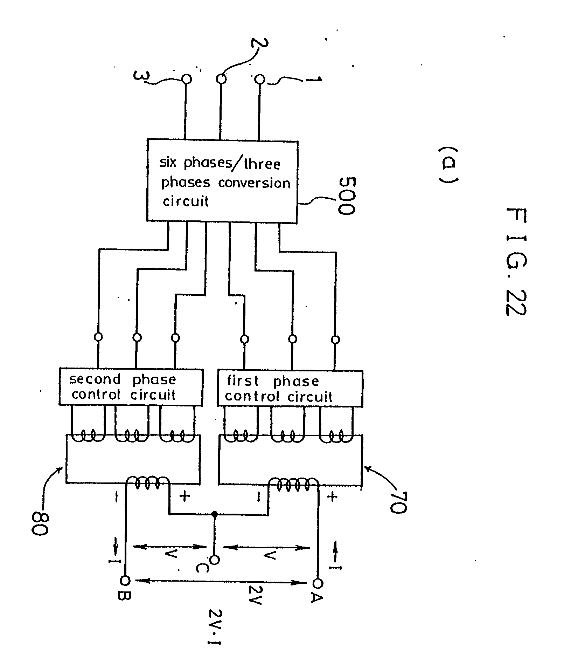

(16) In the above-described embodiment, since the output terminals A and B output the voltages having the same phase as each other on the basis of the common output terminal C, when the output terminals A and B are connected in common to connect the secondary coils of the transformers 70 and 80 in parallel, the value of the output current of the secondary side is doubled as that of the output current I of a transformer and the electric power P is $2I \cdot V$ which is doubled the electric power obtained in case of using a transformer ($P = I \cdot V$), as shown in figure figures 21(a) and (b).

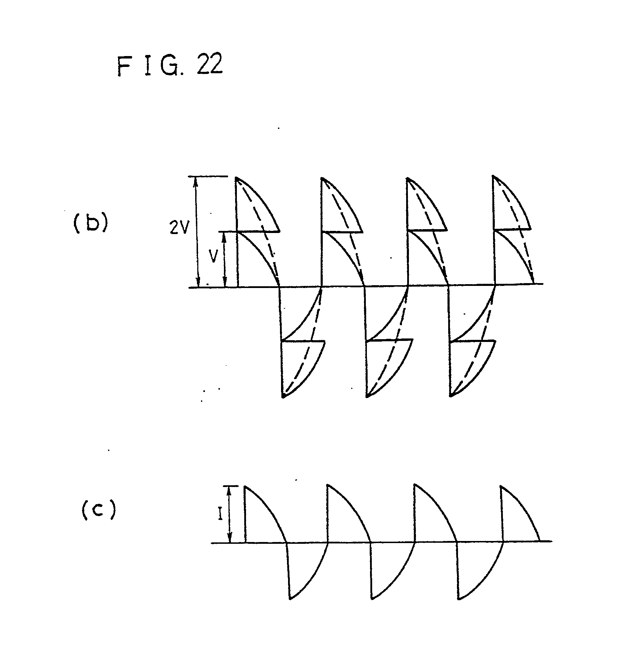

Figure 22(a) is a diagram illustrating a whole construction of a power supply unit in accordance with an eleventh embodiment of the present invention. In figure 22(a), the secondary outputs of the transformers 70 and 80 of figure 19(a) are connected in series. Other construction is the same as that of figure 19(a).

As shown in figures 22(b) and 22(c), between the output terminals A and B of the secondary coil of the transformers is generated a voltage whose value is twice as that of the voltage V which is generated in case of providing with a transformer, in this case the electric power P is 2V I that is also twice as the electric power obtained in case of using a transformer ($P = I \cdot V$).

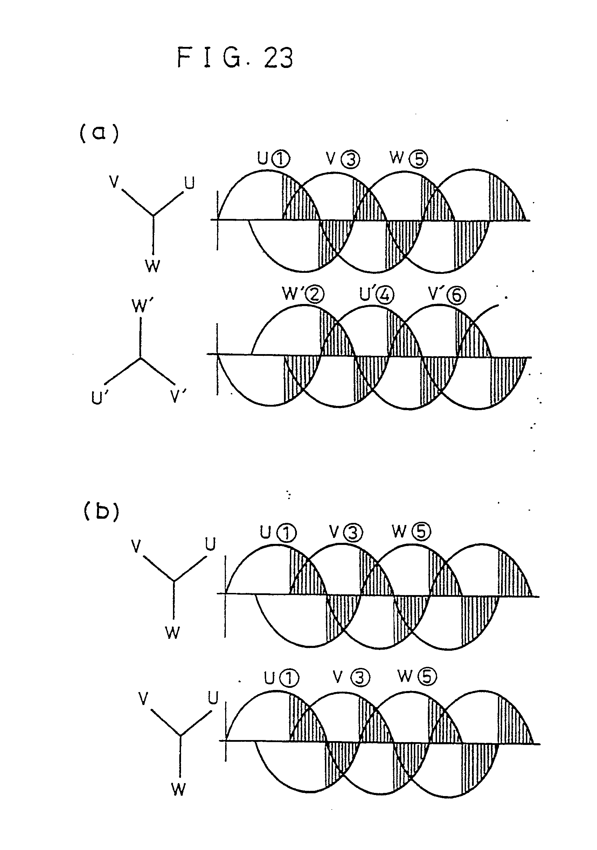

In the above-described embodiment, both the first and the second phase selecting circuits 52a and 52b of the six phases/three phases conversion circuit 500 select the U-phase (1), the V-phase (3), and the W-phase (5) from the six phases (1) to (6) output from the conversion circuit 51 as shown in figure 23(b) but the phases to be selected by the phase selecting circuit are not limited to those phases.

Figures 23(a) is a diagram for explaining a power supply unit in accordance with a twelfth embodiment of the present invention. In the embodiment, the first phase selecting circuit 52a selects the U-phase (1), the V-phase (3) and the W-phase (5) from the six-phase outputs (1) to (6) of the conversion circuit 51 and the second phase selecting circuit 52b selects the U'-phase (2), the V'-phase (4), and the W'-phase (6) which are negative phase with respect to the U, V and W-phases, and the two three-phase currents are supplied to the primary side of the transformers 70 and 80. The other construction is the same as that of the power supply unit of the eighth and the eleventh embodiments. Accordingly, adding to the above-described effects of the eighth and eleventh embodiments, the problem of flicker can effectively be solved by using the power supply unit of this embodiment, especially in a seam welding equipment of large scaled two electrode system.

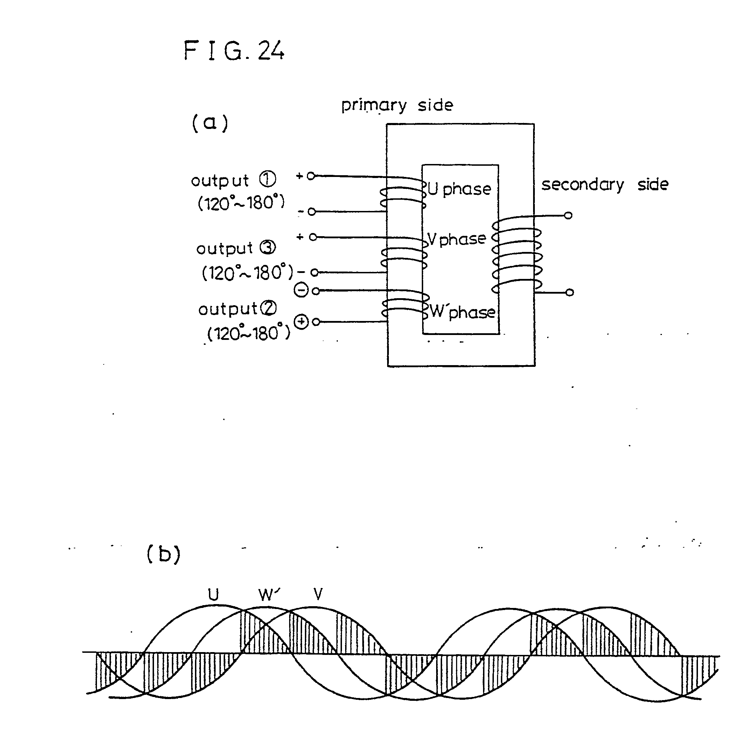

Figure 24(a) is a diagram illustrating a transformer of a power supply unit in accordance with a thirteenth embodiment of the present invention and figure 24(b) is a diagram showing an output waveform thereof. As shown in figure 24(a), the W'-phase (2) which is a negative phase of the W-phase (5) is selected by the phase selecting circuits 52a and 52b in the power supply unit which has the same construction as that of the tenth or eleventh embodiment. When the firing is carried out in a phase range approximately from 120° to 180° for respective phases, the waveforms of figure 24(b) is obtained at the secondary side output of respective transformers, that is, three sawtooth waves are obtained at both positive and negative side during a period. As a result, a single-phase output having 360 sawtooth waves a second can be produced from the three-phase A.C. of 60 cycles. Therefore, if the power supply unit is used as a power supply unit for spot welding or forge heating, it is advantageous because the reactance loss can be reduced and the heat energy can be increased as compared with sawtooth waves of 180 cycles. To be concrete, the welding can be realized at the position far from the transformer part.

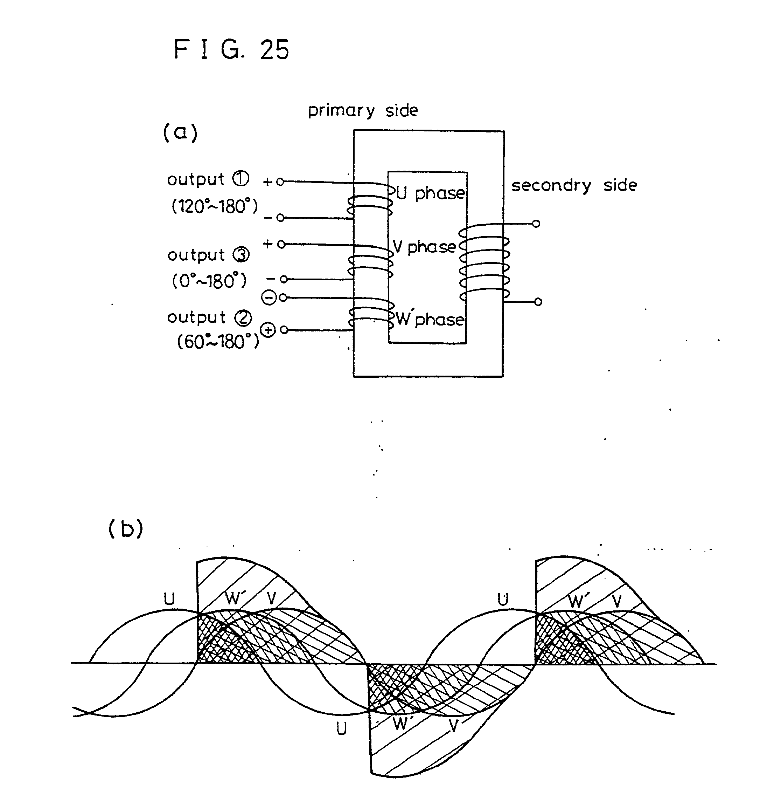

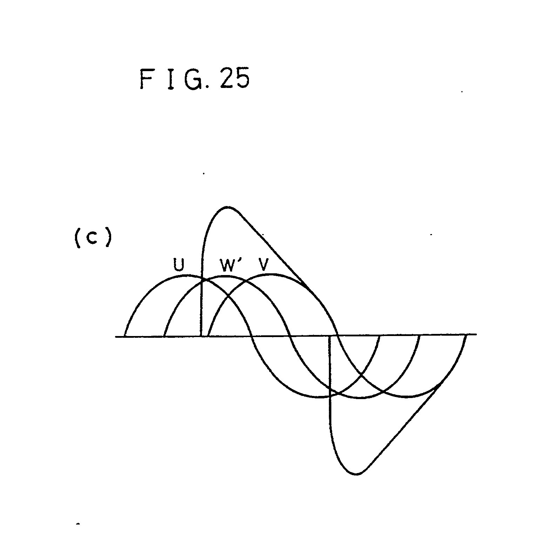

Figures 25(a) and 25(b) are diagrams illustrating a transformer of a power supply unit and an output waveform thereof in accordance with a fourteenth embodiment of the present invention. In this embodiment, the phase selecting circuits 52a and 52b select the W'-phase (2) which is opposite to the W-phase (5) in the power supply unit having the same construction as that of the tenth or eleventh embodiment similarly as in the thirteenth embodiment and the firing is controlled to be carried out only in a phase range approximately from 120° to 180°for the U-phase, from 0° to 180° for the V-phase, and from 60° to 180° for the W-phase. In this case, a sawtooth waveform current of 60 cycles having a large waveheight can be obtained as shown in figure 25(b) and the output in series or the output in parallel is superior in the spot welding.

In the above-described embodiments, the firing starts at 120° of each phase so that the welding current has a sawtooth waveform shown in figure 25(b), but when the firing starts at 100° of each phase, the sawtooth waveform current whose rising up timing is earlier and whose top portion of rising up wave is more rounded than the output of this embodiment shown in figure 25(c) can be obtained, resulting in desirable for some applications of the welding.

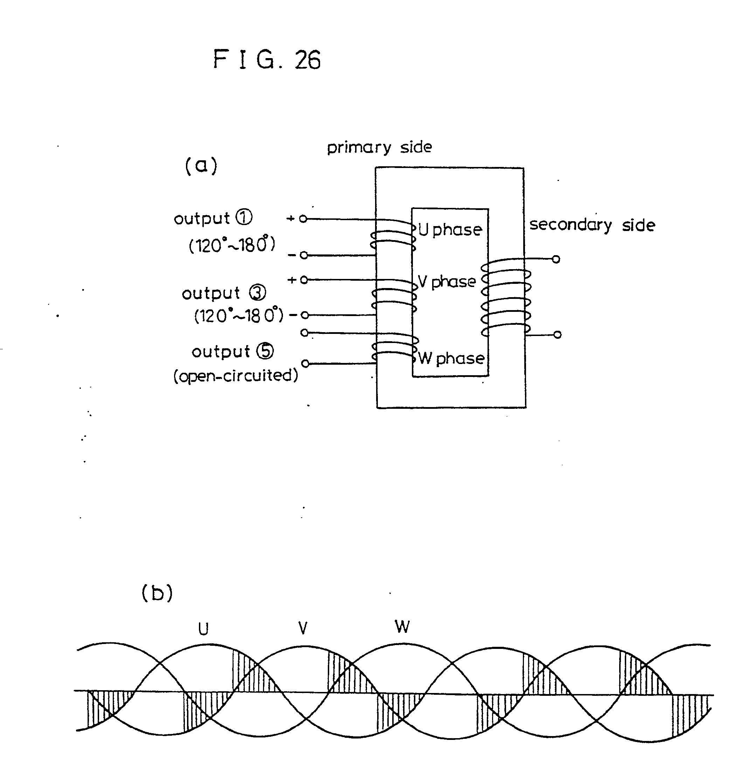

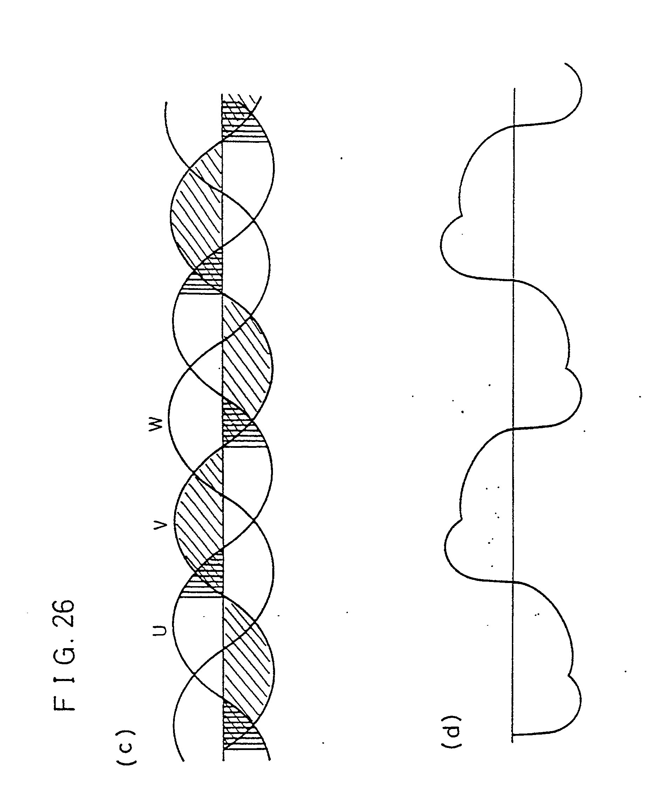

Figures 26(a) to 26(d) are diagrams illustrating a transformer of a power supply unit in accordance with a fifteenth embodiment of the present invention and an output waveform thereof. The power supply unit of this embodiment has the same construction as that of the ninth or the tenth embodiment and the phase control circuits 60a and 60b control such that the W-phase is made in open circuit state and the U-phase and V-phase are fired in a phase range approximately from 120 ° to 180°. In this embodiment, as shown in figure 26(b), a current having two sawtooth waves with a regular interval at each positive and negative side during a period, that is, a waveform comprising sawtooth waves with intermission periods at each positive and negative side can be obtained. The series output or the parallel output at the secondary sides of the transformers is advantageous in the welding of such as castings which needs to avoid rapid temperature rising.

When the firing of the U-phase is carried out in a phase range approximately from 120° to 180° and the firing of the V-phase is carried out in a phase range approximately from 0° to 180° as shown in figure 26(c), the energies of both phases are synthesized and output a pseudo sawtooth waveform current in which the energy is strong at the first transition of the waveform and becomes week little by little, shown in figure 26(d), from the outputs of respective transformers.

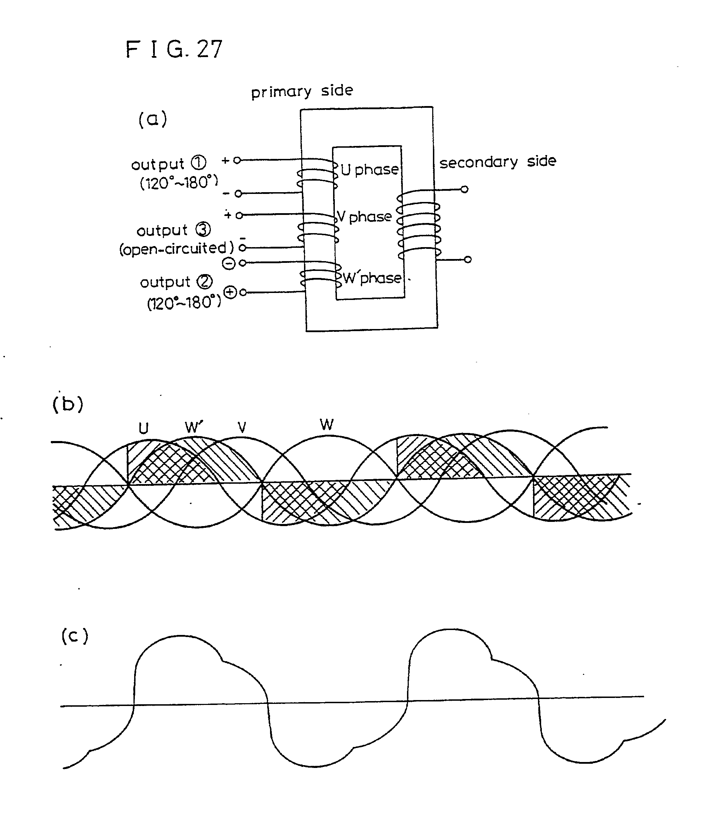

Figures 27(a) to 27(c) are diagrams illustrating a transformer of a power supply unit and an output waveform thereof in accordance with a sixteenth embodiment of the present invention. In this embodiment, the phase selecting circuits 52a and 52b are set to select the U-phase, the V - phase, and the W'-phase and the phase control circuits 60a and 60b control such that the V-phase is made in open circuit state and the U-phase and W'-phase are fired only in a phase range approximately from 60° to 180° and from 0° to 180°, respectively, in the power supply unit having the same construction as that of the ninth or tenth embodiment. In this case, a waveform having larger energy than that of the waveform of figure 26(d) is generated at the outputs of respective transformers.

In this embodiment, since an energy in the first transition of the waveform is large and increases rapidly, a series output or a parallel output at the secondary side of the transformer is favorable for the spot welding and the arc welding. Since the strength of welding increases when the series output or parallel output is employed in the welding, the welding speed can be increased and the thick material can be welded. Furthermore, the output energy can be adjusted to be at predetermined value by altering the phase range for firing.

While in the above-described thirteenth to sixteenth embodiment, the input current having three-phases which are the same phase are supplied to the primary side of each transformer, the two three-phase currents having phases opposite to each other may be supplied to solve the problem of flicker.

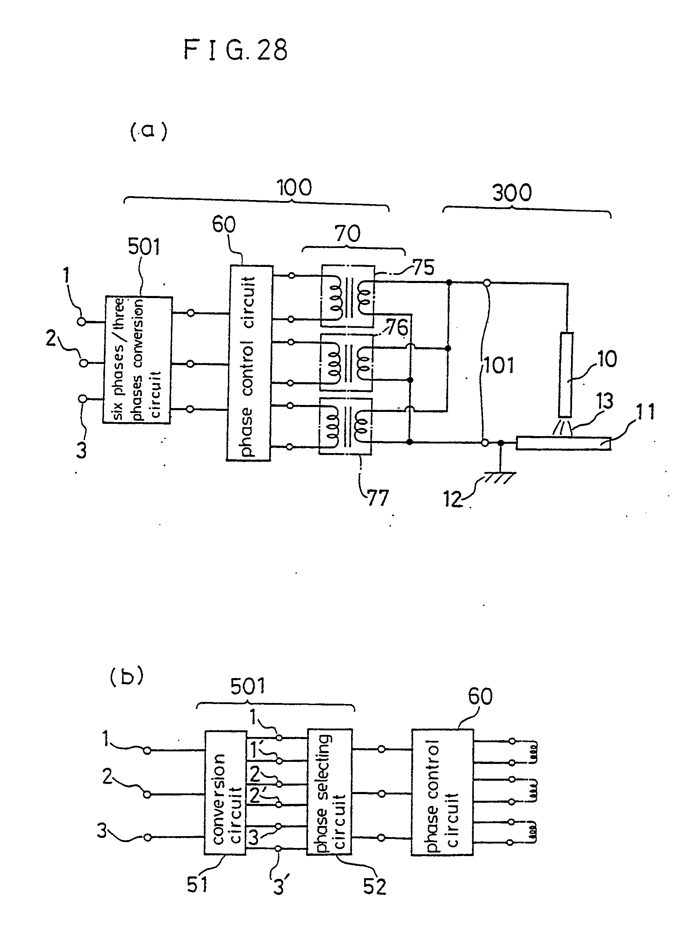

Figure 28(a) is a diagram illustrating the whole construction of an arc welding equipment included the power supply unit in accordance with a seventeenth embodiment of the present invention and figure 28(b) is a diagram illustrating the construction of a six phases/three phases conversion circuit thereof. In figures 28, a six phases/three phases conversion circuit 501 is connected with three-phase A.C. power supply terminals 1, 2, and 3 and it generates a six-phase A.C. and outputs desired three phases selected from the six phases. The six phases/three phases conversion circuit 501 is constituted by a three-phase A.C. power supply terminals as an input, a conversion circuit 51 which converts the three-phase A.C. into a six-phase A.C. having the first to third phases and the first to third negative phases, and a phase selecting circuit 52 which selects desired three outputs from six-phase outputs of the conversion circuit 51. Herein, the phase selecting circuit 52 is set to select the first to the third phases. A phase control circuit 60 is connected to the outputs of the phase selecting circuit 52 and it controls the supply of the three-phase A.C. output from the phase selecting circuit 52 to be carried out only in a phase range from 120° to 180° for each phase. A transformer part 70 is connected to the output of the phase control circuit 60 and it comprises three existing single-phase transformers 75 to 77 whose secondary side outputs are connected in common and whose primary sides are connected to the three-phase output of the six phases/three phases conversion circuit 501 via the phase control circuit 60. The welding electrode 10 connected to the secondary side common output 101 and the weldment 11 connected to the ground 12 constitute a welding part 300 which carries out the arc welding by generating arcs 13.

Since the construction of the phase control circuit 4 is the same as that of the figure 1(b), the detailed description is omitted.

The description is given of the operation.

Each phase of a three-phase A.C. is input from the three-phase A.C. power supply terminals 1,2, and 3 and converted into six phase A.C. comprising a first to third phases and a first to third negative phases by the conversion circuit 51 of the six phases/three phases conversion circuit 501 and then output to the phase selecting circuit 52. The phase selecting circuit 52 selects the first phase, the second phase, and the third phase from the six-phase outputs of the conversion circuit 51.

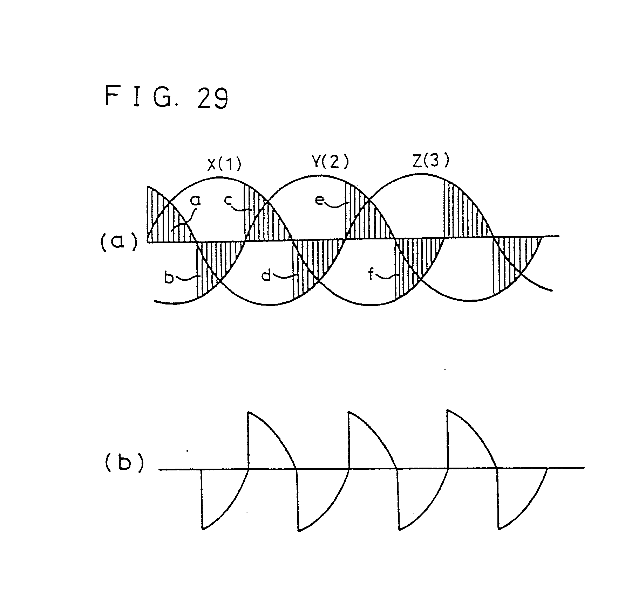

The phase control circuit 60 controls the supply of the current from the phase selecting circuit 52 to respective single-phase transformers 75 to 77 of the transformer part 70 to be carried out only in a phase range approximately from 120° to 180° for the A.C. sinusoidal waveforms X, Y, and Z shown in figure 29(a) (regions c and f of the phase X, regions b and e of the phase Y, and regions a and d of the phase Z) and makes the single-phase transformer open circuited outside of the phase range. Repeated application of the electricity to respective single-phase transformers 75 to 77 as described above outputs a sawtooth waveform A.C. of figure 29(b) having the drooping characteristics of the frequency three times as that of the input current at the common secondary side output 101. The sawtooth waveform current of the threefold frequency shown in figure 29(b) is applied to the welding electrode 10 of the welding part 300 and the arcs 13 are generated between the welding electrode 10 and the weldment 11 to carry out the arc welding. This equipment has the same effects as the above-described effects (1) to (7).

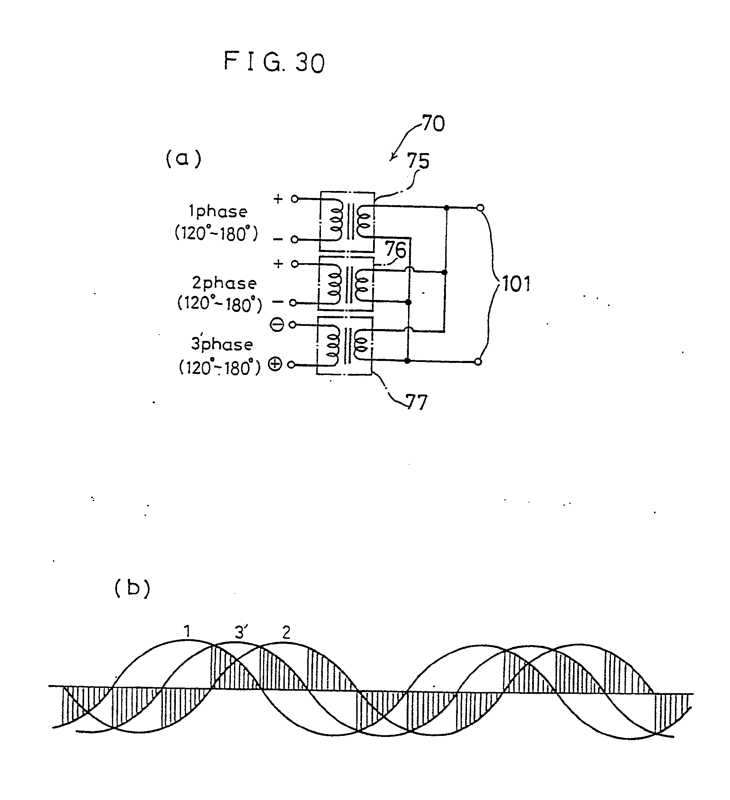

Figure 30(a) is a diagram illustrating a transformer part of a power supply unit in accordance with an eighteenth embodiment of the present invention and figure 30(b) is a diagram showing an output waveform thereof. In this embodiment, the phase selecting circuit 52 selects the third negative phase which is opposite to the third phase in the same construction as that of the seventeenth embodiment. When the firing is carried out only in a phase range approximately from 120° to 180° for respective phases similarly as the above-described seventeenth embodiment, the waveform of figure 30(b) is obtained at the secondary side output of the transformer part, that is, three sawtooth waves are obtained at each positive and negative side during a period. As a result, a single-phase output having 360 sawtooth waves a second can be produced from the three-phase A.C. of 60 cycles. Therefore, if the power supply unit is used as a power supply unit for a spot welding or a forge heating, it is advantageous because the reactance loss can be reduced and the heat energy can be increased as compared with sawtooth wave of 180 cycles. To be concrete, the welding can be realized at the position far from the transformer parts.

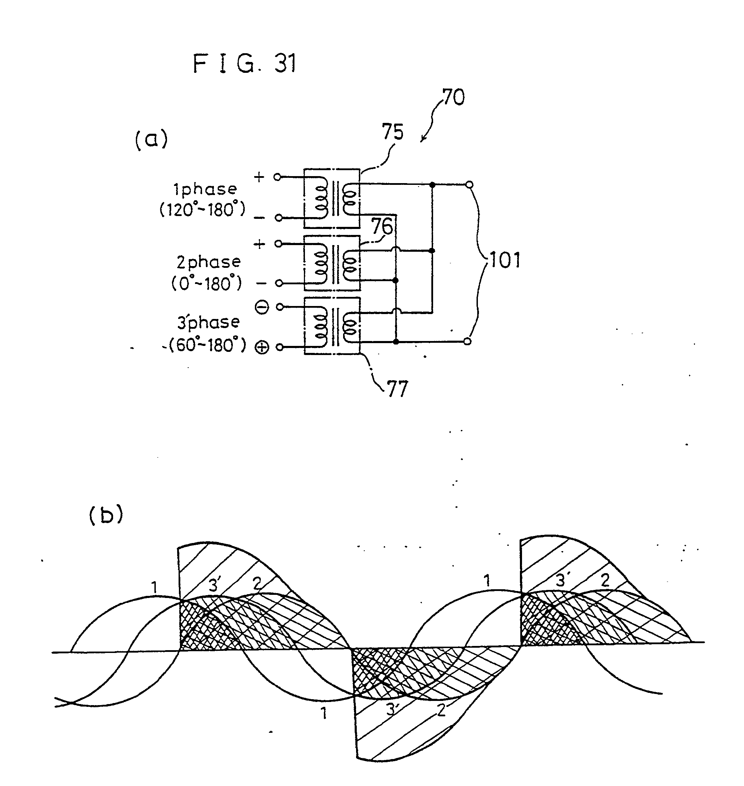

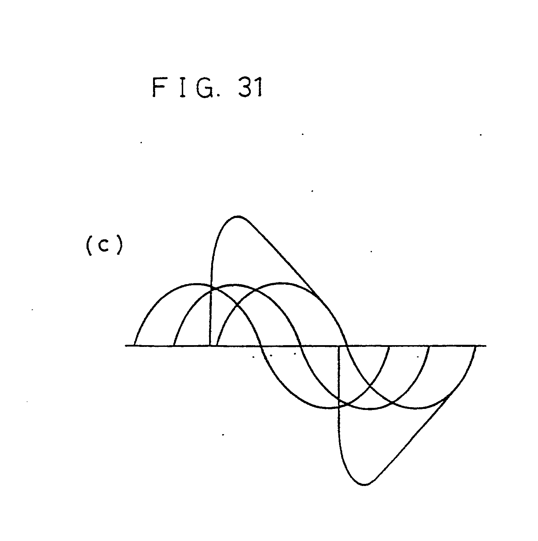

Figure 31(a) is a diagram illustrating a transformer of a power supply unit in accordance with a nineteenth embodiment of the present invention. In this embodiment, the third negative phase is selected by the phase selecting circuit 52 similarly as the eighteenth embodiment and the firing is carried out only in a phase range approximately from 120° to 180°for the first phase, from 0° to 180° for the second phase, and from 60° to 180° for the third negative phase. In this case, a sawtooth waveform current of 60 cycles having a large waveheight can be obtained as shown in figure 31(b) and the output in series or the output in parallel is favorable for spot welding.

In the above-described embodiments, the firing starts at 120 of each phase and the welding current has a sawtooth waveform shown in figure 31(b), but when the firing starts at 100 of each phase, the sawtooth waveform current shown in figure 31(c) whose rising up timing is earlier and whose top portion of rising up wave is more rounded than the output of this embodiment can be obtained, resulting in desirable for some applications of the welding.

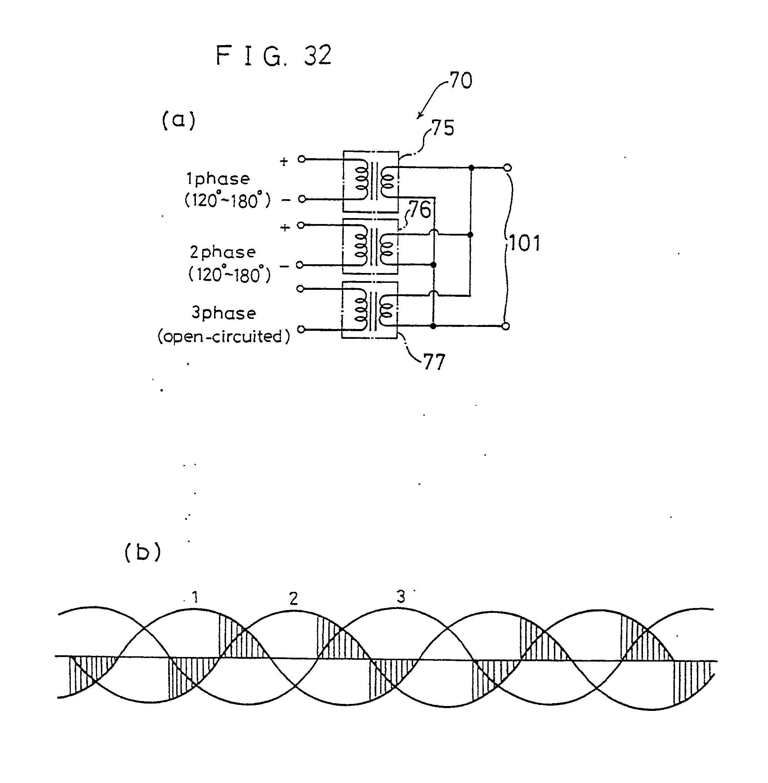

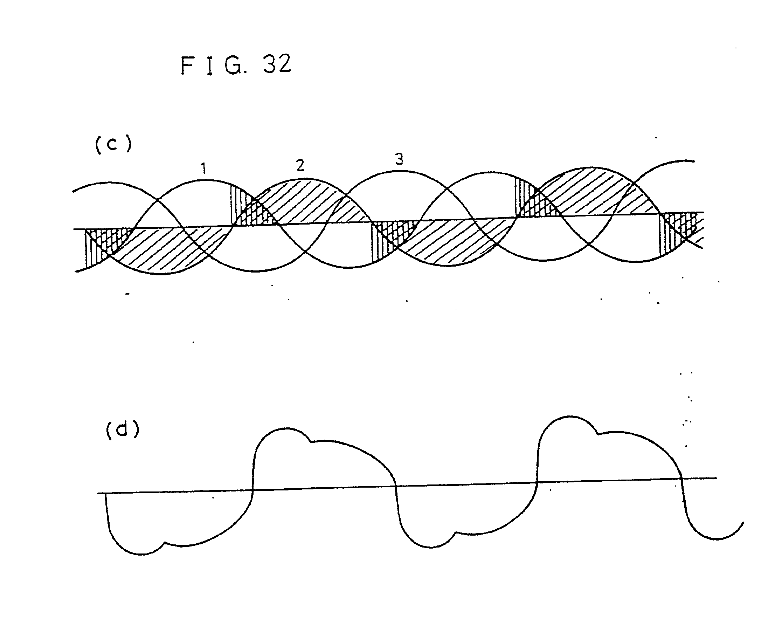

Figures 32(a) to 32(d) are diagrams illustrating a transformer of a power supply unit in accordance with the twentieth embodiment of the present invention and an output waveform thereof. In this embodiment, in the power supply unit having the same construction as that of the seventeenth embodiment, the phase control circuit 60 makes the third phase in open circuit states and the first and second phases fired in a phase range approximately from 120° to 180°. As shown in figure 32(b), the power supply unit generates a current having two sawtooth waves with a regular interval during a period at each plus and minus side, that is, a waveform comprising sawtooth waves with intermission period at each positive and negative sides can be obtained. Therefore, the series output or the parallel output at the secondary side of the transformer part is desirable for the welding of such as castings which needs to avoid rapid temperature rising.

When the firing of the first phase is carried out in a phase range approximately from 120° to 180°and the firing of the second phase is carried out in a phase range from 0° to 180° as shown in figure 32(c), the energies of both phases are synthesized and output as a current having a pseudo sawtooth waveform shown in figure 32(d) that the energy is strong at the first transition of the waveform and becomes week little by little shown in figure 32(d) from the outputs of respective transformers.

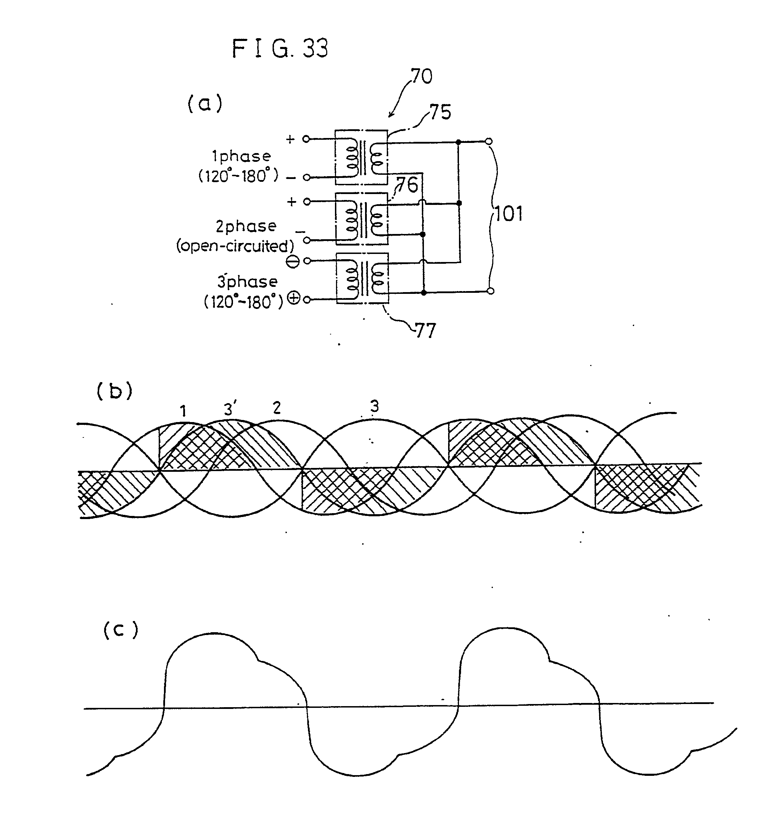

Figure 33 is a diagram illustrating a transformer of a power supply unit in accordance with a twenty first embodiment of the present invention. In this embodiment, the phase selecting circuit 52 is set to select a first phase, a second phase, and a third negative phase and the phase control circuit 60 makes the second phase open circuited and the first and third negative phases fired in a phase range approximately from 60° to 180°and from 0° to 180°, respectively. In this case, a waveform of figure 33(c) having larger energy than that of figure 32(d) can be obtained at the output of respective transformer.

In this case, since an energy at the early stage of rising up of waveform is large and the value rises up abruptly, a series output or a parallel output at the secondary side,of the transformer is favorable for a spot welding and an arc welding. Since the strength of welding increases at this time, the welding speed can be increased and the thick materials can be welded.

Furthermore, the output energy can be set to be predetermined value by altering the firing range of each phase.

In the above description, the firing is carried out until the value of the voltage of each phase reaches zero, that is, the phase becomes 180°, but the starting point as well as the finishing point of the firing can be set by a transistor at random. For example, when the current of the second phase is applied in a phase range approximately from 0 ° to 120°, the period of applying the current is shorter and the waveforms having a drooping characteristic which is more steep than the waveform of figure 31(b). Applying the current of the third negative phase in a phase range approximately from 0° to 120° in the twenty first embodiment of figure 33 results in the same thing.

A power supply unit which can obtain an output waveform in accordance with a load by dividing three phases of a three-phase A.C. input or a single-phase A.C. into some pulse waveforms having predetermined configuration by fire control and can also obtain various output waveforms by arranging the predetermined pulse waveforms of respective phases, especially, of the three-phase A.C. is described as still another embodiment.

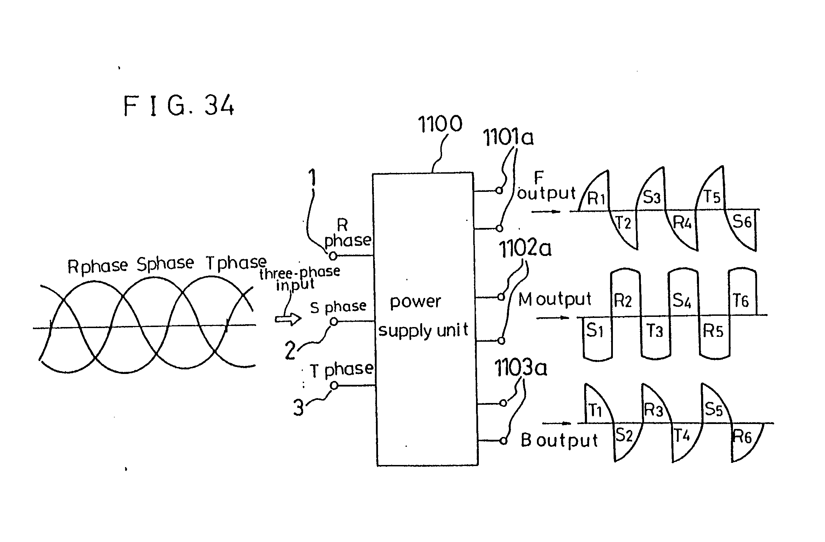

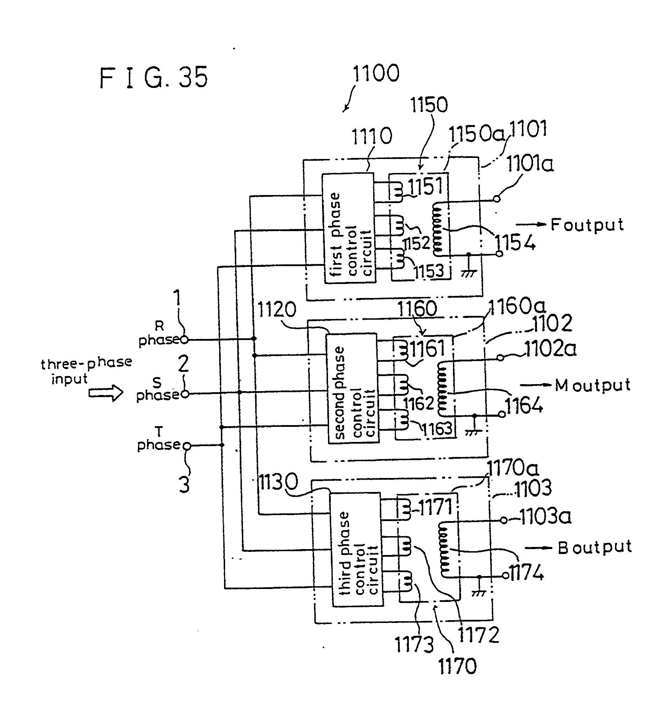

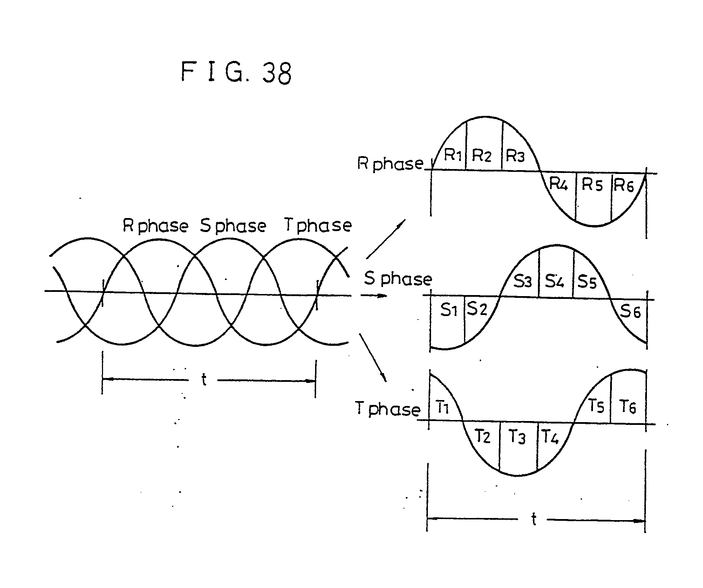

Figure 34 is a schematic diagram illustrating a power supply unit in accordance with a twenty second embodiment of the present invention, figure 35 is a diagram illustrating a circuit construction of the power supply unit of figure 35, and figure 38 is a diagram illustrating respective pulse waveforms obtained by dividing the sinusoidal waveforms of a period t of three-phase A.C. input by 60 degree of the phase angle. In these figures, reference numeral 1100 designates a power supply unit comprising input terminals 1, 2, and 3 which are connected to R-phase, S-phase, and T-phase of the three-phase A.C. input and a first to third power converting part 1101 to 1103. The first power converting part 1101 has a first phase control circuit 1110 which carries out the supply of the three-phase A.C. only in a front portion, that is, a phase range from 0° to 60° for each positive and negative half-wave of each sinusoidal waveform, and a transformer 1150 having a single-phase iron core 1150a which is winded by first to third primary coils 1151 to 1153 at a primary side and by a single-phase secondary coil 1154 at a secondary side and in which the first to third primary coils 1151 to 1153 are connected to the three-phase A.C. input terminals 1, 2, and 3 via the first phase control circuit 1110, and outputs a first single-phase A.C. (hereinafter referred to as F-output) from an output terminal 1101a.

The second power converting part 1102 has a second phase control circuit 1120 which carries out the supply of the three-phase A.C. only in a middle portion, that is, a phase range from 60 ° to 120° for each positive and negative half-wave of each sinusoidal waveform, and a transformer 1160 having a single-phase iron core 1160a which is winded by fourth to sixth coils 1161 to 1163 at a primary side and by a single-phase coil 1164 at a secondary side and in which the fourth to sixth primary coils 1161 to 1163 are connected to the three-phase A.C. input terminals 1, 2, and 3 via the second phase control circuit 1120, and outputs a second single-phase A.C. (hereinafter referred to as M-output) from an output terminal 1102a.

The third power converting part 1103 has a third phase control circuit 1130 which carries out the supply of the three-phase A.C. only in a back portion, that is, a phase range from 120° to 180° for each positive and negative half-wave of each sinusoidal waveform, and a transformer 1170 having a single-phase iron core 1170a which is winded by seventh to ninth coils 1171 to 1173 at a primary side and by a single-phase coil 1174 at a secondary side and in which the seventh to ninth primary coils 1171 to 1173 are connected to the three-phase A.C. input terminals 1, 2, and 3 via the third phase control circuit 1130, and outputs a third single-phase A.C. (hereinafter referred to as B-output) from an output terminal 1103a.

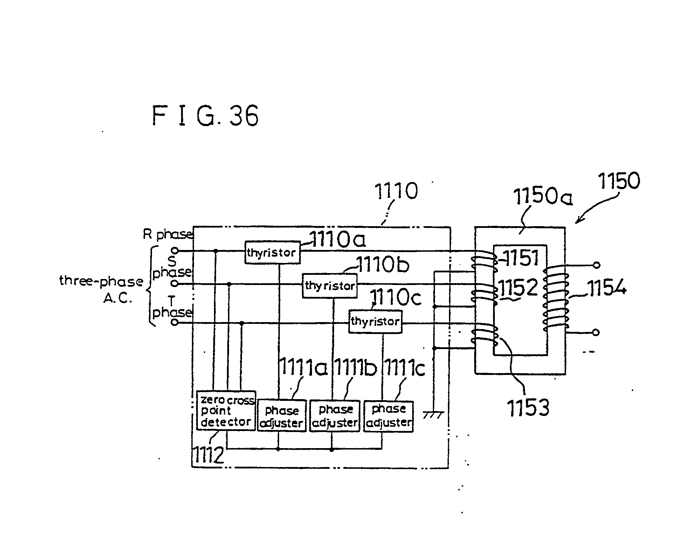

Figure 36 is a diagram illustrating a construction of the above-described phase control circuit 1110. In figure 36, thyristors 1110a to 1110c on-off control R, S, and T-phase, respectively. A zero cross point detector 1112 detects the zero cross points of respective sinusoidal waveform of the three-phase A.C. input. Phase adjusters 1111a to 1111c receive outputs from the zero cross point detector 1112 and adjust the firing angle of the thyristors 1110a to 1110c for respective phases, for example, in the first phase control circuit 1110, the phase adjusters are set such that the thyristors are fired in a phase range from 0° to 60°. Herein, only the construction of the first phase control circuit 1110 is described in detail. The second and third phase control circuits 1120 and 1130 have the same construction as that of the first phase control circuit 1110, but the firing range of thyristors of the second and third phase control circuits 1120 and 1130 are from 60° to 120°, from 120° to 180°, respectively.

A description is given of the operation.

A three-phase A.C. applied to the input terminals 1, 2, and 3 of the power supply unit 1100 is converted into the F-output, M-output, and B-output at the first to third power converting part 1101 to 1103 and output to the output terminals 1101a to 1103a.

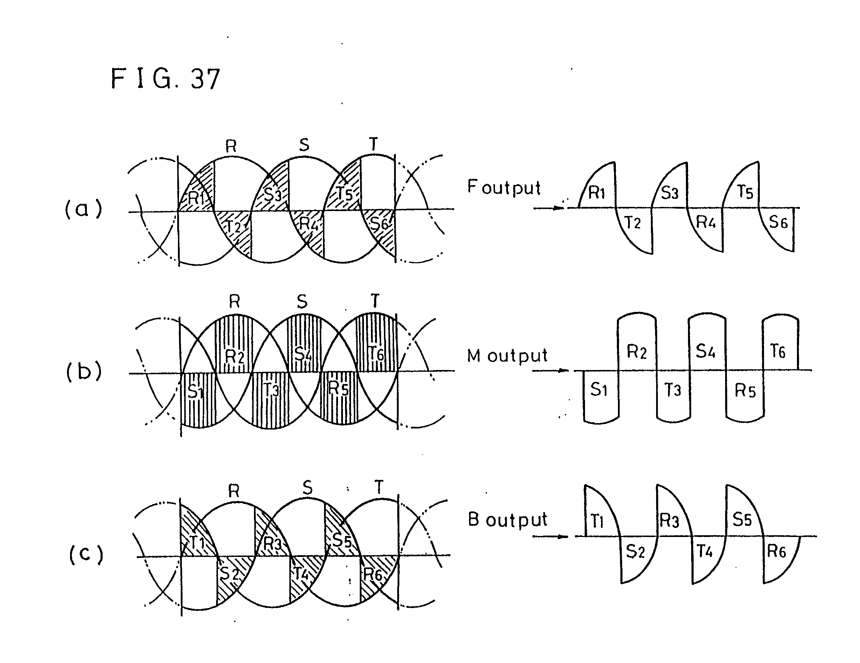

At the first power converting part 1101, the first phase control circuit 1110 controls the supply of the three-phase A.C. to the first to third primary coil 1151 to 1153 of the transformer 1150 to be carried out only in a phase range from 0° to 60° for each positive and negative half-wave for the sinusoidal waveform (regions $R_1$ and $R_4$ of the R-phase, regions $S_3$ and $S_6$ of the S-phase, and regions $T_2$ and $T_5$ of the T-phase) and makes the coils in open circuit state outside of the phase range. Repeated application of the electricity to respective coils 1151 to 1153 as described above induce in the iron core 1150a a magnetic flux having the drooping characteristics of the frequency three times as that of the input current, and further the sawtooth waveform F-output of the threefold frequency shown in figure 37(a) is also induced in the secondary coil 1154.

In the second power converting part 1102, the second phase control circuit 1120 controls the supply of the three-phase A.C. to the forth to sixth primary coils 1161 to 1163 of the transformer 1160 to be carried out only in a phase range from 60° to 120° for each positive and negative half-wave of the sinusoidal waveform (regions $R_2$ and $R_5$ of the R-phase, regions $S_1$ and $S_4$ of the S-phase, and regions $T_3$ and $T_6$ of the T-phase) and makes the coils in open circuit state outside of the phase range. Repeated application of the electricity to respective coils 1161 to 1163 as described above induce in the iron core 1160a a magnetic flux having the drooping characteristics of the frequency three times as that of the input current, and further the sawtooth waveform M-output of the threefold frequency shown in figure 37(b) is also induced in the secondary coil 1164.

In the third power converting part 1103, the first phase control circuit 1130 controls the supply of the three-phase A.C. to the seventh to ninth primary coils 1171 to 1173 of the transformer 1170 to be carried out only in a phase range from 120° to 180° for each positive and negative half-wave of the sinusoidal waveform (regions $R_3$ and $R_6$ of the R-phase, regions $S_2$ and $S_5$ of the S-phase, and regions $T_1$ and $T_4$ of the T-phase) and makes the coils in open circuit state outside of the phase range. Repeated application of the electricity to respective coils 1171 to 1173 as described above induce in the iron core 1170a a magnetic flux having the drooping characteristics of the frequency three times as that of the input current, and further the sawtooth waveform B-output of the threefold frequency shown in figure 37(c) is also induced in the secondary coil 1154.

In this embodiment, the power supply unit can output three kinds of single-phase A.C. of the threefold frequency having different waveforms, that is, having different characteristics with each other from respective power converting portions. The sawtooth waveform outputs of the threefold frequency has the following effects, respectively.

The B-output obtained by the power supply unit has the above-described effects (1) to (3) similarly as the first embodiment.

The M-output obtained by the power supply unit has a strong power, so that the use of M-output alone is suitable for the large-scaled welding and the flame spraying.

The F-output whose voltage level rises up more slowly than other outputs can be obtained by the power supply unit, whereby this is efficient for the welding in which generation of spark at voltage applying is disadvantageous, such as spot welding of thin plates.

Furthermore, respective outputs have the above-described effects (4), (5), (7), (9) and (10).

Furthermore, in case of using this power supply unit in a welding equipment, the intensity of the arc can be adjusted by a proper control of the firing angle of one phase at approximately 60° or 120 ° in the power converting portions. This fact is that the phase range can be controlled to be wider compared with the conventional way of adjusting magnetic connecting strength of the primary an secondary coils and that the the region which could not be conventionally welded can be welded by utilizing an automatic control by a computer with high stability.

In the power supply unit of this embodiment, three kinds of single-phase A.C. of the threefold frequency having different waveform with one another can be output from respective output terminals at the same time, thereby enabling to work three times as much as a single-phase power supply unit do, in particular, enabling to carry out the various types of welding in case of using multiple of electrodes.

When the above-described F-output, M-output, and B-output are applied to three electrodes generating multiple of arcs, arcs which differ in the way of generation are gathered, resulting in various arcs.

In the welding of copper which needs preheating, the B-output whose voltage level rises up abruptly is applied to the top carbon electrode, the M-power having a strong power is applied to the next welding electrode, and the R-output whose voltage level rises up slowly is applied to the last finishing electrode, and then preheating, welding, and finishing welding can be carried out at the same time by the three electrodes, thereby making it possible to carry out the welding of copper efficiently and easily.

In addition, such welding method can be applied to the welding of two materials via adhesives or the welding by using metal powder as weldment.

Since all the above-described outputs are three-phase balanced output, the unbalance between three phases can be prevented.

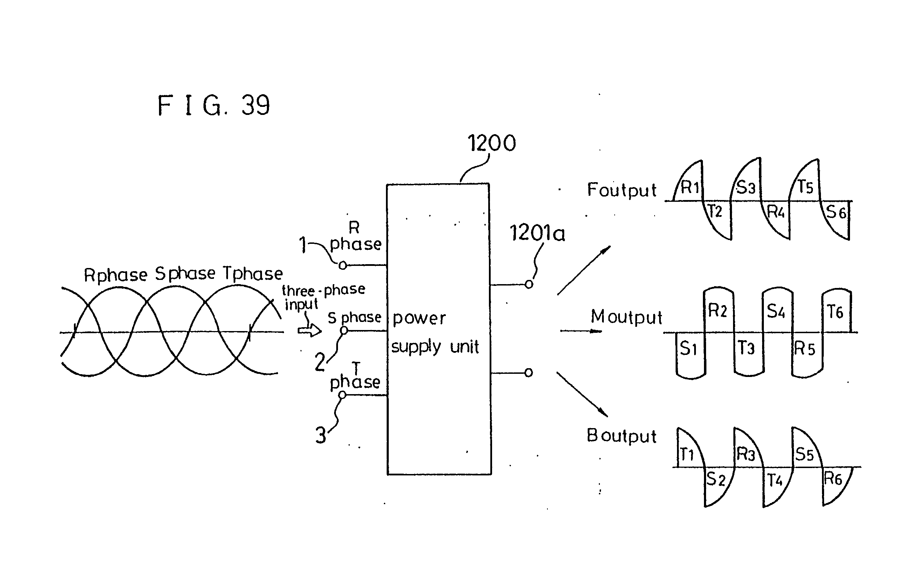

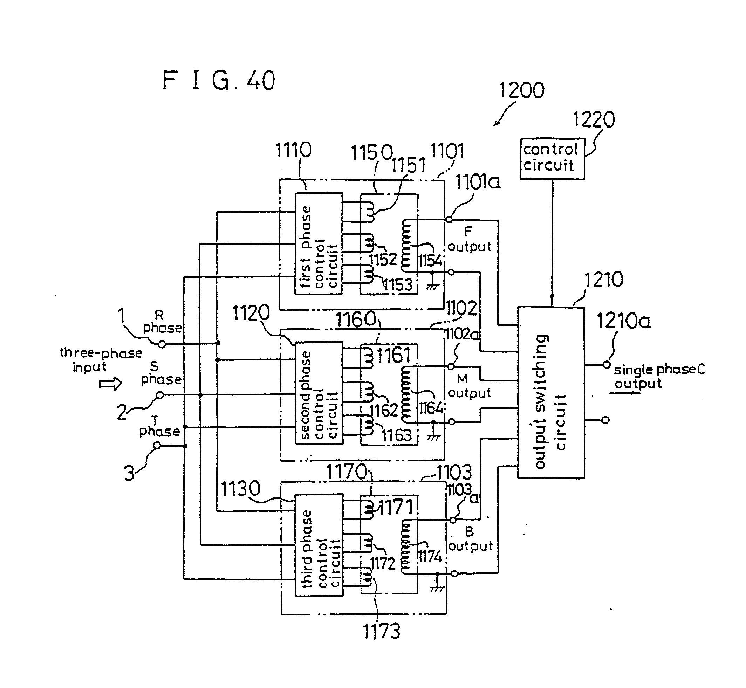

Figure 39 is a diagram illustrating a power supply unit in accordance with a twenty third embodiment of the present invention and figure 40 is a diagram illustrating a circuit construction of the power supply unit of figure 39. In this embodiment, the power supply unit of the same construction as that of the twenty second embodiment outputs one selected from the three kinds of single-phase output having different waveform, that is, F, M, and B-output from an output terminal.

As shown in figure 40, the power supply unit comprises a first to third power converting part 1101 to 1103 of the same construction as that of the above described embodiment, an output switching circuit 1210 which, connected to the power converting parts 1101 to 1103, selects one from three outputs of the power converting part, that is, F-output, M-output, or B-output and outputs it to an output terminal 1210a, a control circuit 1220 controlling switching operation of the output switching circuit 1210.

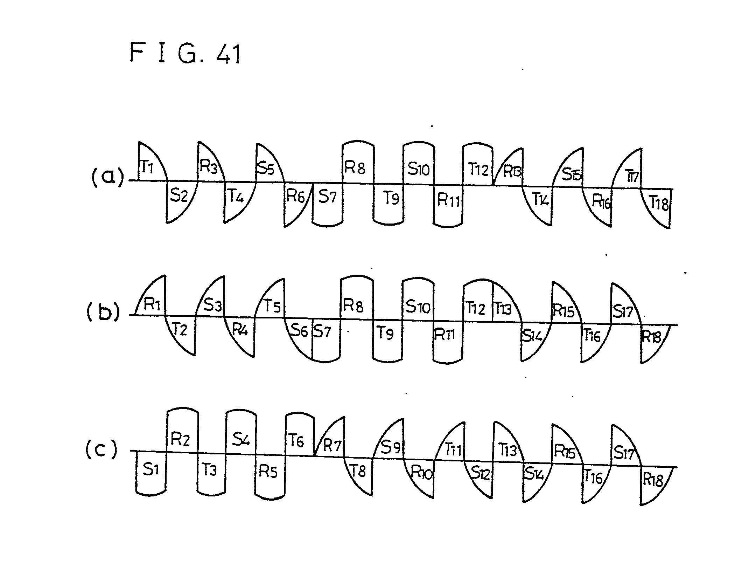

Figures 41(a) to 41(c) are diagrams illustrating waveforms of controlled output(C-output) in a case that the F-output, M-output, and B-output are switching controlled for every one period of three-phase input.

In the power supply unit having such construction, the power supply output can be selected from the three, that is, F, M, and B-output in accordance with the characteristic of the operating load, and further, when the characteristic varies according to the operating state of the load, the three outputs can be switching controlled by the controlling circuit 1220 with the varying characteristic as shown in figures 41(a) to (c), thereby enabling to enhance the efficiency of the three-phase power supply input in the load.

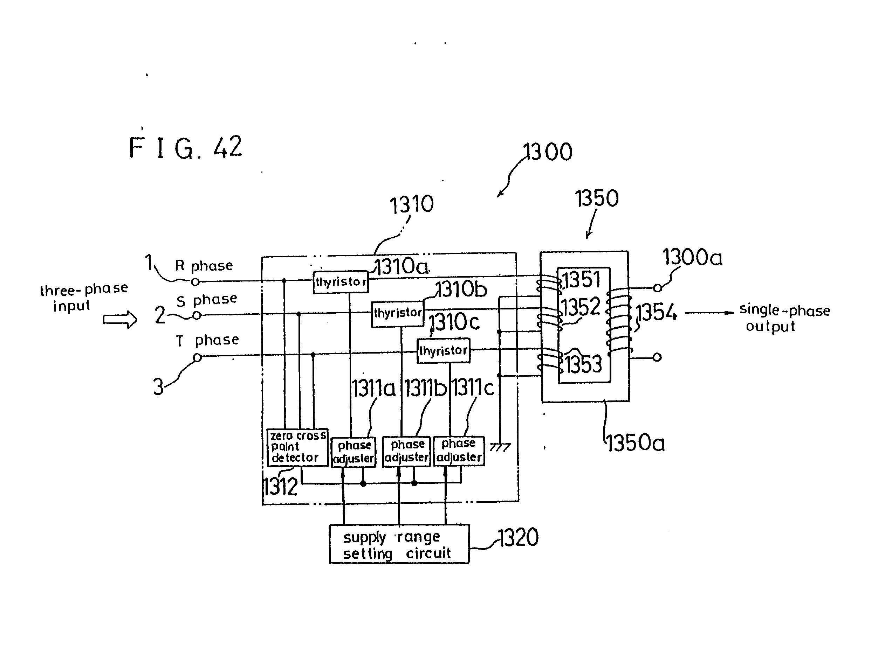

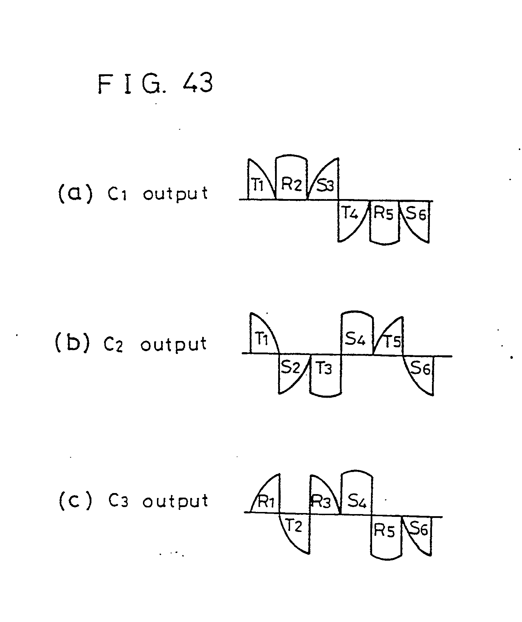

Figure 42 is a diagram illustrating a circuit construction of a power supply unit in accordance with a twenty fourth embodiment of the present invention and figure 43 is a diagram illustrating single-phase output waveforms which can be output from the power supply unit of figure 42. In figures 42 and 43, reference numeral 1300 designates a power supply unit which comprising input terminals 1, 2, and 3 connected to a three-phase A.C. power supply, a phase control circuit 1310 which carries out the supply of the three-phase A.C. only in a range from 0° to 60°, from 60° to 120°, or from 120° to 180° for each positive and negative half-wave of each sinusoidal waveform, a transformer 1350 having a single-phase iron core 1350a which is winded by first to third primary coils 1351 to 1353 at a primary side and by a single-phase secondary coil 1354 at a secondary side and in which the first to third primary coils 1351 to 1353 are connected to the R, S, and T-phase voltage of the three-phase A.C. power supply via the phase control circuit 1310, and a supply range setting circuit 1320 which sets the supply range of respective phases so as not to overlap with one another.

In the power supply unit of figure 42, thyristors 1310a to 1310c and a zero cross point detector 1312 are the same as those of figure 36, but the phase adjusters 1311a to 1311c adjust the firing angles of respective phases of the thyristors 1310a to 1310c based on not only the output of the zero cross point detector 1312 but the range setting signal of the supply range setting circuit 1320. In other words, the phase adjusters 1311a to 1311c can change the firing range of each phase according to the range setting signal.

In the power supply unit having such construction, the supply ranges of the phase adjusters 1311a to 1311c are set from 0° to 60°, from 60° to 120°, or from 120° to 180° for each positive and negative half-wave of each phase, and the F-output, M-output, or B-output is applied to the load as power supply output. In this embodiment, when the supply ranges of R-phase, S-phase, and T-phase are set from 60° to 120°, from 120° to 180°, and from 0 ° to 60°, respectively, a single-phase output($C_1$ output) shown in figure 43(a) can be obtained.

Figure 43(b) shows a waveform of a single-phase output($C_2$ output) which is obtained when the R-phase is open-circuited, the the supply range of S-phase is set from 60° to 120° for positive half-wave and from 0° to 60° and from 120° to 180° for negative half-wave, and the supply range of T-phase is set from 0° to 60° and from 120° to 180° for positive half-wave and from 60° to 120° for negative half-wave. Figure 43(c) shows a waveform of a single-phase output($C_3$ output) which is obtained when the supply range of R-phase is set from 0° to 60° and from 120° to 180° for positive half-wave and from 60° to 120° for negative half-wave, the supply range of S-phase is set from 60° to 120° for positive half-wave and from 0° to 60° for negative half-wave, and the supply range of T-phase is set from 0° to 60° of negative half-wave.

In the above-described embodiment, the supply range setting circuit 1320 is provided and the supply ranges of the phase adjusters 1311a to 1311c can be separately set by the signal from the supply range setting circuit 1320, thereby enabling to output various kinds of single-phase A.C., resulting in widen the application of the power supply unit to the load.

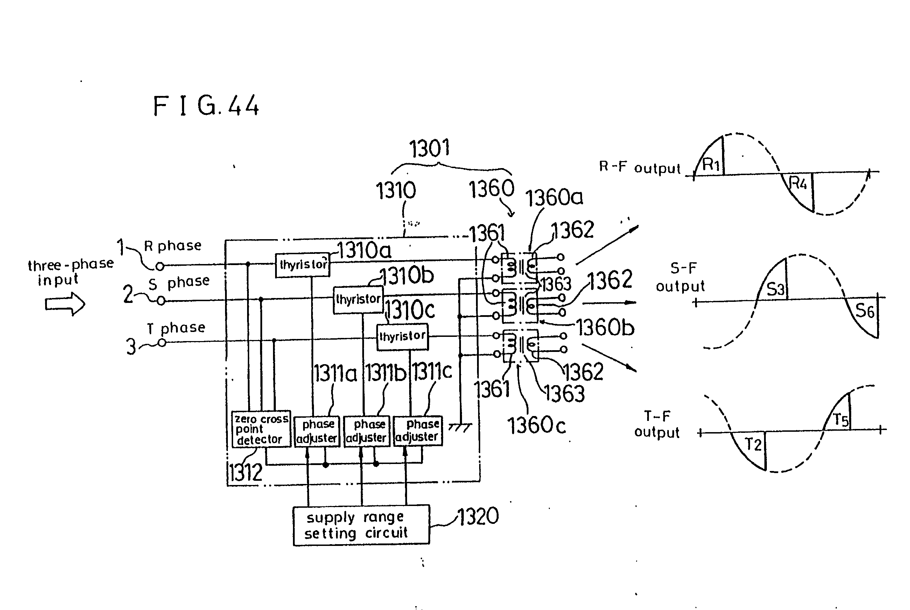

Figure 44 is a diagram illustrating a first variation of the twenty fourth embodiment. Herein, in the above-described power supply unit, a first to third transformer 1360a to 1360c comprising a single-phase iron core 1363 which is winded by a single phase-primary coil 1361 at a primary side and by a single-phase secondary coil 1362 at a secondary side are provided and the primary coils 1361 of respective transformers are connected to the R-phase, S-phase, and T-phase of three-phase A.C. via the phase control circuit 1310. The first to third transformer 1360a to 1360c constitute a transformer portion 1360, and the phase control circuit 1310 and the transformer portion 1360 constitute a power supply unit 1301.

In the power supply unit, when the supply range of each phase adjuster is set from 0° to 60° for each positive and negative half-wave of each phase, an R-F output having a 0° to 60° portion of positive or negative half-wave alternately at intervals of 180° is output to the secondary side of the first transformer 1360a, an S-F output that is phase-lagging of 120° behind the R-F output is output to the secondary side of the second transformer 1360b, and a T-F output that is phase-lagging of 240° behind the R-F output is output to the secondary side of the third transformer 1360c.

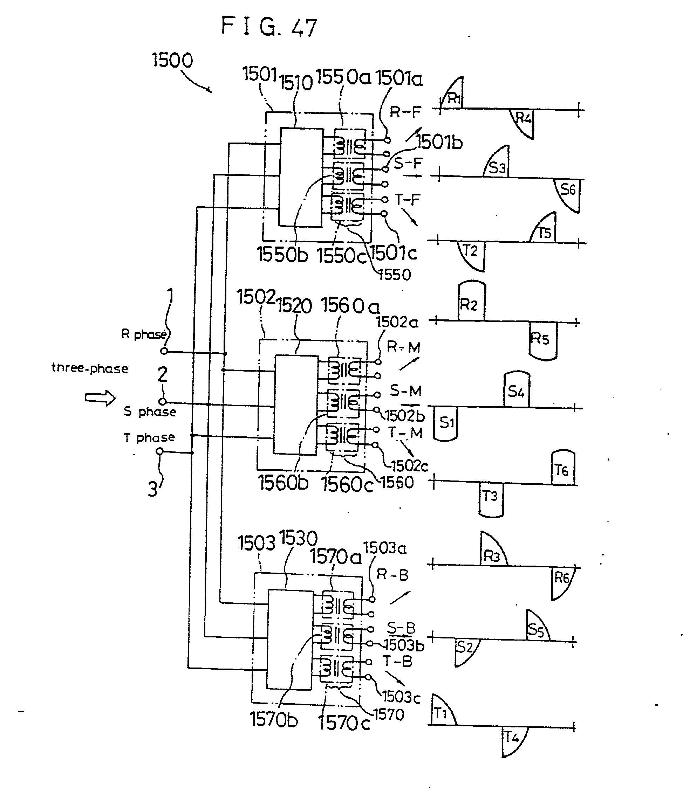

The supply range of the phase adjusters 1311a to 1311c for each positive and negative half-wave of each phase can also be set from 60 ° to 120 ° or from 120° to 180°. In this case, an R-M output or an R-B output (See figure 47) having a 60° to 120° portion or 120° to 180° portion of positive or negative half-wave alternately at intervals of 180° is output to the secondary side of the first transformer 1360a, an S-M output or S-B output which is phase-lagging of 120° behind the R-M output or the R-B output is output to the secondary side of the second transformer 1360b, and a T-M output or T-B output which is phase-lagging of 240° behind the R-M output or the R-B output is output to the secondary side of the third transformer 1360c.

The power supply output having a pulse waveform alternately at positive or negative side is favorable depending on the characteristic of the load.

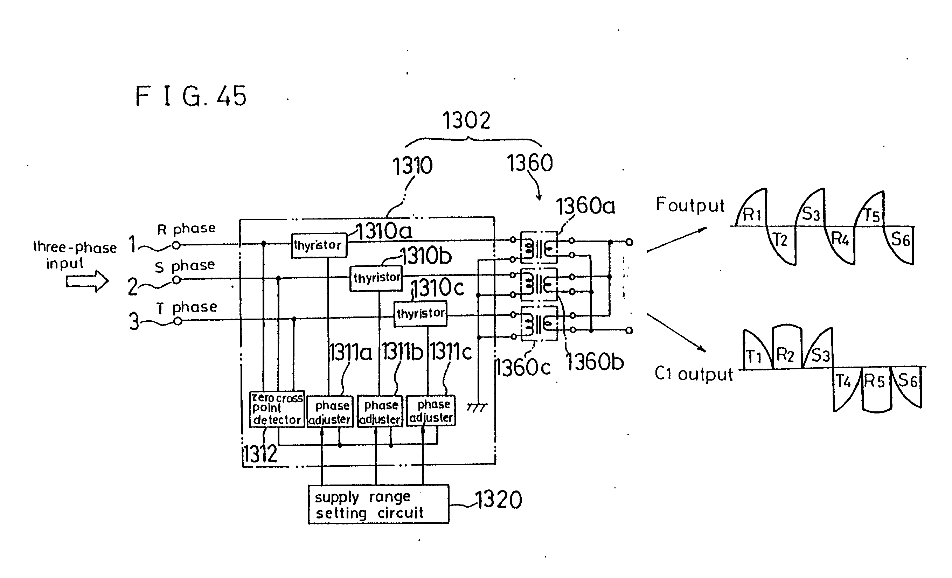

Figure 45 is a diagram illustrating a second variation of the twenty fourth embodiment. Herein, in the power supply unit of the first variation, the secondary coils 1362 of the first to third transformer 1360a to 1360c are connected in parallel.

In this case, the F-output or the $C_1$-output can be output to the secondary side common output as shown in figure 45.

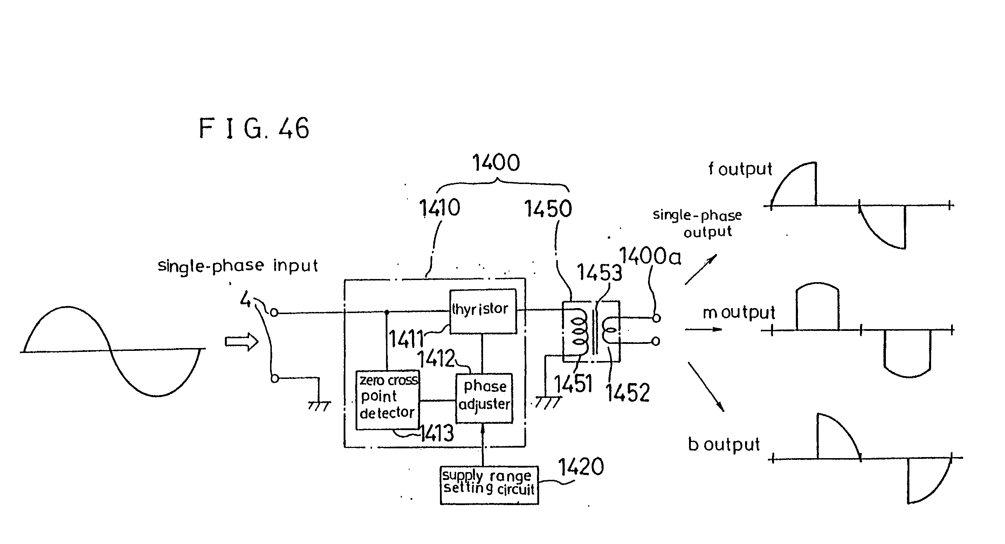

Figure 46 is a diagram illustrating a circuit construction and an operation of a power supply unit in accordance with a twenty fifth embodiment of the present invention. In figure 46, a power supply unit 1400 comprises a terminal 4 connected to a single-phase A.C. input, a phase control circuit 1410 which supplies the single-phase A.C. input in a phase range of 50%, herein from 0° to 90°, from 45° to 135°, or from 90° to 180° for each positive and negative half-wave, a transformer 1450 having a single-phase iron core 1453 which is winded by a single-phase primary and secondary coil 1451 and 1452 at a primary and secondary side, respectively, and in which the primary coil 1451 is connected to the single-phase A.C. input via the phase control circuit 1410, and a supply range setting circuit 1420 which sets the supply range to be one of the above-described three ranges.

The phase control circuit 1410 comprises a thyristor 1411 which on-off controls the single-phase A.C. input, a zero cross point detector 1413 which detects zero cross points of the sinusoidal waveform of the single-phase A.C. input, and a phase adjuster 1412 which adjusts a firing range of the thyristor 1411.

In the power supply unit having such construction, a predetermined phase range of the thyristor 1411 fired by the phase adjuster 1412 is selected from the above-described three ranges, and the single-phase A.C. input is output as f-output, m-output, or b-output as shown in figure 46. Herein, the f-output, m-output, and b-output are a single-phase output having 0° to 90° portion, 45° to 135° portion, or 90° to 180° portion, respectively, of each positive or negative half-wave alternately at intervals of 180°.

The single-phase output having such waveform is required depending on the characteristic of the load.

Figure 47 is a diagram illustrating a circuit construction of a power supply in accordance with a twenty sixth embodiment of the present invention. In figure 47, a power supply unit 1500 comprises input terminals 1, 2, and 3, a first power converting part 1501 which outputs a 0° to 60° portion of each positive or negative half-wave of three phases(R-phase, S-phase, and T-phase) from three output terminals 1501a to 1501c, respectively, a second power converting part 1502 which outputs a 60° to 120° portion of each positive or negative half-wave of the R-phase, S-phase, and T-phase from three output terminals 1502a to 1502c, respectively, and a third power converting part 1503 which outputs a 120° to 180° portion of each positive or negative half-wave of the R-phase, S-phase, and T-phase from three output terminals 1503a to 1503c, respectively.

The first power converting part 1501 is constituted by a phase control circuit 1510 having the same construction as that of the phase control circuit of figure 36 and first to third auto-transformer 1550a to 1550c in which primary coils 1551 are connected to the R-phase, S-phase, and T-phase of the three-phase A.C. input via the phase control circuit 1510. In the first power converting part 1501, the first phase control circuit 1510 is set to supply the three-phase A.C. input only in a phase range from 0 ° to 60° for each positive or negative half-wave of each phase, and the first to third auto-transformers 1550a to 1550c output the R-F output, S-F output, and T-F output, respectively.

As well, the second power converting part 1502 is constituted by second phase control circuit 1520 and fourth to sixth auto-transformer 1560a to 1560c. The third power converting part 1503 is constituted by third phase control circuit 1530 and seventh to ninth auto-transformer 1570a to 1570c. In the second power converting part 1502, the second phase control circuit 1520 is set to supply the three-phase A.C. input only in a phase range from 60° to 120° for each positive or negative half-wave of each phase, and the fourth to sixth transformers 1560a to 1560c output the R-M output, S-M output, and T-M output, respectively. In the third power converting part 1503, the third phase control circuit 1530 is set to supply the three-phase A.C. input only in a phase range from 120° to 180° for each positive or negative half-wave of each phase, and the seventh to ninth transformers 1570a to 1570c output the R-B output, S-B output, and T-B output, respectively.

A description is given of the operation.

The three-phase A.C. is applied to the input terminals 1, 2, and 3 of the power supply unit 1500, converted into three single-phase A.C. at the first to third power converting part 1501 to 1503, and then the R-F output, S-F output, T-F output are output to the secondary sides of the first to third transformer of the first power converting part 1501, the S-M output, T-M output, and R-M output are output to the secondary sides of the fourth to sixth transformer of the second power converting part 1502, and the T-B output, S-B output, and R-B output are output to the secondary sides of the seventh to ninth transformer of the third power converting part 1503.

In the above-described embodiment, the sinusoidal waveform of each R, S, and T-phase of the three-phase A.C. input is divided into three types of pulse waveform which correspond to a front portion, middle portion, and back portion of each positive and negative half-wave of each phases, with the result that nine kinds of single-phase output which differ in waveform or voltage generating timing. The nine kinds of single-phase output can be applied to multiple of input terminals of the load separately, resulting in obtaining much effect.

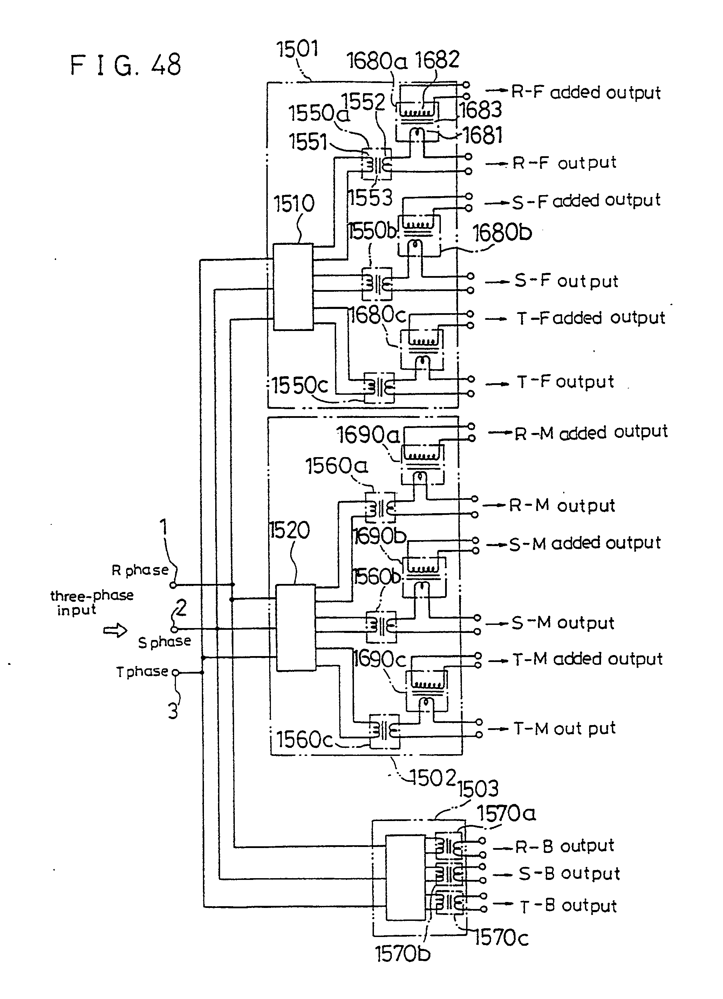

Figure 48 is a diagram illustrating a power supply unit in accordance with a twenty seventh embodiment of the present invention.

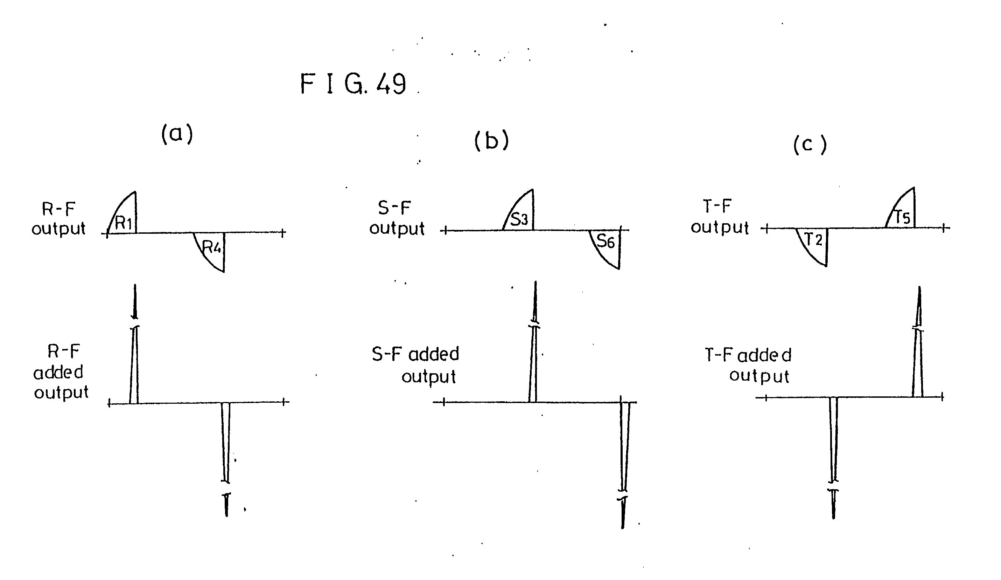

In this embodiment, as shown in figure 48, in the first power converting part 1501 of the twenty sixth embodiment, the first to third transformer 1550a to 1550c corresponding to the R, S, and T-phase of the three-phase A.C. input are provided with a first to third added transformer 1680a to 1680c which comprise an added primary coil 1681 connected in series to the secondary coil 1552 of each transformer and an added secondary coil 1682 magnetically connected to the added primary coil 1681 via a single-phase iron core 1683 and generate high voltage at the secondary side due to the sudden dropping variation of the primary side current level. At the secondary sides of the first, second, arid third added transformers 1680a to 1680c, an R-F added output, S-F added output, and T-F added output are output at the vicinity of 60° of each positive and negative half-wave of the R-phase, S-phase, and T-phase, respectively, as shown in figures 49(a) to 49(c).

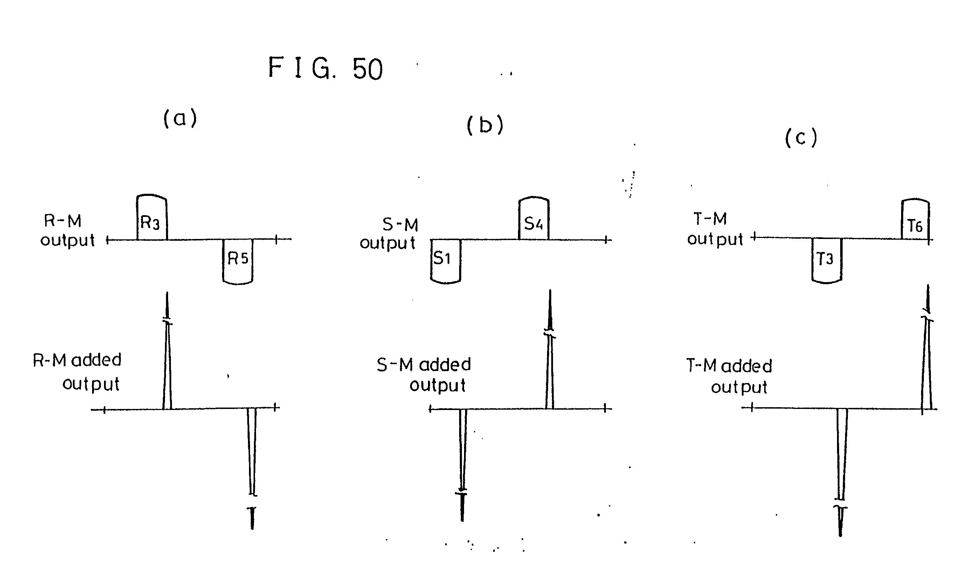

In the second power converting part 1502, the fourth to sixth transformer 1560a to 1560c have a fourth to sixth added transformer 1690a to 1690c of the same construction as that of the above-described added transformer 1680a to 1680c, and generate an R-M added output, S-M added output, and T-M added output having high voltage at the vicinity of 120° of each positive and negative half-wave of the R-phase, S-phase, and T-phase at the secondary side of the fourth to sixth added transformer 1690a to 1690c, as shown in figures 50(a) to 50(c). The third power converting part 1503 has the same construction as that of the above-described twenty sixth embodiment.

A description is given of the operation.

In this embodiment, each phase of the three-phase A.C. input is phase-controlled at the first to third power converting part 1501 to 1503 and converted into nine kinds of single-phase A.C. which differ in waveform and voltage generating timing.

In this power supply unit, at the secondary sides of the first to third added transformer 1680a to 1680c of the first power converting part 1501, the R-F added output, S-F added output, and T-F added output having high voltage are generated near the dropping timing of the R-F output, S-F output, and T-F output, as shown in figures 49(a) to 49(c), and at the secondary sides of the fourth to sixth added transformer 1690a to 1690c of the second power converting part 1502, the R-M added output, S-M added output, and T-M added output having high voltage are generated near the dropping timing of the R-M output, S-M output, and T-M output, as shown in figures 50(a) to 50(c).

In the above-described embodiment, since the added transformers 1680a to 1680c and 1690a to 1690c which generates high voltage due to sudden dropping variation of the secondary side output level of the transformer are provided in the transformers of the first and second power converting part 1501 and 1502, it becomes possible to use an energy of the three-phase A.C. efficiently by applying the high voltage to the load and to supply the power lowering at the zero cross point of the above-described nine single-phase outputs.

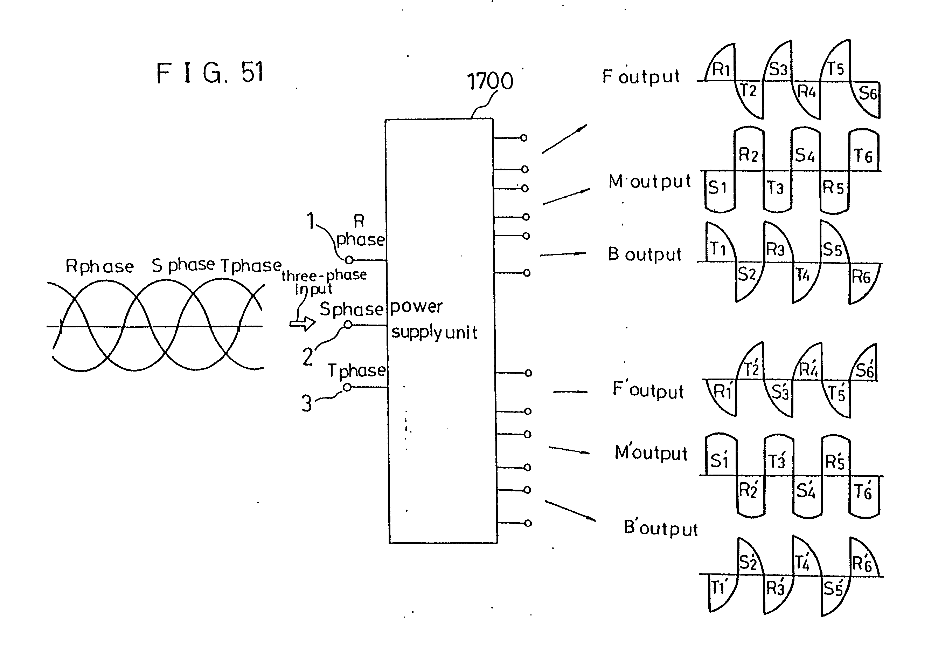

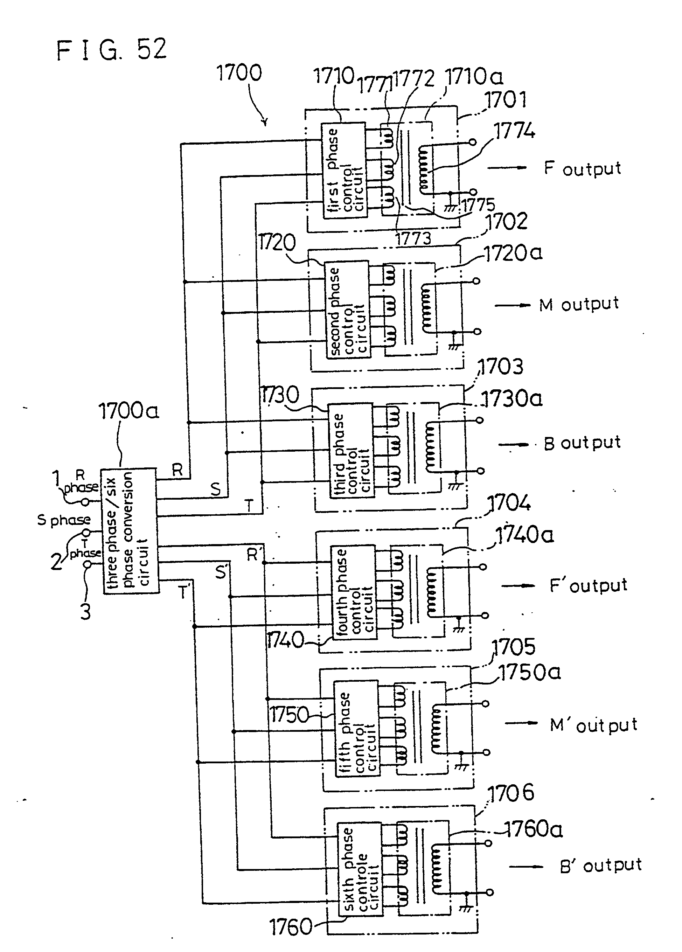

Figure 51 is a diagram illustrating a power supply unit in accordance with a twenty eighth embodiment of the present invention and figure 52 is a diagram illustrating a circuit construction of the power supply unit of figure 51. In figures 51 and 52, a power supply unit 1700 comprises a three-phase/six-phase conversion circuit 1710 which, connected to the three-phase A.C. input, converts a three-phase A.C. input having R-phase, S-phase, and T-phase into six-phase A.C. having R-phase, S-phase, and T-phase and R'-phase, S'-phase, and T'-phase which are opposite in phase to the R, S, and T-phase, a first to third power converting part 1701 to 1703 to which the R, S, and T-phase are input, and a fourth to sixth power converting part 1704 to 1706 to which the R', S', and T'-phase are input. Herein, the R, T', S, R', T, S'-phase correspond to the first to sixth phase of the six-phase A.C., respectively.

The first to third power converting part 1701 to 1703 are constituted by a fist to third phase control circuit 1710 to 1730 having the same construction as that of the phase control circuit of figure 36 and first to third transformers 1710a to 1730c and output the single-phase F-output, single-phase M-output, and single-phase B-output from the secondary side of each transformer by controlling the supplies of R, S, and T-phase to be carried out only in a phase range from 0° to 60°, from 60° to 120°, and from 120° to 180°, respectively for each positive or negative half-wave of each phase. The fourth to sixth power converting part 1704 to 1706 are constituted by a fourth to sixth phase control circuit 1740 to 1760 having the same construction as that of the phase control circuit of the first to third power converting part and fourth to sixth transformers 1740a to 1760c and output the single-phase F'-output, single-phase M'-output, and single-phase B'-output from the secondary side of each transformer by controlling the supplies of R', S', and T'-phase to be carried out only in a phase range from 0° to 60°, from 60° to 120°, and from 120° to 180°, respectively for each positive or negative half-wave of each phase. The single-phase F', M', and B'-output are opposite to that of the above-described single-phase R, S, and T-output. The transformers have a single-phase iron core 1775 which is winded by a first to third primary coils 1771 to 1773 at the primary side and by a secondary coil 1774 at the secondary side.

A description is given of the operation.

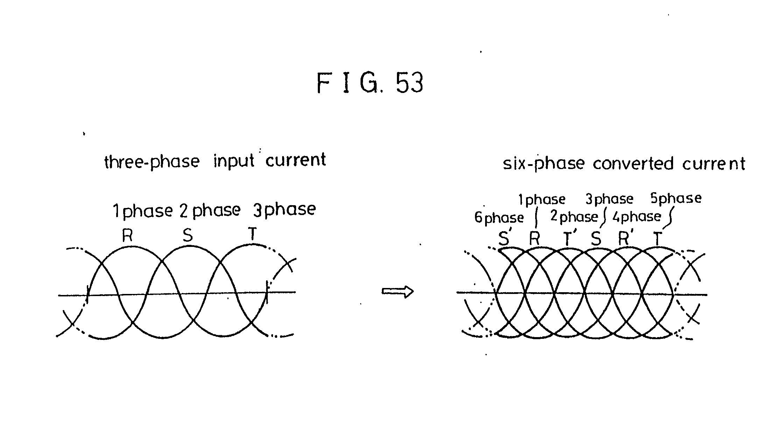

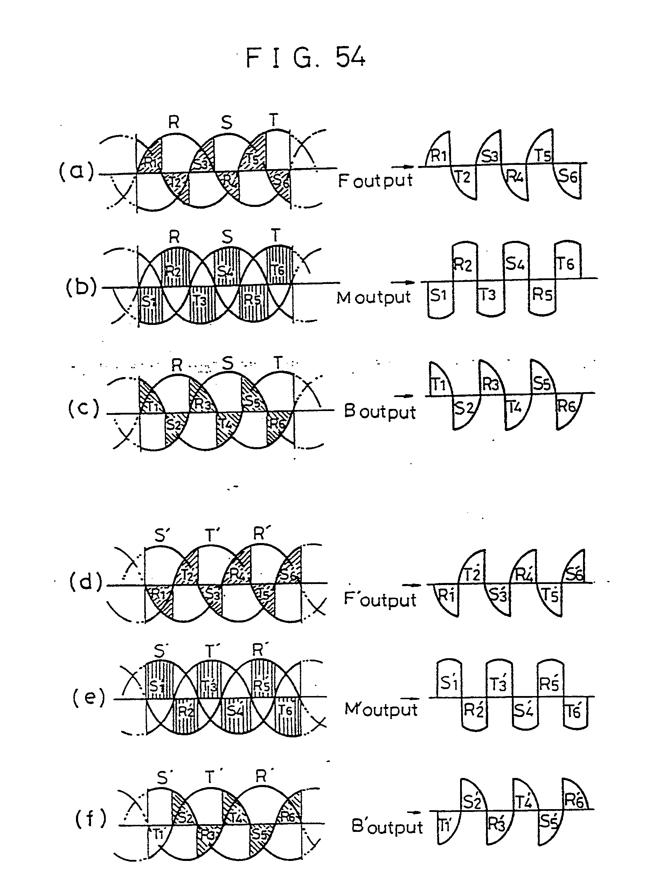

As shown in figure 53, the three-phase A.C. input is converted into the six-phase A.C. by the three-phase/six-phase conversion circuit 1700a. The R, S, and T-phase of the six phases are supplied to the first to the third power converting part 1701 to 1703 while the R', S', and T'-phase are supplied to the fourth to the sixth power converting part 1704 to 1706. The first power converting part 1701 controls the supply of the R, S, and T-phase in a phase range from 0° to 60° for each positive and negative half-wave as shown in figure 54(a), the second power converting part 1702 controls the supply of the R, S, and T-phase in a phase range from 60° to 120° for each positive and negative half-wave as shown in figure 54(b), and the third power converting part 1703 controls the supply of the R, S, and T-phase in a phase range from 120° to 180° for each positive and negative half-wave as shown in figure 54(c). In result, the power converting part 1701 to 1703 output the F-output, M-output, and B-output shown in figures 54(a) to 54(c).

The fourth to sixth power converting part 1704 to 1706 control the supply of the R', S', and T'-phase in a phase range from 0° to 60°, from 60° to 120°, and from 120° to 180°, respectively, for each positive and negative half-wave as shown in figures 54(d) to 54(f). In result, the power converting portions 1704 to 1706 output the F'-output, M'-output, and B'-output shown in figures 54(d) to 54(f).

In the power supply unit having the above-described construction, the three-phase/six-phase conversion circuit 1700a is provided to convert three-phase A.C. into six-phase A.C. and the sinusoidal waveforms of the positive three phases including the first, third, and fifth phases and the negative three phases including the second, fourth, and sixth phases of the six phases are divided into three types of pulse waveform, that is, a front, middle, and back portion of each positive and negative half-wave of respective phases and then the pulse waveforms having the same waveform are arranged by the transformer to be made single-phase A.C. of the threefold frequency, thereby obtaining a first to third single-phase A.C. of the three fold frequency having different waveform(F, M, and B-output) as well as fourth to sixth single-phase A.C. whose phases are opposite to the first to third(F', M', and B'-output) from the three-phase A.C. input.

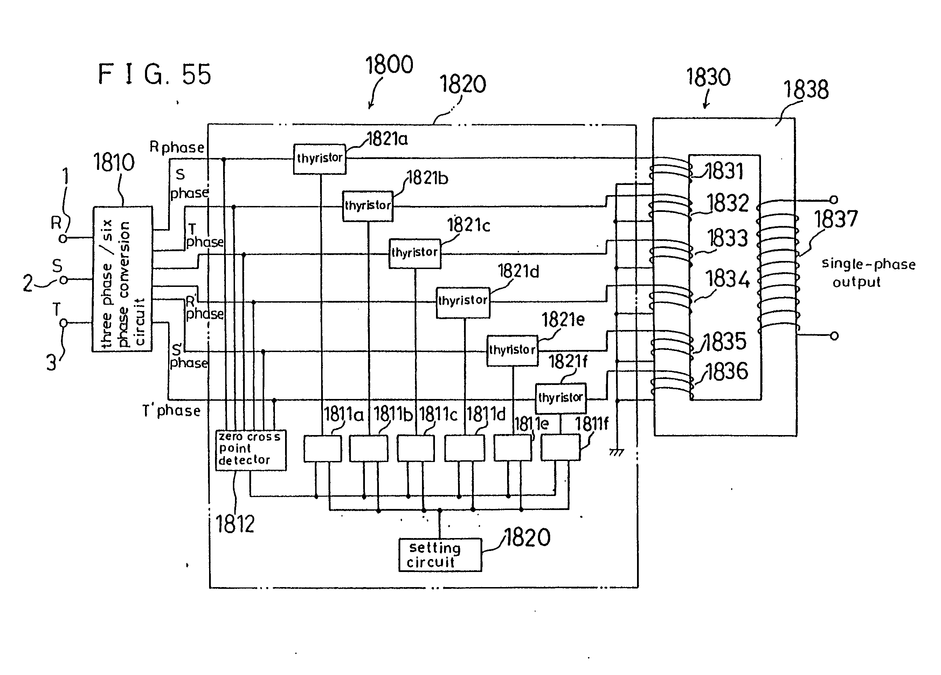

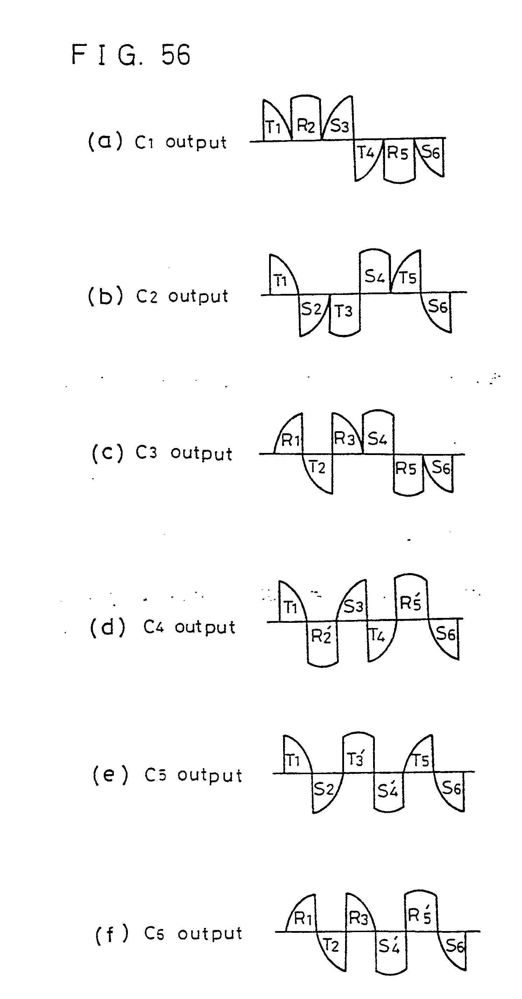

Figure 55 is a diagram illustrating a power supply unit in accordance with a twenty ninth embodiment of the present invention and figures 56(a) to 56(f) are diagrams illustrating a waveform for explaining the operation of the power supply unit of figure 55. In this embodiment, the three-phase input power supply unit of the twenty fourth embodiment shown in figure 42 is changed into a six-phase input power supply unit.

In these figures, a power supply unit 1800 comprises input terminals 1, 2, and 3 connected to the three-phase A.C. power supply, a three-phase/six-phase conversion circuit 1810 converting three-phase A.C. into six-phase A.C., a phase control circuit 1820 controlling the supply of each phase of the six- phase A.C. in a predetermined phase range, a transformer 1830 having a single-phase iron core 1838 which is winded by first to sixth primary coils 1831 to 1836 at the primary side and by a single-phase secondary coil 1837 at the secondary side in which the first to sixth primary coils 1831 to 1836 are connected to respective phase voltage of the three-phase/six-phase conversion circuit 1810 via the phase control circuit 1820.

The phase control circuit 1820 is constituted by thyristors 1821a to 1821f which carry out the firing of the first to sixth phase of the six-phase A.C., the detector 1812 which detects zero cross point of each phase of the six-phase A.C., phase adjusters 1811a to 1811f which fire the thyristors 1821a to 1821f in the predetermined range, and a setting circuit 1822 which sets the firing range for the thyristor and operation order of the phase adjuster.

In the power supply unit having such construction, the phase ranges of supplying the R, S, and T-phase by the first to third phase adjusters 1811a to 1811c for each positive and negative half-wave of each phase are set from 0° to 60°, from 60° to 120°, or from 120 ° to 180°, and the R', S', and T'-phase are made open-circuited, thereby supplying the F-output, M-output, or B-output as power supply output.

In this embodiment, the power supply unit can supply $C_1$ output, $C_2$ output, and $C_3$ output shown in figures 56(a) to 56(c) by using the R, S, and T-phase similarly as the twenty fourth embodiment. The R-phase of figure 56(a) can be replaced by the R'-phase to obtain the waveform of $C_4$ output shown in figure 56(d), the negative half-wave of the T-phase of figure 56(b) can be replaced by the positive half-wave of the T'-phase to obtain the waveform of $C_5$ output shown in figure 56(e), and the negative half-wave of R-phase and the positive half-wave of S-phase can be replaced by the positive half-wave of R'-phase and the negative half-wave of S'-phase to obtain the waveform of $C_6$ output shown in figure 56(f).

In the above-described embodiment, the setting circuit 1822 is provided and the phase adjusters can set the firing range for each phase by signals from the circuit, thereby enabling to output various kinds of single-phase A.C. having different waveforms as power supply output, resulting in widening the application of the power supply unit to the load.

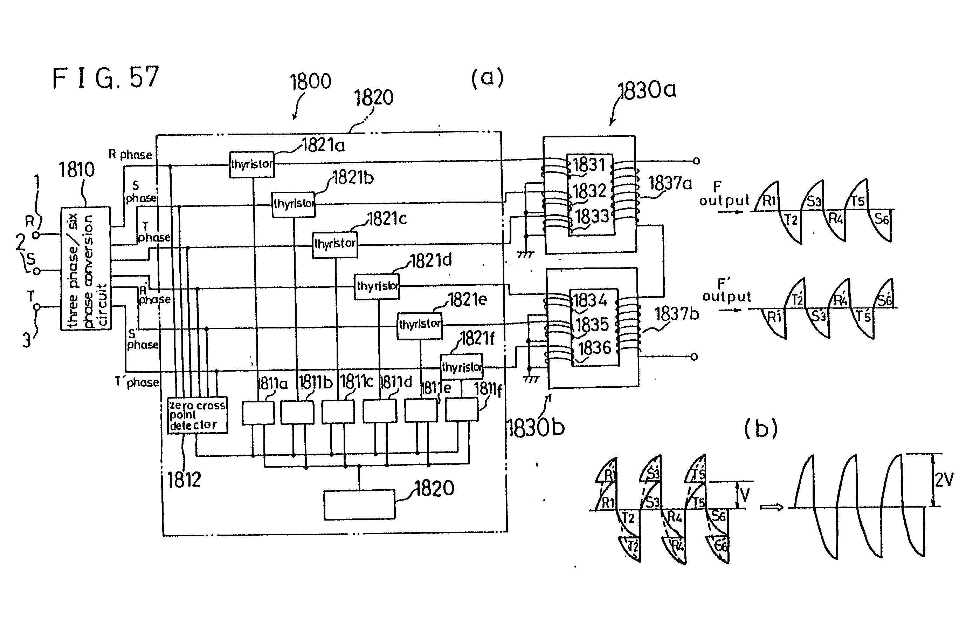

Figure 57(a) is a diagram illustrating a variation of the twenty ninth embodiment. Herein, a first transformer 1830a having a first single-phase iron core which is winded by first to third primary coils 1831 to 1833 at the primary side and by a single-phase secondary coil 1837a at the secondary side and a second transformer 1830b having a second single-phase iron core which is winded by fourth to sixth primary coils 1834 to 1836 at the primary side and by a single-phase secondary coil 1837b at the secondary side are employed instead of the transformer 1830 in which first to sixth primary coils are winded to the primary side of the single-phase iron core. The secondary side of the first and second transformer are connected in series.

In the power supply unit having such construction, two single-phase output which has the same waveform and opposite phases to each other, for example, F-output and F'-output, can output to the secondary coils of respective transformers, resulting in obtaining doubled voltage output.

As is evident from the foregoing description, according to the invention, a power supply unit comprises three terminals connected to the three phase A.C. power supply, a phase control circuit controlling the supply of a three-phase A.C. to be carried out only in a phase range, for example, from about 120° to 180° for respective phases, and a transformer having an iron core which is winded by first to third primary coils at the primary side and a secondary coil at the secondary side and in which the three primary coils are connected to the three-phase A.C. power supply via the phase control circuit. The power supply unit having such construction outputs a single-phase A.C. Therefore, a sawtooth current having the frequency three times as that of the input current generates, a small-sized, lightweight, high efficiency power supply unit can be provided. In addition, an arc welding and a spot welding is carried out using the power supply unit which outputs the sawtooth waveform of the threefold frequency, thereby realizing a small-sized and lightweight welding equipment with good efficiency.

According to the present invention, since an auto-transformer comprises an iron core which is winded by first to third primary coils at the primary side and outputs the secondary side outputs taken out from the intermediate points of the primary coils, the power supply unit can be miniaturized. In addition, in a case where the power supply unit is mounted on the multi-arc welding equipment, the size of the whole equipment can be reduced. Furthermore, since the sawtooth waveform current of the frequency three times as that of the input current is obtained by controlling the phase firing angle of the three-phase input current, the strength and stability of the multi-arc welding can be increased.

According to the present invention, a power supply unit comprises a six phases/three phases conversion circuit which, connected to a three-phase power supply, generates a six-phase A.C., and outputs a first and a second three phase A.C. having desired three phases of the six, a first and a second phase control circuits controlling the supply of the first and the second three-phase A.C. to be carried out only in a phase range approximately from 120° to 180° for each phase, and a first and a second transformer comprising an iron core which is winded by first to third primary coils at the primary side and single-phase secondary coils at the secondary side and in which the first to third primary coils are connected to the first and the second three-phase output via the first and the second phase control circuit and the secondary coils are commonly connected in parallel or in series. This power supply unit thus constituted outputs a single-phase A.C. from the common output of the secondary coils. Therefore, a sawtooth current having the frequency three times as that of the input current can be obtained and the problem of unbalance between three phases can be avoided, thereby providing a high efficiency power supply unit. In addition, since the secondary coils of the transformer are connected in parallel or in series, the output current or output voltage can be increased, resulting in enhancing the output power of the power supply unit. Furthermore, respective primary sides of the two transformers are supplied with current having three phases opposite to each other, thereby preventing the problem of flicker.

According to the present invention, a power supply unit comprises a six phases/three phases conversion circuit which, connected to the three-phase power supply, generates a six-phase A.C. and outputs desired three phase A.C. selected from the six-phase A.C., a phase control circuit controlling the supply of the three-phase A.C. to be carried out only in a phase range from about 120° to 180°, and a transformer part comprising three single-phase transformers in which the secondary side outputs are connected in common and primary sides are connected to the three-phase output of the six phases/three phases conversion circuit via the phase control circuit, and the unit outputs a single-phase A.C. to the common output of the single-phase transformers. Therefore, a sawtooth waveform current having the frequency three times as that of the input A.C. is obtained at the output, thereby enabling to obtain high efficiency power supply unit that occurs no unbalance between three phases.

According to the present invention, a power supply unit comprises three input terminals connected to a three-phase A.C. power supply, a first power converting part converting the three phase A.C. input into a first single-phase A.C. comprising 0° to 60° portions of each positive and negative half-wave of the three phases, a second power converting part converting the three phase A.C. into a second single-phase A.C. comprising 60° to 120° portions of each positive and negative half-wave of the three phases, and a third power converting part converting the three-phase A.C. into a single-phase A.C. comprising 120° to 180° portions of each positive and negative half-wave of the three phases. Therefore, the three kinds of single-phase A.C. can be used in accordance with the characteristic of the load such as a motor, resulting in enhancing the power efficiency of the load. In addition, if the single-phase outputs from the first to third power converting part are used at the same time, the load employed the power supply of the present invention can work three times as much as the conventional one employed a single-phase power supply.

According to the present invention, a power supply unit comprises a phase control circuit which can supply a three-phase A.C. input in a phase range from 0° to 60°, from 60° to 120°, or from 120° to 180° for each positive and negative half-wave of the three phases, and the supply ranges of respective phases by the phase control circuit are set so as not to overlap one another. Therefore, the respective phases of the sinusoidal waveform three-phase A.C. input can be divided into front portion, middle portion, and back portion pulse waveforms of each positive and negative half-wave, and further these pulse waveforms can be arranged in desired order and output as a single-phase A.C. This makes it possible to control the waveform finely.

According to the present invention, a power supply unit comprises a phase control circuit which supplies a single-phase A.C. input in a predetermined phase range of 50% of phase angle for each positive and negative half-wave and outputs a phase controlled output thereof via an auto-transformer. Therefore, predetermined portions of each positive and negative half-wave of the sinusoidal waveform single-phase A.C. input can be output as a dispersed pulse waveform, resulting in desirable for some applications.

According to the present invention, a power supply unit comprises three input terminals connected to a three-phase A.C. power supply, a first power converting part which outputs respective phases of the three-phase A.C. input separately in a phase range from 0° to 60° for each positive and negative half-wave, a second power converting part which outputs respective phases of the three-phase A.C. input separately in a phase range from 60° to 120° for each positive and negative half-wave, and a third power converting part which outputs respective phases of the three-phase A.C. input separately in a phase range from 120° to 180° for each positive and negative half-wave. Therefore, the first, second, and third phase sinusoidal waveform of the three-phase A.C. input can be divided into a front portion, middle portion, and rear portion pulse waveforms of each positive and negative half-wave, respectively, resulting in obtaining nine kinds of single-phase output whose waveforms and voltage generation timings are different with one another. Furthermore, this nine kinds of single-phase outputs are supplied separately to multiple of input terminals of the load, thereby obtaining more effect.

According to the present invention, the transformers of the above-described first and second power converting parts are provided with added transformers which generates high voltage due to the sudden drop of the secondary side output level of the transformers. Therefore, the application of the high voltage to the load enables to use a three-phase A.C. effectively and to supply a power lowering in the vicinity of zero cross points of the nine single-phase outputs.

According to the present invention, a power supply unit comprises a three-phase/six-phase conversion circuit converting three-phase A.C. into six-phase A.C. to convert three positive phases of the first, third, and fifth phase and three negative phases of the second, fourth, and sixth phase into the first, second, and third single-phase A.C. and the first, second, and third single-negative phase A.C. which comprise 0° to 60°, 60° to 120°, or 120° to 180° portions of each positive and negative half-wave of the first to third or the fourth to sixth phases, respectively. Therefore, the first to third single-phase A.C. having frequency three times as that of the input as well as the first to third single-negative phase A.C. having opposite phases to respective first to third phases can be obtained from a single-phase A.C. input.

According to the present invention, a power supply unit comprises a three-phase/six-phase conversion circuit converting a three-phase A.C. into a six-phase A.C., a phase control circuit supplying respective phases of the six-phase A.C. in a phase range from 0° to 60 °, from 60° to 120°, or from 120° to 180° for each positive and negative half-wave, a supply range setting means setting the supply range of respective phases, and it outputs respective phase voltages via a transformer having first to sixth primary coils and single-phase secondary coil. Therefore, respective phases of the sinusoidal waveform six-phase A.C. can be divided into the front portion, middle portion, and back portion pulse waveforms of each positive and negative half-waves, the three kinds of pulse waveforms can be arranged in desired order, resulting in a single-phase A.C. having frequency three times as that of the input or a single-negative phase A.C. having a opposite phase to the single-phase A.C.

## Claims

1. A power supply unit 100 comprising:

   three input terminals 1, 2, and 3 connected to a three-phase A.C. power supply;

   a phase control circuit 4 controlling the firing of the three-phase A.C. for each phase;

   a transformer 9 comprising a single-phase iron core which is winded by first to third primary coils 5, 6, and 7 at the primary side and by a single-phase secondary coil 8 at a secondary side and in which said first to third phase primary coils 5, 6 and 7 are connected to said three-phase A.C. power supply via said phase control circuit 4; and

   an output terminal outputting a single-phase A.C.

2. A power supply unit 100 comprising:

   a three-phase A.C. power supply 1, 2, and 3;

   a phase control circuit 4 controlling the supply of a three-phase A.C. to be carried out in a phase range approximately from 100° to 180° of the positive and negative half-waves of each phase;

   a transformer 50 in which a first to third primary coils 5, 6, and 7 are winded to a single-phase iron core at a primary side and connected to said three-phase A.C. power supply via said phase control circuit, and an secondary output is taken out from the intermediate-point of respective primary coils 5, 6, and 7; and

   an output terminal outputting a single-phase A.C.

3. A power supply unit 100 comprising:

   a three-phase A.C. power supply 1, 2, and 3;

   a six phases/three phases conversion circuit 500 which, connected to said three-phase A.C. power supply 1, 2, and 3, converts a three-phase A.C. into a six-phase A.C. and outputs a first and a second three-phase A.C. having desired three phases of the six, respectively;

   a first and a second phase control circuits 60a and 60b controlling the firing of said first and said second three-phase outputs for each phase;

   a first and a second transformers 70 and 80 comprising a single-phase iron core which is winded by a first to third primary coils 71 to 73 and 81 to 83 at a primary side and by a single phase secondary coil 74 and 84 at a secondary side and in which said first to third primary coils 71 to 73 and 81 to 83 are connected to said first and said second three-phase outputs via said first and said second phase control circuit 60a and 60b and end portions of said secondary coils 74 and 84 are connected in common; and

an output terminal outputting a single-phase A.C.

4. A power supply unit 100 comprising:

A three-phase A.C. power supply 1, 2, and 3;

a six phases/three phases conversion circuit 501 which connected to said three-phase A.C. power supply 1, 2, and 3, generates a six-phase A.C., and outputs desired three phases of said six-phase A.C.;

a phase control circuit 60 controlling the firing of said three-phase outputs of said six phases/three phases conversion circuit 501 for rspective phases;

a transformer 70 comprising three single-phase transformers 75, 76, and 77 in which secondary outputs are connected in common and primary sides are connected to said three-phase output of said six phases/three phases conversion circuit 501 via said phase control circuit; and

said common output of said three single-phase transformers 75, 76, and 77 which outputs a single-phase A.C.

5. A power supply unit 1100 comprising:

three input terminals 1, 2, and 3 connected to a three-phase A.C. power supply;

a first power converting part 1101 outputting a first single-phase A.C., comprising:

a first phase control circuit 1110 controlling the supply of a three-phase A.C. input to be carried out in a phase range approximately from 0° to 60° for the positive and negative half-waves of each phase; and

a first transformer 1150 having a single-phase iron core 1150a which is winded by a first to third primary coils 1151, 1152 and 1153 at a primary side and by a single-phase secondary coil 1154 at a secondary side and in which said first to third primary coils 1151, 1152, and 1153 are connected to said three-phase A.C. power supply via said first phase control circuit 1110;

a second power converting part 1102 outputting a second single-phase A.C., comprising:

a second phase control circuit 1120 controlling the supply of a three-phase A.C. input to be carried out in a phase range about from 60° to 120° for the positive and negative half-waves of each phase; and

a second transformer 1160 having a single-phase iron core 1160a of the same construction as that of said first transformer 1150, in which fourth to sixth phase primary coils 1161, 1162, and 1163 are connected to said three-phase A.C. power supply via said second phase control circuit 1120; and

a third power converting part 1170 outputting a third single-phase A.C., comprising:

a third phase control circuit 1130 controlling the supply of a three-phase A.C. to be carried out in a phase range about from 120° to 180° for the positive and negative half-waves of each phase; and

a third transformer 1170 having a single-phase iron core 1170a of the same construction as that of said first transformer 1150, in which seventh to ninth phase primary coils 1171, 1172, and 1173 are connected to said three-phase A.C. power supply via said third phase control circuit 1130.

6. A power supply unit 1300 comprising:

three input terminals 1, 2, and 3 connected to a three-phase A.C. power supply;

a phase control circuit 1310 which supplies a three-phase A.C. input in a phase range from 0° to 60°, from 60° to 120° or from 120° to 180° for the positive and negative half-waves of each phase;

a transformer 1350 having a single-phase iron core 1350a which is winded by a first to third primary coils 1351, 1352, and 1353 at a primary side and a secondary single-phase coil 1354 at a secondary side in which said first to third primary coils 1351, 1352, and 1353 are connected to each phase of said three-phase A.C. power supply via said phase control circuit 1310; and

a supply range setting means 1320 which sets the supply ranges of respective phases by said phase controlling circuit 1310 so as not to overlap one another among the phases.

7. A power supply unit 1400 comprising:

three input terminals 4 connected to a single-phase A.C. power supply;

a phase control circuit 1410 which supplies a single-phase A.C. input in a phase range from 0° to 90°, from 45° to 135°, or from 90° to 180° for the positive and negative half-waves;

a transformer 1450 having a single-phase iron core which is winded by a single-phase primary and secondary coil 1451 and 1452 at a primary side and a secondary side, respectively, and in which said primary coil 1451 is connected to said single-phase A.C. power supply input via said phase control circuit 1410; and

a supply range setting means 1420 which sets the supply ranges of said single-phase A.C. by said phase controlling circuit 1410 to be one of said three ranges.

8. A power supply unit 1500 comprising:

three input terminals 1, 2, and 3 connected to a three-phase A.C. power supply;

a first power converting part 1501 comprising:

a first phase control circuit 1510 controlling the supply of a three-phase A.C. input to be carried out in a phase range approximately from 0° to 60° for the positive and negative half-waves of each phase; and

a first to third transformer 1550a to 1550c having a single-phase iron core which is winded by a single-phase primary and secondary coils at a primary side and a secondary side, respectively, and in which said primary coil is connected to the first, second, and third phases of said three-phase A.C. input via said first phase control circuit 1510; and

outputting the first, second, and third phases to the secondary side of said first, second, and third transformers 1550a, 1550b and 1550c only in a phase range from 0° to 60°;

a second power converting part 1502 comprising:

a second phase control circuit 1520 controlling the supply of a three-phase A.C. input to be carried out in a phase range about from 60° to 120° of the positive and negative half-waves for each phase; and

a fourth to sixth transformers 1560a to 1560c having the same construction as that of said first to third transformers 1550a to 1550c; and

outputting the first, second, and third phases to the secondary side of said fourth, fifth, and sixth transformers 1560a to 1560c only in a range from 60° to 120°; and

a third power converting part 1503 comprising:

a third phase control circuit 1530 controlling the supply of a three-phase A.C. input to be carried out in a phase range about from 120° to 180° for the positive and negative half-waves of each phase; and

a seventh to ninth transformers 1570a to 1570c having the same construction as that of said first to third transformers 1550a to 1550c; and

outputting the first, second, and third phases to the secondary side of said seventh, eighth, and ninth transformers 1570a to 1570c only in a range from 120° to 180°.

9. A power supply unit 1700 comprising:

three input terminals 1, 2, and 3 connected to a three-phase A.C. power supply;

a three phases/six phases conversion circuit 1710 converting three-phase A.C. into six-phase A.C.;

a first power converting part 1701 comprising:

a first phase control circuit 1710 controlling the supply of the first, third, and fifth phase of said six-phase A.C.;

a first transformer 1710a having a single-phase iron core which is winded by a first to third primary coil 1771 to 1773 at the primary side and by a single-phase secondary coil 1774 at a secondary side and in which said three-phase primary coil 1771 to 1773 are connected to said first, third, and fifth phases of said six-phase A.C. via said first phase control circuit 1710; and

outputting the first single-phase A.C. comprising 0° to 50° portion of each positive and negative half-wave of said first, third, and fifth phase to the secondary side of said transformer 1710a;

a second power converting part 1702 comprising:

a second phase control circuit 1720 having the same construction of that of said first phase control circuit 1710;

a second transformer 1720a having the same construction as that of said first transformer 1710a; and

outputting the second single-phase A.C. comprising 60° to 120° portion of each positive and negative half-wave of said first, third, and fifth phase to the secondary side of said second transformer 1720a;

a third power converting part 1703 comprising:

a third phase control circuit 1730 having the same construction of that of said first phase control circuit 1710;

a third transformer 1730a having the same construction as that of said first transformer 1710a; and

outputting the third single-phase A.C. comprising 120° to 180° portion of each positive and negative half-wave of said first, third, and fifth to the secondary side of said third transformer 1730a;

a fourth power converting part 1704 comprising:

a fourth phase control circuit 1740 controlling the supply of the second, fourth, and sixth phase of said six-phase A.C.;

a fourth transformer 1740a having the same construction as that of said first transformer 1710a; and

outputting the fourth single-phase A.C. comprising 0° to 60° portion of each positive and negative half-wave said second, fourth, and sixth phase to the secondary side of said fourth transformer 1740a;

a fifth power converting part 1705 comprising:

a fifth phase control circuit 1750 having the same construction of that of said first phase control circuit 1740;

a fifth transformer 1750a having the same construction as that of said first transformer 1740; and

outputting the fifth single-phase A.C. comprising 60° to 120° portion of each positive and negative half-wave of said second, fourth, and sixth phase to the secondary side of said fifth transformer 1750a;

a sixth power converting part 1706 comprising;

a sixth phase control circuit 1760 having the same construction of that of said first phase control circuit 1740;

a sixth transformer 1760a having the same construction as that of said first transformer 1740a; and

outputting the sixth single-phase A.C. comprising 120° to 180° portion of each positive and negative half-wave of said second, fourth, and sixth phase to the secondary side of said sixth transformer 1760a.

10. A power supply unit 1800 comprising:

three input terminals 1, 2, and 3 connected to a three-phase A.C. power supply;

a three phases/six phases conversion circuit 1810 converting three-phase A.C. into six-phase A.C.;

a phase control circuit 1820 supplying a six-phase A.C. in a phase range from 0° to 60°, from 60° to 120°, or from 120° to 180° for the positive and negative half-waves of each phase;

a transformer 1830 comprising a single-phase iron core 1838 which is winded by a first to sixth primary coil 1831 to 1836 at a primary side and by a single-phase secondary coil 1837 at a secondary side and in which said first to sixth primary coils 1831 to 1836 are connected to respective phases of said three phases/six phases conversion circuit 1810 via said phase control circuit 1820; and

a supply range setting means 1822 setting the supply ranges of respective phases by said phase controlling circuit 1820.

# F I G. 1

(a)

(b)

F I G. 2

F I G. 3

FIG. 4

# F I G. 5

(a)

primary side

secondary side

1 phase +
(120°~180°) -

2 phase
(120°~180°) -
⊖

3' phase ⊕
(120°~180°)

a phase

b phase

c phase

(b)

F I G. 6

(a) 8 11a

(b) 8 11b

(c) 8 11c

(d) 8 11d

(e) 8 11e

# F I G. 7

(a)

primary side

1 phase +
(120°~180°) −

2 phase +
(0°~180°) −

3′ phase ⊖
(60°~180°) ⊕

a phase

b phase

c phase

secondary side

(b)

1    3′    2          1    3′    2

1    3′    2

# F I G. 8

(a)

primary side

1 phase  + o
(120°~180°)  _ o

2 phase
(120°~180°) - o
o

3 phase  o
(open-circuited)

a phase

b phase

c phase

secondary side

(b)

1  2  3

F I G. 9

F I G. 10

F I G. 11

(a)

F I G. 12

(b)

F I G. 13

(a)

(b)

FIG.14

(a)

(b)

(c)

FIG.15 (PRIOR ART)

F I G. 16

F I G. 17

(a)

(b)

# F I G. 18

(a)

(b)

(c)

(d)

FIG. 19

(a)

(b)

F I G. 19

(c)

70    80

C

A+    −    +B

10a  11  10b

300

## F I G. 20

**(a)**

**(b)**

F I G. 20

F I G. 21

(a)

(b)

F I G. 22

(a)

F I G. 22

(b)

(c)

# F I G. 23

(a)

(b)

# FIG. 24

(a)

primary side

output ① (120°~180°)

output ③ (120°~180°)

output ② (120°~180°)

U phase

V phase

W´ phase

secondary side

(b)

U   W´   V

F I G. 25

primary side

(a)

output ① +
(120°~180°) −

output ③ +
(0°~180°) −
⊖

output ② ⊕
(60°~180°)

U phase

V phase

W´phase

secondry side

(b)

U    W´  V         U    W´  V

U   W´   V

F I G. 25

(c)

F I G. 26

(a)

primary side

output ① +
(120°~180°) −

output ③ +
(120°~180°) −

output ⑤
(open-circuited)

U phase

V phase

W phase

secondary side

(b)

U          V          W

FIG. 26

(c)

(d)

# F I G. 27

(a)

primary side

output ① +
(120°~180°) −

output ③
(open-circuited)

output ② 
(120°~180°)

U phase
V phase
W′ phase

secondary side

(b)

U  W′  V  W

(c)

# F I G. 28

(a)

(b)

F I G. 29

# FIG. 30

(a)

1phase (120°~180°)  +  −

2phase (120°~180°)  +  −

3'phase (120°~180°)  ⊖  ⊕

70
75
76
77
101

(b)

1   3'   2

FIG. 31

(a)

1phase
(120°~180°)

2phase
(0°~180°)

3'phase
(60°~180°)

(b)

F I G. 31

(c)

F I G. 32

(a)

1phase
(120°~180°)

2phase
(120°~180°)

3phase
(open-circuited)

70

75

76

101

77

(b)

F I G. 32

(c)

(d)

## F I G. 33

(a)

```
                                              70
                                        ┌─────╱
                                        │      75
1phase          + ○─────┤├─────┐        │    ╱
(120°~180°)     - ○─────┤├─────┘        │
                                   76
                + ○─────┤├─────┐ ╱
2phase                                      101
(open-circuited) ○─────┤├─────┘
                ⊖ ○─────┤├─────┐
3phase                                 ╱
(120°~180°) ⊕ ○─────┤├─────┘      77
```

(b)

(c)

EP 0 460 974 A2

# F I G. 34

F I G. 35

three-phase input

R phase 1

S phase 2

T phase 3

1100

1110 first phase control circuit

1150 1150a 1101 1101a
1151
1152
1153
1154
→ F output

1120 second phase control circuit

1160 1160a 1102 1102a
1161
1162
1163
1164
→ M output

1130 third phase control circuit

1170a 1103 1103a
1171
1172
1173
1174
1170
→ B output

F I G. 36

FIG. 37

# F I G. 38

FIG. 39

EP 0 460 974 A2

F I G. 40

69

F I G. 41

F I G. 42

# F I G. 43

(a) C₁ output

(b) C₂ output

(c) C₃ output

# F I G. 44

three-phase input

1 R phase
2 S phase
3 T phase

1301

1310    1360    1360a

1310a
thyristor    1361    1362

1310b
thyristor    1363    1362
1310c
thyristor    1360b

1311a  1311b  1311c    1362
1361    1363

zero cross point detector    phase adjuster    phase adjuster    phase adjuster    1360c

1312

supply range setting circuit    1320

R-F output    R1    R4

S-F output    S3    S6

T-F output    T2    T5

EP 0 460 974 A2

# FIG. 45

EP 0 460 974 A2

FIG. 46

single-phase input

1400

1410    1450

1453  1400a

single-phase output

f output

m output

b output

thyristor

1411

1412

zero cross point detector

phase adjuster

1413

1451  1452

supply range setting circuit

1420

EP 0 460 974 A2

EP 0 460 974 A2

F I G. 47

F I G. 48

# F I G. 49

(a)

(b)

(c)

R-F output

R-F added output

S-F output

S-F added output

T-F output

T-F added output

R1

R4

S3

S6

T5

T2

EP 0 460 974 A2

# F I G. 50

(a)

(b)

(c)

R-M output

R3

R5

S-M output

S1

S4

T-M output

T3

T6

R-M added output

S-M added output

T-M added output

EP 0 460 974 A2

F I G. 51

1700

R phase S phase T phase
three-phase input

power supply unit

1 R phase

2 S phase

3 T phase

F output

R1 | S3 | T5
T2 | R4 | S6

M output

R2 | S4 | T6
S1 | T3 | R5

B output

T1 | R3 | S5
S2 | T4 | R6

F′ output

R1′ | T2′ | S3′ | R4′ | T5′ | S6′

M′ output

S1′ | T3′ | R5′
R2′ | S4′ | T6′

B′ output

T1′ | S2′ | R3′ | T4′ | S5′ | R6′

EP 0 460 974 A2

# F I G. 52

EP 0 460 974 A2

# F I G. 53

three-phase input current

six-phase converted current

1phase 2phase 3phase

1phase 3phase 5phase

6phase | 2phase | 4phase |

R S T

S' R T' S R' T

$\Rightarrow$

# F I G. 54

FIG. 55

# F I G. 56

(a) C1 output

(b) C2 output

(c) C3 output

(d) C4 output

(e) C5 output

(f) C6 output

F I G. 57

(a)

(b)